(19) Europäisches Patentamt
European Patent Office
Office européen des brevets

(11) **EP 4 776 542 A1**

(12) **EUROPEAN PATENT APPLICATION**
published in accordance with Art. 153(4) EPC

(43) Date of publication:
**15.07.2026 Bulletin 2026/29**

(21) Application number: **24870276.3**

(22) Date of filing: **26.08.2024**

(51) International Patent Classification (IPC):
**H04L 1/00** (2006.01)

(52) Cooperative Patent Classification (CPC):
**H04L 1/00**

(86) International application number:
**PCT/CN2024/114623**

(87) International publication number:
**WO 2025/066730 (03.04.2025 Gazette 2025/14)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **28.09.2023 CN 202311294476**

(71) Applicant: **HUAWEI TECHNOLOGIES CO., LTD.
Shenzhen 518129 (CN)**

(72) Inventors:
• **HUANG, Kechao
Shenzhen, Guangdong 518129 (CN)**
• **WANG, Haoyi
Shenzhen, Guangdong 518129 (CN)**
• **MA, Huixiao
Shenzhen, Guangdong 518129 (CN)**

(74) Representative: **Pfenning, Meinig & Partner mbB
Patent- und Rechtsanwälte
Theresienhöhe 11a
80339 München (DE)**

(54) **DATA PROCESSING METHOD AND APPARATUS**

(57) Embodiments of this application disclose a data processing method, applied to the field of optical communication. The method in embodiments of this application includes: obtaining first data; obtaining a first bit set based on the first data and an added bit; and performing forward error correction FEC encoding and interleaving on the first bit set to obtain a pre-framing bit set, where FEC encoding is performed on every a bits in the first bit set to obtain b encoded bits; both a and b are positive integers; b/a is any one of 96/79, 80/63, and 112/95; and the pre-framing bit set is used for generating a super-frame. The super-frame formed according to this application has a stronger error correction capability, and is applicable to a transmission system of 800 Gbit/s, 1.6 Tbit/s, or even a higher rate.

```
┌──────────────────────────────────────────────┐
│              Obtain first data                 │─── 201
└──────────────────────────────────────────────┘
                        │
┌──────────────────────────────────────────────┐
│ Obtain a first bit set based on the first data │─── 202
│              and an added bit                  │
└──────────────────────────────────────────────┘
                        │
┌──────────────────────────────────────────────┐
│  Perform forward error correction FEC encoding │
│  and interleaving on the first bit set to      │
│  obtain a pre-framing bit set, where FEC       │─── 203
│  encoding is performed on every a bits in the  │
│  first bit set to obtain b encoded bits; both  │
│  a and b are positive integers; b/a is any one │
│  of 96/79, 80/63, and 112/95; and the          │
│  pre-framing bit set is used for generating a  │
│  super-frame                                   │
└──────────────────────────────────────────────┘
```

FIG. 2

## Description

This application claims priority to Chinese Patent Application No. 202311294476.6, filed on September 28, 2023 and entitled "DATA PROCESSING METHOD AND APPARATUS", which is incorporated herein by reference in its entirety.

## TECHNICAL FIELD

Embodiments of this application relate to the field of optical communication, and in particular, to a data processing method and a related apparatus for optical communication.

## BACKGROUND

Driven by continuous advancement of 5G, cloud computing, big data, artificial intelligence, and the like, high-speed optical transport networks are evolving toward high capacity, packetization, and intelligence. Coherent optical communication systems use amplitudes, phases, polarization, and frequencies of optical waves to carry information. To mitigate optical signal distortion caused by dispersion, polarization-dependent impairment, noise, non-linear effect, and other factors during transmission and maintain long-distance transmission, coherent optical communication systems typically need to use an efficient forward error correction (Forward Error Correction, FEC) code to counter optical impairment in an optical transmission process, so as to ensure a low bit error ratio during long-distance transmission.

For future metro telecommunication transmission and metro data center interconnect (Data Center Interconnect, DCI) scenarios, such as a 1.6T-ZR scenario, a baud rate reaches 240 Gbit/s or higher when dual-polarization 16-state quadrature amplitude modulation (Dual-polarization 16-state Quadrature Amplitude Modulation, DP-16QAM) is used. Existing data processing and transmission methods using concatenated forward error correction (Concatenated Forward Error Correction, CFEC) or open forward error correction (Open Forward Error Correction, OFEC) encoding are not suitable for future high-baud-rate scenarios, presenting an urgent challenge that needs to be addressed.

## SUMMARY

Embodiments of this application provide a data processing method and a related apparatus, applied to the field of optical communication, to resolve a problem that a future high baud rate scenario (for example, 800 Gbit/s, 1.6 Tbit/s, or even higher) cannot be used for encoding processing in the conventional technology.

According to a first aspect, an embodiment of this application provides a data processing method, including: obtaining first data; obtaining a first bit set based on the first data and an added bit; and performing forward error correction FEC encoding and interleaving on the first bit set to obtain a pre-framing bit set, where FEC encoding is performed on every $a$ bits in the first bit set to obtain $b$ encoded bits; both $a$ and $b$ are positive integers; $b/a$ is any one of 96/79, 80/63, and 112/95; and the pre-framing bit set is used for generating a super-frame. Data processed by using the data processing method in this application has a stronger error correction capability, and is applicable to a transmission system of 800 Gbit/s, 1.6 Tbit/s, or even a higher rate.

With reference to the first aspect, in a first possible implementation of the first aspect, that FEC encoding is performed on every $a$ bits to obtain the $b$ encoded bits specifically includes: performing FEC encoding on every $k$ bits in the $a$ bits to obtain $n$ FEC bits, where $k$ is a positive integer, $n$ is a positive integer greater than $k$, $a=c\times k$, $b=c\times n$, and $c$ is a positive integer.

With reference to the first possible implementation of the first aspect, in a second possible implementation of the first aspect, $c$ is an integer multiple of 16. The solution is easy to implement by hardware and has low complexity.

With reference to any one of the foregoing possible implementations of the first aspect, in a third possible implementation of the first aspect, the first data includes $r$ rows and $q$ columns of bits, $r$ is a positive integer, and $q$ is an integer multiple of 257. Optionally, $q$ is any one of numerical values: 2056, 4112, 8224, 10280, or the like. Generally, an Ethernet data frame is obtained through encoding at a granularity of 257 bits. The solution in this embodiment of this application can better adapt to the Ethernet data frame.

With reference to any one of the foregoing possible implementations of the first aspect, in a fourth possible implementation of the first aspect, the performing forward error correction FEC encoding and interleaving on the first bit set to obtain the pre-framing bit set specifically includes: performing distribution on the first bit set to obtain 2Q bit subsets, and performing FEC encoding on each of the bit subsets to obtain 2Q encoded bit sets, where Q is a positive integer greater than 0; and performing interleaving on the 2Q encoded bit sets to obtain the pre-framing bit set. In this embodiment of this application, 2Q FEC encodings are used, and then every two FEC encodings may correspond to one interleaving. This is convenient for compatibility with an existing 400 Gbit/s system, and is applicable to a system of 800 Gbit/s, 1.6 Tbit/s, or even a higher transmission rate.

With reference to the fourth possible implementation of the first aspect, in a fifth possible implementation of the first aspect, the encoded bit set is represented as a matrix in which each row includes n/a square blocks, each square block includes a rows $\times$ a columns of bits, a bit sequence in an $i^{th}$ row of a square block in a $W^{th}$ row includes a first parity bit, and W is a positive integer. When W is an even number, the first parity bit is formed by using at least bits in an $i^{th}$ column of a $0^{th}$ square block in a $(W-\Delta-2n/a+1)^{th}$ row; and when W is an odd number, the first parity bit is formed by using at least bits in an $i^{th}$ column of a $0^{th}$ square block in a $(W-\Delta-2n/a-1)^{th}$ row, where a is a positive integer, n is an integer multiple of a, and $\Delta$ is a positive integer.

With reference to the fourth possible implementation of the first aspect, in a sixth possible implementation of the first aspect, the encoded bit set is represented as a matrix in which each row includes six square blocks, each square block includes 16 rows $\times$ 16 columns of bits, a bit sequence in an $i^{th}$ row of a square block in a $W^{th}$ row includes a first parity bit, and W is a positive integer.

When W is an even number, the first parity bit is formed by using at least bits in an $i^{th}$ column of a $0^{th}$ square block in a $(W-\Delta-11)^{th}$ row, bits in an $i^{th}$ column of a $1^{st}$ square block in a $(W-\Delta-9)^{th}$ row, bits in an $i^{th}$ column of a $2^{nd}$ square block in a $(W-A-7)^{th}$ row, bits in an $i^{th}$ column of a $3^{rd}$ square block in a $(W-\Delta-5)^{th}$ row, bits in an $i^{th}$ column of a $4^{th}$ square block in a $(W-\Delta-3)^{th}$ row, and bits in an $i^{th}$ column of a $5^{th}$ square block in a $(W-\Delta-1)^{th}$ row, where i is a positive integer that is not less than 0 and that is less than 16, and $\Delta$ is a positive integer.

When W is an odd number, the first parity bit is formed by using at least bits in an $i^{th}$ column of a $0^{th}$ square block in a $(W-\Delta-13)^{th}$ row, bits in an $i^{th}$ column of a $1^{st}$ square block in a $(W-\Delta-11)^{th}$ row, bits in an $i^{th}$ column of a $2^{nd}$ square block in a $(W-\Delta-9)^{th}$ row, bits in an $i^{th}$ column of a $3^{rd}$ square block in a $(W-\Delta-7)^{th}$ row, bits in an $i^{th}$ column of a $4^{th}$ square block in a $(W-\Delta-5)^{th}$ row, and bits in an $i^{th}$ column of a $5^{th}$ square block in a $(W-\Delta-3)^{th}$ row, where i is a positive integer that is not less than 0 and that is less than 16, and $\Delta$ is a positive integer.

In addition, alternatively, when W is an odd number, the first parity bit is formed by using at least bits in an $i^{th}$ column of a $0^{th}$ square block in a $(W-\Delta-11)^{th}$ row, bits in an $i^{th}$ column of a $1^{st}$ square block in a $(W-\Delta-9)^{th}$ row, bits in an $i^{th}$ column of a $2^{nd}$ square block in a $(W-\Delta-7)^{th}$ row, bits in an $i^{th}$ column of a $3^{rd}$ square block in a $(W-\Delta-5)^{th}$ row, bits in an $i^{th}$ column of a $4^{th}$ square block in a $(W-\Delta-3)^{th}$ row, and bits in an $i^{th}$ column of a $5^{th}$ square block in a $(W-\Delta-1)^{th}$ row, where i is a positive integer that is not less than 0 and that is less than 16, and $\Delta$ is a positive integer.

When W is an even number, the first parity bit is formed by using at least bits in an $i^{th}$ column of a $0^{th}$ square block in a $(W-\Delta-13)^{th}$ row, bits in an $i^{th}$ column of a $1^{st}$ square block in a $(W-\Delta-11)^{th}$ row, bits in an $i^{th}$ column of a $2^{nd}$ square block in a $(W-\Delta-9)^{th}$ row, bits in an $i^{th}$ column of a $3^{rd}$ square block in a $(W-A-7)^{th}$ row, bits in an $i^{th}$ column of a $4^{th}$ square block in a $(W-\Delta-5)^{th}$ row, and bits in an $i^{th}$ column of a $5^{th}$ square block in a $(W-\Delta-3)^{th}$ row, where i is a positive integer that is not less than 0 and that is less than 16, and $\Delta$ is a positive integer.

With reference to the fourth possible implementation of the first aspect, in a seventh possible implementation of the first aspect, the encoded bit set is represented as a matrix in which each row includes six square blocks, each square block includes 16 rows $\times$ 16 columns of bits, a bit sequence in an $i^{th}$ row of a square block in a $W^{th}$ row includes a first parity bit, and W is a positive integer.

When W%3 is 0 or 1, the first parity bit is formed by using at least bits in an $i^{th}$ column of a $0^{th}$ square block in a $(W-\Delta-17)^{th}$ row, bits in an $i^{th}$ column of a $1^{st}$ square block in a $(W-\Delta-14)^{th}$ row, bits in an $i^{th}$ column of a $2^{nd}$ square block in a $(W-\Delta-11)^{th}$ row, bits in an $i^{th}$ column of a $3^{rd}$ square block in a $(W-\Delta-8)^{th}$ row, bits in an $i^{th}$ column of a $4^{th}$ square block in a $(W-\Delta-5)^{th}$ row, and bits in an $i^{th}$ column of a $5^{th}$ square block in a $(W-\Delta-2)^{th}$ row, where i is a positive integer that is not less than 0 and that is less than 16, and $\Delta$ is a positive integer.

When W%3 is 2, the first parity bit is formed by using at least bits in an $i^{th}$ column of a $0^{th}$ square block in a $(W-\Delta-20)^{th}$ row, bits in an $i^{th}$ column of a $1^{st}$ square block in a $(W-\Delta-17)^{th}$ row, bits in an $i^{th}$ column of a $2^{nd}$ square block in a $(W-\Delta-14)^{th}$ row, bits in an $i^{th}$ column of a $3^{rd}$ square block in a $(W-\Delta-11)^{th}$ row, bits in an $i^{th}$ column of a $4^{th}$ square block in a $(W-\Delta-8)^{th}$ row, and bits in an $i^{th}$ column of a $5^{th}$ square block in a $(W-\Delta-5)^{th}$ row, where i is a positive integer that is not less than 0 and that is less than 16, and $\Delta$ is a positive integer.

With reference to the fourth possible implementation of the first aspect, in an eighth possible implementation of the first aspect, the encoded bit set is represented as a matrix in which each row includes six square blocks, each square block includes 16 rows $\times$ 16 columns of bits, a bit sequence in an $i^{th}$ row of a square block in a $W^{th}$ row includes a first parity bit, and W is a positive integer.

When W%3 is 0, the first parity bit is formed by using at least bits in an $i^{th}$ column of a $0^{th}$ square block in a $(W-\Delta-16)^{th}$ row, bits in an $i^{th}$ column of a $1^{st}$ square block in a $(W-\Delta-13)^{th}$ row, bits in an $i^{th}$ column of a $2^{nd}$ square block in a $(W-\Delta-10)^{th}$ row, bits in an $i^{th}$ column of a $3^{rd}$ square block in a $(W-\Delta-7)^{th}$ row, bits in an $i^{th}$ column of a $4^{th}$ square block in a $(W-\Delta-4)^{th}$ row, and bits in an $i^{th}$ column of a $5^{th}$ square block in a $(W-\Delta-1)^{th}$ row, where i is a positive integer that is not less than 0 and that is less than 16, and $\Delta$ is a positive integer.

When W%3 is 1 or 2, the first parity bit is formed by using at least bits in an $i^{th}$ column of a $0^{th}$ square block in a $(W-\Delta-19)^{th}$ row, bits in an $i^{th}$ column of a $1^{st}$ square block in a $(W-\Delta-16)^{th}$ row, bits in an $i^{th}$ column of a $2^{nd}$ square block in a $(W-\Delta-13)^{th}$ row, bits in an $i^{th}$ column of a $3^{rd}$ square block in a $(W-\Delta-10)^{th}$ row, bits in an $i^{th}$ column of a $4^{th}$ square block in a $(W-\Delta-7)^{th}$ row, and bits in an $i^{th}$ column of a $5^{th}$ square block in a $(W-\Delta-4)^{th}$ row, where i is a positive integer that is not less than 0 and that is less than 16, and $\Delta$ is a positive integer.

The encoding scheme in the foregoing embodiment is used, so that coded data can have stronger error correction performance and a better error floor (error floor), and is applicable to a transmission system of 800 Gbit/s, 1.6 Tbit/s, or even a higher rate.

With reference to any one of the foregoing possible implementations of the first aspect, in a ninth possible implementation of the first aspect, the added bit includes a pad bit. Optionally, the added bit further includes a cyclic redundancy check CRC bit, and CRC is any one of CRC-16, CRC-24, CRC-32, and CRC-48. By using the foregoing CRC check, a sufficient error detection capability is ensured, facilitating accurate receiving.

With reference to any one of the foregoing possible implementations of the first aspect, in a tenth possible implementation of the first aspect, $q=10280$, $n=96$, and $k=79$. When the pre-framing bit set is used for generating the superframe through dual-polarization quadrature phase shift keying DP-QPSK modulation, a relationship between L in an interleaving granularity $L \times n$, a quantity M of pre-framing symbols, r, a quantity $d_{in}$ of bits included in the first data, a quantity $d_{scr}$ of bits included in the first bit set, and a quantity $d_{CP}$ of added bits is shown in any entry of the following table.

| Sequence number | L | M | r | $d_{in}$ | $d_{scr}$ | $d_{CP}$ |
|---|---|---|---|---|---|---|
| 1 | 1536 | 147456 | 47 | 483160 | 485376 | 2216 |
| 2 | 1728 | 165888 | 53 | 544840 | 546048 | 1208 |
| 3 | 1920 | 184320 | 59 | 606520 | 606720 | 200 |
| 4 | 3072 | 294912 | 94 | 966320 | 970752 | 4432 |
| 5 | 3264 | 313344 | 100 | 1028000 | 1031424 | 3424 |
| 6 | 3456 | 331776 | 106 | 1089680 | 1092096 | 2416 |
| 7 | 3648 | 350208 | 112 | 1151360 | 1152768 | 1408 |
| 8 | 3840 | 368640 | 118 | 1213040 | 1213440 | 400 |
| 9 | 4992 | 479232 | 153 | 1572840 | 1577472 | 4632 |
| 10 | 5184 | 497664 | 159 | 1634520 | 1638144 | 3624 |
| 11 | 5376 | 516096 | 165 | 1696200 | 1698816 | 2616 |
| 12 | 5568 | 534528 | 171 | 1757880 | 1759488 | 1608 |
| 13 | 5760 | 552960 | 177 | 1819560 | 1820160 | 600 |
| 14 | 6912 | 663552 | 212 | 2179360 | 2184192 | 4832 |
| 15 | 7104 | 681984 | 218 | 2241040 | 2244864 | 3824 |
| 16 | 7296 | 700416 | 224 | 2302720 | 2305536 | 2816 |
| 17 | 7488 | 718848 | 230 | 2364400 | 2366208 | 1808 |
| 18 | 7680 | 737280 | 236 | 2426080 | 2426880 | 800 |
| 19 | 8832 | 847872 | 271 | 2785880 | 2790912 | 5032 |
| 20 | 9024 | 866304 | 277 | 2847560 | 2851584 | 4024 |
| 21 | 9216 | 884736 | 283 | 2909240 | 2912256 | 3016 |
| 22 | 9408 | 903168 | 289 | 2970920 | 2972928 | 2008 |
| 23 | 9600 | 921600 | 295 | 3032600 | 3033600 | 1000 |
| 24 | 10944 | 1050624 | 336 | 3454080 | 3458304 | 4224 |
| 25 | 11136 | 1069056 | 342 | 3515760 | 3518976 | 3216 |
| 26 | 11328 | 1087488 | 348 | 3577440 | 3579648 | 2208 |
| 27 | 11520 | 1105920 | 354 | 3639120 | 3640320 | 1200 |
| 28 | 11712 | 1124352 | 360 | 3700800 | 3700992 | 192 |
| 29 | 12864 | 1234944 | 395 | 4060600 | 4065024 | 4424 |
| 30 | 13056 | 1253376 | 401 | 4122280 | 4125696 | 3416 |
| 31 | 13248 | 1271808 | 407 | 4183960 | 4186368 | 2408 |

(continued)

| Sequence number | L | M | r | $d_{in}$ | $d_{scr}$ | $d_{CP}$ |
|---|---|---|---|---|---|---|
| 32 | 13440 | 1290240 | 413 | 4245640 | 4247040 | 1400 |
| 33 | 13632 | 1308672 | 419 | 4307320 | 4307712 | 392 |
| 34 | 14784 | 1419264 | 454 | 4667120 | 4671744 | 4624 |
| 35 | 14976 | 1437696 | 460 | 4728800 | 4732416 | 3616 |
| 36 | 15168 | 1456128 | 466 | 4790480 | 4793088 | 2608 |
| 37 | 15360 | 1474560 | 472 | 4852160 | 4853760 | 1600 |
| 38 | 15552 | 1492992 | 478 | 4913840 | 4914432 | 592 |
| 39 | 16704 | 1603584 | 513 | 5273640 | 5278464 | 4824 |
| 40 | 16896 | 1622016 | 519 | 5335320 | 5339136 | 3816 |
| 41 | 17088 | 1640448 | 525 | 5397000 | 5399808 | 2808 |
| 42 | 17280 | 1658880 | 531 | 5458680 | 5460480 | 1800 |
| 43 | 17472 | 1677312 | 537 | 5520360 | 5521152 | 792 |
| 44 | 18624 | 1787904 | 572 | 5880160 | 5885184 | 5024 |

In the solution in this embodiment of this application, an encoding scheme with k=79 and n=96 has a sufficiently high error correction capability, and is applicable to a transmission system of 800 Gbit/s, 1.6 Tbit/s, or even a higher rate. In addition, the quantity ($d_{CP}$) of added bits is small, so that an overhead introduced by CRC parity bit insertion and/or pad insertion can be low.

With reference to any one of the foregoing possible implementations of the first aspect, in an eleventh possible implementation of the first aspect, before performing forward error correction FEC encoding and interleaving on the first bit set, the method further includes: scrambling the first bit set, so that 0s and 1s in scrambled bit data tend to have a more equal probability, thereby achieving direct current balance, which facilitates receiving at a receiver.

According to a second aspect, this application provides a chip, including a processor and a communication interface. The processor is connected to the communication interface through a line, and is configured to perform any possible implementation of the first aspect.

According to a third aspect, this application provides a data processing apparatus. The data processing apparatus includes a processor and a memory. The memory is configured to store instructions, and the processor is configured to execute the instructions, to cause the data processing apparatus to perform any possible implementation of the first aspect.

According to a fourth aspect, this application provides a computer storage medium. The storage medium stores a software program. When the software program is read and executed by one or more processors, any one of the possible implementations of the first aspect is implemented.

According to a fifth aspect, this application provides a communication system, including the foregoing data processing apparatus shown in the third aspect and a receiving apparatus. The receiving apparatus is configured to receive a super-frame, and decode the super-frame to recover original data.

The foregoing beneficial effects have been described in the first aspect. Details are not described herein again.

**BRIEF DESCRIPTION OF DRAWINGS**

FIG. 1 is a block diagram of a structure of a communication system;
FIG. 2 is a flowchart of a data processing method according to this application;
FIG. 3 shows a received data sequence represented in a form of a matrix;
FIG. 4 is a functional diagram of a transmitter signal processor according to an embodiment of this application;
FIG. 5 is a flowchart of FEC encoding and interleaving according to an embodiment of this application;
FIG. 6 is a diagram of an FEC encoding scheme according to this application;
FIG. 7 is a diagram of another FEC encoding scheme according to this application;
FIG. 8 is a diagram of another FEC encoding scheme according to this application;
FIG. 9 is a diagram of another FEC encoding scheme according to this application;

FIG. 10 is a diagram of another FEC encoding scheme according to this application;

FIG. 11 is a diagram of another FEC encoding scheme according to this application;

FIG. 12 is a flowchart of interleaving according to an embodiment of this application;

FIG. 13 is an example diagram of intra-square block interleaving according to an embodiment of this application;

FIG. 14 is a diagram of inter-square block interleaving according to an embodiment of this application;

FIG. 15 is a processing flowchart of generating a super-frame according to an embodiment of this application;

FIG. 16 is another processing flowchart of generating a super-frame according to an embodiment of this application;

FIG. 17 is a flowchart of data processing in a specific condition according to an embodiment of this application;

FIG. 18 is a flowchart of data processing in another specific condition according to an embodiment of this application;

FIG. 19 is a diagram of a structure of a data processing apparatus according to an embodiment of this application;

FIG. 20 is a diagram of a structure of a decoding apparatus according to an embodiment of this application; and

FIG. 21 is a diagram of another structure of a data processing apparatus according to an embodiment of this application.

## DESCRIPTION OF EMBODIMENTS

Before embodiments of this application are described in detail, application scenarios of embodiments of this application are first described.

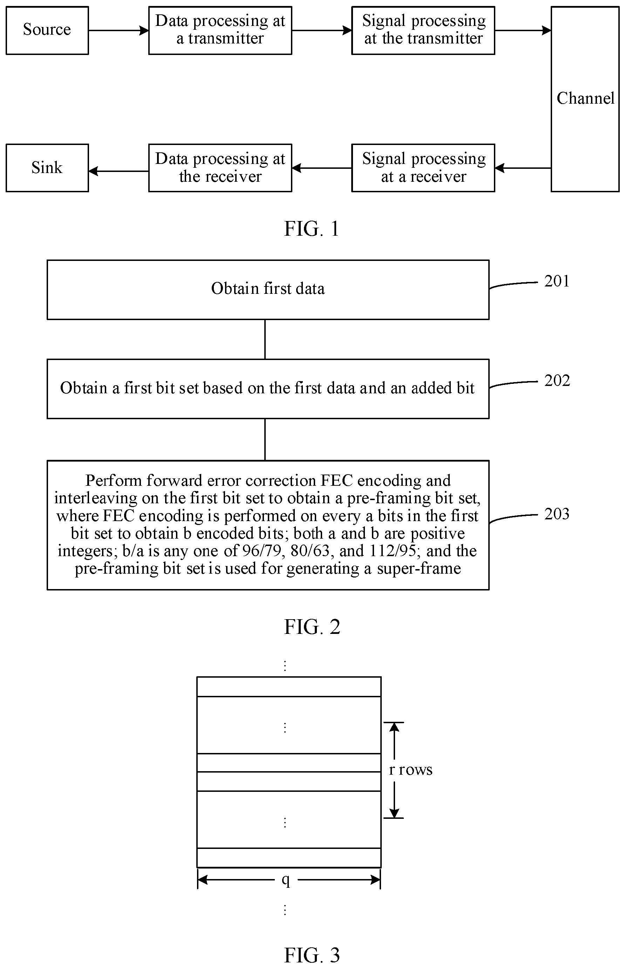

FIG. 1 is a block diagram of a structure of a communication system. At a transmitter, a source provides a to-be-sent data stream. A transmitter data processor receives the data stream, performs data processing including encoding, interleaving, and modulation on the data stream to obtain a symbol data stream, and sends the symbol data stream to a transmitter signal processor for transmitter signal preprocessing. The symbol data stream is transmitted to a receiving device through a channel. After receiving a distorted signal caused by noise or other impairments in a channel, the receiving device sends the signal to a receiver signal processor for dispersion compensation, synchronization, phase recovery, and another operation. Then, the signal is sent to receiver data processor for performing processing including demodulation, de-interleaving, and decoding to recover original data, and the data is sent to a sink. A method provided in this application is applied to the transmitter data processor shown in FIG. 1, and is a very important part in the communication system.

It should be noted that the bit set and the bit subset in the specification and the claims of this application are merely concepts introduced for ease of description. In actual application, the data stream is a whole and is not divided, and each bit set and each bit subset may be considered as one or more bits in a data stream. It should be understood that the bit set and the bit subset may alternatively be presented in a form of a matrix, an array, or the like. This is not specifically limited herein.

This application provides a data processing method. As shown in FIG. 2, the method includes the following steps.

201: Obtain first data.

The first data may be obtained from a received data sequence. The received data sequence may be represented as one lane of data streams, or may be represented in a form of a matrix. For example, in FIG. 3, the received data sequence is represented in the form of a matrix. The data sequence includes a plurality of rows of bits, and each row includes q bits, where q is a positive integer. Optionally, q is an integer multiple of 257. Generally, an Ethernet data frame is obtained through encoding at a granularity of 257 bits, and q is an integer multiple of 257, which may better adapt to the Ethernet data frame. For example, q may be 2056, 4112, 8224, 10280, or the like. r rows are obtained from the received data sequence each time, and the r rows have a total of q X r bits. In other words, the first data includes r rows and q columns of bits, that is, r X q bits, where r is a positive integer.

202: Obtain a first bit set based on the first data and an added bit.

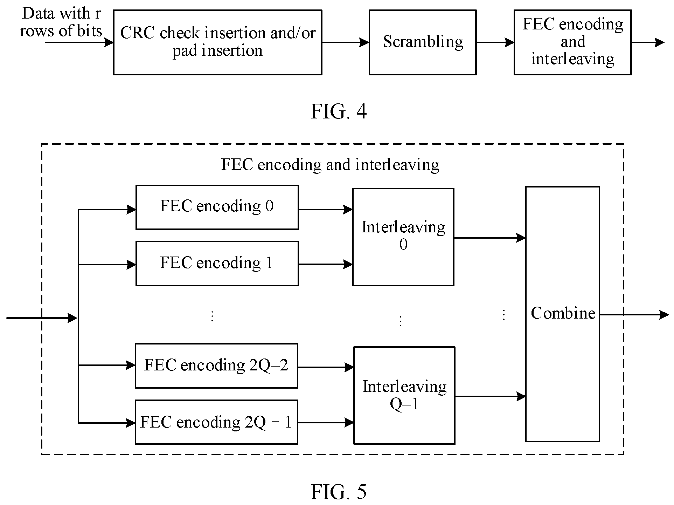

FIG. 4 is a functional diagram of a transmitter signal processor according to an embodiment of this application. As shown in FIG. 4, functions of the transmitter signal processor include cyclic redundancy check (Cyclic Redundancy Check, CRC) insertion and/or pad insertion (Pad Insertion), scrambling (scrambling), and FEC encoding and interleaving. In actual application, at least one operation of CRC and pad insertion may be performed. Specifically, the first data is obtained from the received data sequence, the first data includes the r rows and q columns of bits, and a total of $d_{in} = q \times r$ bits are obtained, where r is an integer greater than 0, and a value of q is as described in the foregoing embodiment. Then, the first bit set is obtained by performing CRC and/or pad bit insertion on the first data, to obtain. $d_{CRC}$ CRC parity bits are added when a CRC operation is performed, and $d_{PAD}$ pad bits are inserted when a pad insertion operation is performed. In other words, a quantity $d_{scr}$ of bits in the first bit set is equal to $q \times r + d_{CRC} + d_{PAD}$. $d_{CRC}$ is an integer greater than or equal to 0, $d_{PAD}$ is an integer greater than or equal to 0, and a quantity of added bits may be denoted as $d_{CP} = d_{CRC} + d_{PAD}$. In this case, an overhead corresponding to CRC check and pad bit insertion is $OH_{CP} = d_{scr}/d_{in} - 1 = (d_{CRC} + d_{PAD})/(q \times r)$. Generally, a smaller value of $OH_{CP}$ indicates that an overhead of CRC insertion or pad insertion is smaller and more effective. Optionally, $OH_{CP} \leq 0.5\%$ is selected.

In an example, when $d_{PAD} = 0$, no pad bit insertion is performed on $q \times r + d_{CRC}$ bits that undergo CRC check insertion. In this case, only the CRC parity bits are added. In another example, to enable implementation with a lower delay and lower complexity, CRC check may be omitted and replaced directly with a pad bit. To be specific, in this case, $d_{CRC} = 0$, and only the pad bits are added. In other words, after pad bit insertion is directly performed on the first data including the r rows and q columns of bits, encoding and interleaving are performed to obtain a pre-framing bit set.

It should be noted that, in some specific application scenarios, CRC check may be CRC-32. In this case, $d_{CRC} = 32 \times p$, where p represents a quantity of times of CRC check performed on the first data, and p is an integer greater than 1. When r is divisible by p, for r rows of data obtained from the received data sequence, CRC-32 check is performed on bits in every r/p rows ($q \times r/p$ bits in total), a parity bit whose length is 32 bits is added, CRC-32 check is repeatedly performed for p times, and $d_{CRC} = 32 \times p$ CRC-32 parity bits are added in total.

When r is indivisible by p, it is considered that $r_{F0} \times (p-1) + r_{F1} = r$, where the integer $r_{F0}$ is greater than the integer $r_{F1}$. In some specific implementations, the integer $r_{F0} = \lfloor r/p \rfloor + 1$, the integer $r_{F1} = r - r_{F0} \times (p-1)$, $r_{F0} > r_{F1}$, and $\lfloor \rfloor$ represents rounding down. More specifically, for the r rows of data obtained from the received data sequence, CRC-32 check is performed on every $r_{F0}$ row of bits ($q \times r_{F0}$ bits in total) in the first $r_{F0} \times (p-1)$ rows of the rows of data, a parity bit whose length is 32 bits is added, and CRC-32 check is repeatedly performed for p-1 times, to obtain $32 \times (p-1)$ CRC parity bits in total. CRC-32 check is performed on the last $r_{F1}$ rows of bits ($q \times r_{F1}$ bits in total), and a parity bit whose length is 32 bits is added, to obtain $d_{CRC} = 32 \times p$ CRC parity bits in total. For example, when r=20, p=4, and CRC-32 is used, CRC-32 check is performed once on every five rows of data, and CRC-32 check is repeatedly performed for four times, to obtain $4 \times 32 = 128$ parity bits. When r=20, p=7, and CRC-32 is used, CRC-32 check is performed once on every three rows of data in the first 18 rows, and CRC-32 check is repeatedly performed for six times, to obtain $6 \times 32 = 192$ parity bits; and CRC-32 check is performed once on the last two rows, to obtain 32 parity bits. A total of 224 parity bits are obtained. In this case, $r_{F0} = 3$, and $r_{F1} = 2$.

It should be noted that, in some specific implementations, $q \times r_{F0} = 41120$, and CRC-32 is performed on every $r_{F0}$ rows in the first $r_{F0} \times (p-1)$ rows of the r rows of data, that is, $q \times r_{F0}$ bits in total. CRC-32 encoding and detection operations may directly be a CRC-32 operation in the existing 800GZR, so that compatibility is better and adaptability is stronger.

The foregoing embodiment is described by using CRC-32. Certainly, any one of CRC-16, CRC-24, or CRC-48 may alternatively be used. This is not limited in this application.

Optionally, before forward error correction FEC encoding and interleaving are performed on the first bit set, scrambling further needs to be performed on the first bit set, so that 0s and 1s in scrambled bit data tend to have a more equal probability, thereby achieving direct current balance, which facilitates receiving at a receiver.

203: Perform forward error correction FEC encoding and interleaving on the first bit set to obtain the pre-framing bit set. Specifically, FEC encoding is performed on every a bits in the first bit set to obtain b encoded bits. Both a and b are positive integers. b/a is any one of 96/79, 80/63, and 112/95. The pre-framing bit set is used for generating a super-frame.

Further, FEC encoding is performed on every k bits in the a bits to obtain n FEC bits, where k is a positive integer, n is a positive integer greater than k, $a = c \times k$, $b = c \times n$, and c is a positive integer. In other words, generally, encoding is performed by using k information bits as a granularity, to obtain n FEC encoded bits, which are denoted as an encoded bit sequence, and then a plurality of encoded bit sequences are combined and output. For example, c encoded bit sequences are combined and output. As a whole, encoding is performed on $c \times k$ bits to obtain $c \times n$ encoded bits, where c is a positive integer greater than 0. Specifically, c may be an integer multiple of 16. For example, c=16, 32, 48, 64, or the like. This is easy to implement by hardware and has low complexity. Optionally, when FEC encoding is performed, a Hamming code (Hamming code), a BCH code (Bose-Chaudhuri-Hocquenghem code), or the like is used.

The following describes a specific manner of FEC encoding and interleaving. First, FEC encoding is performed on every k bits in the first bit set to obtain an FEC bit whose length is n bits, and interleaving is performed on L groups of FEC bits, that is, $L \times n$ bits in total. In other words, an interleaving granularity is $L \times n$ bits, and L is a positive integer (an interleaving granularity may be understood as a total quantity of bits in interleaved rows and columns, L is a quantity of rows, and n is a quantity of columns). In some specific applications, n = 96, k = 79, and an FEC encoding overhead is about 21.5%. In some other specific applications, n = 80, k = 63, and an FEC encoding overhead is 27%. In still some other specific applications, n = 112, k = 95, and an FEC encoding overhead is 17.9%. It should be understood that numerical value units of n and k are both bits (bits). In the three cases, n is 96 bits, and k is 79 bits; n is 80 bits, and k is 63 bits; and n is 112 bits, and k is 95 bits.

For the foregoing three cases, an example in which c=32 is used. That encoding is performed on the $c \times k$ bits to obtain the $c \times n$ encoded bits may be understood as that encoding is performed on $32 \times 79 = 2528$ bits to obtain $32 \times 96 = 3072$ encoded bits, encoding is performed on $32 \times 63 = 2016$ bits to obtain $32 \times 80 = 2560$ encoded bits, or encoding is performed on $32 \times 95 = 3040$ bits to obtain $32 \times 112 = 3584$ encoded bits. An example in which c=48 is used. Encoding is performed on $48 \times 79 = 3792$ bits to obtain $48 \times 96 = 4608$ encoded bits, encoding is performed on $48 \times 63 = 3024$ bits to obtain $48 \times 80 = 3840$ encoded bits, or encoding is performed on $48 \times 95 = 4560$ bits to obtain $48 \times 112 = 5376$ encoded bits. An example in which c=64 is used. Encoding is performed on $64 \times 79 = 5056$ bits to obtain $64 \times 96 = 6144$ encoded bits, encoding is performed on $64 \times 63 = 4032$ bits to obtain $64 \times 80 = 5120$ encoded bits, or encoding is performed on $64 \times 95 = 6080$ bits to obtain $64 \times 112 = 7168$ encoded bits. The foregoing numerical values are selected for better compatibility with an existing encoding scheme, for example, an encoding scheme used in an existing system of 400 Gbit/s.

The following describes processing of FEC encoding and interleaving.

An FEC encoding and interleaving process is shown in FIG. 5, and may be understood as the following two steps: (1) Distribution is first performed on the first bit set to obtain 2Q bit subsets, and FEC encoding is performed on each of the bit subsets to obtain 2Q encoded bit sets, where Q is a positive integer greater than 1. Typically, a value of Q is 1, 2, or 4. (2) Interleaving and combining are performed on the 2Q encoded bit sets, to obtain the pre-framing bit set. Specifically, interleaving is performed on every two encoded bit sets in the 2Q encoded bit sets, where an interleaving granularity of each of Q interleavings is $L \times n$ bits, and Q lanes of interleaved data output through the Q interleavings are combined to obtain one lane of combined data, that is, the pre-framing bit set. Operations such as symbol mapping, polarization distribution, and DSP framing are subsequently performed on the pre-framing bit set to generate the super-frame, which may be applied to a future high-speed transmission system of, for example, 800 Gbit/s, 1.6 Tbit/s, or even a higher rate. It should be noted that, when Q is 1, distribution is first performed on the first bit set to obtain only two bit subsets, interleaving is performed after encoding, and obtained data is directly used as a pre-framing bit set. In other words, in this case, a combination operation does not need to be performed during FEC encoding and interleaving.

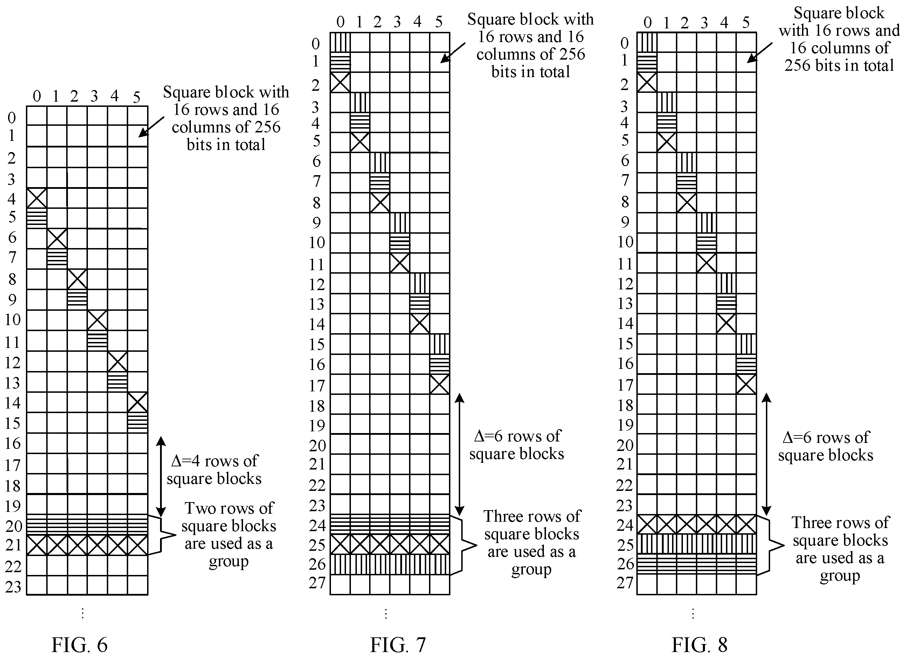

The following describes a specific operation of performing FEC encoding on each bit subset. An example in which n=96, and k=79 is used. An FEC encoding overhead is about 21.5%. As shown in FIG. 6, FIG. 7, and FIG. 8, bits in the encoded bit set are represented by a matrix including a plurality of square blocks. In this application, an example in which each square block includes 16 rows and 16 columns of bits, that is, 256 bits in total, is used. In other specific applications, each square block may alternatively include 32 rows and 32 columns of bits, that is, 1024 bits in total. Further, a quantity of rows and a quantity of columns in each square block may be an integer multiple of 16. This is not strictly limited in this application, and the same applies to a square block in the following embodiments. Details are not described in this application. As shown in FIG. 6, FIG. 7, and FIG. 8, the matrix includes six columns of square blocks, that is, 96 columns of bits in total. The matrix includes a plurality of rows of square blocks, where each row of square blocks includes 16 rows of bits, that is, each row of square blocks includes $16 \times 96 = 1536$ bits. In the matrix, a square block in a $W^{th}$ row and a $j^{th}$ ($0 \leq j \leq 5$) column may be denoted as a square block (W, j), where W is an integer.

As shown in FIG. 6, in the matrix, every two rows of square blocks are uses as a group. When W is an even number, 16 component code (component code) codewords are formed by a total of 12 square blocks: six square blocks in square blocks in the $W^{th}$ row, namely, a square block (W, 0), a square block (W, 1), a square block (W, 2), a square block (W, 3), a square block (W, 4), and a square block (W, 5), a square block (W- $\Delta$- 11, 0) in a $0^{th}$ column and a (W- $\Delta$- 11)$^{th}$ row, a square block (W- $\Delta$- 9, 1) in a $1^{st}$ column and a (W- $\Delta$- 9)$^{th}$ row, a square block (W- $\Delta$- 7, 2) in a $2^{nd}$ column and a (W- $\Delta$- 7)$^{th}$ row, a square block (W- $\Delta$- 5, 3) in a $3^{rd}$ column and a (W- $\Delta$- 5)$^{th}$ row, a square block (W- $\Delta$- 3, 4) in a $4^{th}$ column and a (W- $\Delta$- 3)$^{th}$ row, and a square block (W- $\Delta$- 1, 5) in a $5^{th}$ column and a (W- $\Delta$- 1)$^{th}$ row. A codeword length of each component code is $2n = 2 \times 96 = 192$ bits, and an information length of each component code is $n + k = 175$ bits. The component code may be BCH (192, 175), which is obtained by shortening 64 bits based on an extended BCH (256, 239) code, and is also referred to as eBCH (192, 175). In FIG. 6, a plurality of square blocks with a same stripe are the 12 square blocks used to form the 16 component code codewords, and the same applies to the following embodiments. It should be noted that, one component code codeword is formed by a total of 192 bits: 96 bits in total in $i^{th}$ ($0 \leq i < 16$) rows in the square block (W, 0), the square block (W, 1), the square block (W, 2), the square block (W, 3), the square block (W, 4), and the square block (W, 5), and 96 bits in total in $i^{th}$ ($0 \leq i < 16$) columns in the square block (W- $\Delta$- 11, 0), the square block (W- $\Delta$- 9, 1), the square block (W- $\Delta$- 7, 2), the square block (W- $\Delta$- 5, 3), the square block (W- $\Delta$- 3, 4), and the square block (W- $\Delta$- 1, 5).

When W is an odd number, 16 component code codewords are formed by a total of 12 square blocks: six square blocks in square blocks in the $W^{th}$ row, namely, a square block (W, 0), a square block (W, 1), a square block (W, 2), a square block (W, 3), a square block (W, 4), and a square block (W, 5), a square block (W- $\Delta$- 13, 0) in a $0^{th}$ column and a (W- $\Delta$- 13)$^{th}$ row, a square block (W- $\Delta$- 11, 1) in a $1^{st}$ column and a (W- $\Delta$- 11)$^{th}$ row, a square block (W- $\Delta$- 9, 2) in a $2^{nd}$ column and a (W- $\Delta$- 9)$^{th}$ row, a square block (W- $\Delta$- 7, 3) in a $3^{rd}$ column and a (W- $\Delta$- 7)$^{th}$ row, a square block (W- $\Delta$- 5, 4) in a $4^{th}$ column and a (W- $\Delta$- 5)$^{th}$ row, and a square block (W- $\Delta$- 3, 5) in a $5^{th}$ column and a (W- $\Delta$- 3)$^{th}$ row. A codeword length of each component code is $2n = 2 \times 96 = 192$ bits, and an information length is $n + k = 175$ bits. It should be noted that, one component code codeword is formed by a total of 192 bits: 96 bits in total in $i^{th}$ ($0 \leq i < 16$) rows in the square block (W, 0), the square block (W, 1), the square block (W, 2), the square block (W, 3), the square block (W, 4), and the square block (W, 5), and 96 bits in total in $i^{th}$ ($0 \leq i < 16$) columns in the square block (W- $\Delta$- 13, 0), the square block (W- $\Delta$- 11, 1), the square block (W- $\Delta$- 9, 2), the square block (W- $\Delta$- 7, 3), the square block (W- $\Delta$- 5, 4), and the square block (W- $\Delta$- 3, 5).

As shown in FIG. 6, every two rows of square blocks are used as a group, which may be understood as that encoding is performed on every $32 \times 79 = 2528$ bits to obtain $32 \times 96 = 3072$ encoded bits. It should be noted that the 2528 bits may be referred to as information bits, or may be referred to as to-be-encoded bits. In addition, encoding is performed on every k information bits to obtain an FEC bit whose length is n bits, and a codeword length of a component code in an encoding process is 2n. FEC encoding herein mainly be convolutional algebraic code encoding, which is also referred to as spatially-coupled (spatially-coupled) encoding.

Specifically, it may be understood as that a bit sequence in an $i^{th}$ row of a square block in the $W^{th}$ row includes a first parity bit. When W is an even number, the first parity bit is formed by using at least bits in an $i^{th}$ column of a $0^{th}$ square block in a $(W-\Delta-11)^{th}$ row, bits in an $i^{th}$ column of a $1^{st}$ square block in a $(W-\Delta-9)^{th}$ row, bits in an $i^{th}$ column of a $2^{nd}$ square block in a $(W-\Delta-7)^{th}$ row, bits in an $i^{th}$ column of a $3^{rd}$ square block in a $(W-\Delta-5)^{th}$ row, bits in an $i^{th}$ column of a $4^{th}$ square block in a $(W-\Delta-3)^{th}$ row, and bits in an $i^{th}$ column of a $5^{th}$ square block in a $(W-\Delta-1)^{th}$ row, where i is a positive integer that is not less than 0 and that is less than 16, and $\Delta$ is a positive integer.

When W is an odd number, the first parity bit is formed by using at least bits in an $i^{th}$ column of a $0^{th}$ square block in a $(W-\Delta-13)^{th}$ row, bits in an $i^{th}$ column of a $1^{st}$ square block in a $(W-\Delta-11)^{th}$ row, bits in an $i^{th}$ column of a $2^{nd}$ square block in a $(W-\Delta-9)^{th}$ row, bits in an $i^{th}$ column of a $3^{rd}$ square block in a $(W-\Delta-7)^{th}$ row, bits in an $i^{th}$ column of a $4^{th}$ square block in a $(W-\Delta-5)^{th}$ row, and bits in an $i^{th}$ column of a $5^{th}$ square block in a $(W-\Delta-3)^{th}$ row, where i is a positive integer that is not less than 0 and that is less than 16, and $\Delta$ is a positive integer.

Further, the following manner may alternatively be used. A bit sequence in an $i^{th}$ row of a square block in the $W^{th}$ row includes a first parity bit. When W is an odd number, the first parity bit is formed by using at least bits in an $i^{th}$ column of a $0^{th}$ square block in a $(W-\Delta-11)^{th}$ row, bits in an $i^{th}$ column of a $1^{st}$ square block in a $(W-\Delta-9)^{th}$ row, bits in an $i^{th}$ column of a $2^{nd}$ square block in a $(W-\Delta-7)^{th}$ row, bits in an $i^{th}$ column of a $3^{rd}$ square block in a $(W-\Delta-5)^{th}$ row, bits in an $i^{th}$ column of a $4^{th}$ square block in a $(W-\Delta-3)^{th}$ row, and bits in an $i^{th}$ column of a $5^{th}$ square block in a $(W-\Delta-1)^{th}$ row, where i is a positive integer that is not less than 0 and that is less than 16, and $\Delta$ is a positive integer. When W is an even number, the first parity bit is formed by using at least bits in an $i^{th}$ column of a $0^{th}$ square block in a $(W-\Delta-13)^{th}$ row, bits in an $i^{th}$ column of a $1^{st}$ square block in a $(W-\Delta-11)^{th}$ row, bits in an $i^{th}$ column of a $2^{nd}$ square block in a $(W-\Delta-9)^{th}$ row, bits in an $i^{th}$ column of a $3^{rd}$ square block in a $(W-A-7)^{th}$ row, bits in an $i^{th}$ column of a $4^{th}$ square block in a $(W-\Delta-5)^{th}$ row, and bits in an $i^{th}$ column of a $5^{th}$ square block in a $(W-\Delta-3)^{th}$ row, where i is a positive integer that is not less than 0 and that is less than 16, and $\Delta$ is a positive integer.

It should be understood that, in FIG. 6, an example in which $\Delta = 4$ is used. $\Delta$ herein may be another positive integer, for example, 1, 2, 3, 5, 6, 7, 8, 9, or 10. This is not specifically limited in this application. It should be noted that, in the foregoing embodiment, the component code includes previously generated data. Assuming that W=1, $W-\Delta-13$ is a negative number. In this case, all bits in a square block with a negative row number may be set to 0, that is, it is equivalent to adding 0s before data before FEC encoding, to generate parity bits in the first several rows of square blocks. An example in which $\Delta = 4$, and W is an odd number is used. A square block that is with a smallest row number and that is used for the first parity bit included in the bit sequence in the $i^{th}$ row of the square block in the $W^{th}$ row is the $0^{th}$ square block in the $(W-\Delta-13)^{th}$ row. That is, when W=1, a square block in a $(-16)^{th}$ row is used. In this case, at least 16 rows of square blocks need to be added before data before encoding, and content may be all 0s. In another FEC encoding embodiment, 0s also need to be added similarly. Details are not described in this application.

In addition, alternatively, in the matrix, every three rows of square blocks may be used as a group, as shown in FIG. 7. In this case, when W%3 is 0 or 1 (% represents taking a remainder), 16 component code codewords are formed by a total of 12 square blocks: six square blocks in square blocks in the $W^{th}$ row, namely, a square block (W, 0), a square block (W, 1), a square block (W, 2), a square block (W, 3), a square block (W, 4), and a square block (W, 5), a square block (W-$\Delta$-17, 0), a square block (W-$\Delta$-14, 1), a square block (W-$\Delta$-11, 2), a square block (W-$\Delta$-8, 3), a square block (W-$\Delta$-5, 4), and a square block (W-$\Delta$-2, 5). A codeword length of each component code is $2n = 2 \times 96 = 192$ bits, and an information length of each component code is $n + k = 175$ bits. The component code may be BCH (192, 175), which is obtained by shortening 64 bits based on an extended BCH (256, 239) code, and is also referred to as eBCH (192, 175). It should be noted that, one component code codeword is formed by a total of 192 bits: 96 bits in total in $i^{th}$ $(0 \le i < 16)$ rows in the square block (W, 0), the square block (W, 1), the square block (W, 2), the square block (W, 3), the square block (W, 4), and the square block (W, 5), and 96 bits in total in $i^{th}$ $(0 \le i < 16)$ columns in the square block (W-$\Delta$-17, 0), the square block (W-$\Delta$-14, 1), the square block (W-$\Delta$-11, 2), the square block (W-$\Delta$-8, 3), the square block (W-$\Delta$-5, 4), and the square block (W-$\Delta$-2, 5).

When W%3 is 2, 16 component code codewords are formed by a total of 12 square blocks: six square blocks in square blocks in the $W^{th}$ row, namely, a square block (W, 0), a square block (W, 1), a square block (W, 2), a square block (W, 3), a square block (W, 4), and a square block (W, 5), a square block (W-$\Delta$-20, 0), a square block (W-$\Delta$-17, 1), a square block (W-$\Delta$-14, 2), a square block (W-$\Delta$-11, 3), a square block (W-$\Delta$-8, 4), and a square block (W-$\Delta$-5, 5). A codeword length of each component code is $2n = 2 \times 96 = 192$ bits, and an information length of each component code is $n + k = 175$ bits. It should be noted that, one component code codeword is formed by a total of 192 bits: 96 bits in total with 16 bits in each of $i^{th}$ $(0 \le i < 16)$ rows in the square block (W, 0), the square block (W, 1), the square block (W, 2), the square block (W, 3), the square block (W, 4), and the square block (W, 5), and 96 bits in total in $i^{th}$ $(0 \le i < 16)$ columns in the square block (W-$\Delta$-20, 0), the square block (W-$\Delta$-17, 1), the square block (W-$\Delta$-14, 2), the square block (W-$\Delta$-11, 3), the square block (W-$\Delta$-8, 4), and the square block (W-$\Delta$-5, 5).

As shown in FIG. 7, every three rows of square blocks are used as a group, which may be understood as that encoding is performed on every $48 \times 79 = 3792$ bits to obtain $48 \times 96 = 4608$ encoded bits. It should be noted that the 3792 bits may be referred to as information bits, or may be referred to as to-be-encoded bits.

Convolutional algebraic code encoding is also used herein. Specifically, it may be understood as that a bit sequence in an $i^{th}$ row of a square block in the $W^{th}$ row includes a first parity bit. When W%3 is 0 or 1, the first parity bit is formed by using at least bits in an $i^{th}$ column of a $0^{th}$ square block in a $(W-\Delta-17)^{th}$ row, bits in an $i^{th}$ column of a $1^{st}$ square block in a (W-Δ-14)th row, bits in an ith column of a 2nd square block in a (W-Δ-11)th row, bits in an ith column of a 3rd square block in a (W-Δ-8)th row, bits in an ith column of a 4th square block in a (W-Δ-5)th row, and bits in an ith column of a 5th square block in a (W-Δ-2)th row, where i is a positive integer that is not less than 0 and that is less than 16, and Δ is a positive integer.

When W%3 is 2, the first parity bit is formed by using at least bits in an ith column of a 0th square block in a (W-Δ-20)th row, bits in an ith column of a 1st square block in a (W-Δ-17)th row, bits in an ith column of a 2nd square block in a (W-Δ-14)th row, bits in an ith column of a 3rd square block in a (W-Δ-11)th row, bits in an ith column of a 4th square block in a (W-Δ-8)th row, and bits in an ith column of a 5th square block in a (W-Δ-5)th row, where i is a positive integer that is not less than 0 and that is less than 16, and Δ is a positive integer.

It should be noted that, in FIG. 7, an example in which Δ= 6 is used. Δ herein may be another positive integer, for example, 1, 2, 3, 4, 5, 7, 8, 9, or 10. This is not specifically limited in this application.

FIG. 8 shows another encoding scheme in which every three rows of square blocks are used as a group. When W%3=0, 16 component code codewords are formed by a total of 12 square blocks: six square blocks in square blocks in the Wth row, namely, a square block (W, 0), a square block (W, 1), a square block (W, 2), a square block (W, 3), a square block (W, 4), and a square block (W, 5), a square block (W-Δ-16, 0), a square block (W-Δ-13, 1), a square block (W-Δ-10, 2), a square block (W- Δ- 7, 3), a square block (W-Δ-4, 4), and a square block (W-Δ-1, 5). A codeword length of each component code is 2n = 2 × 96 = 192 bits, and an information length of each component code is n + k = 175 bits. It should be noted that, one component code codeword is formed by a total of 192 bits: 96 bits in total in ith (0 ≤ i < 16) rows in the square block (W, 0), the square block (W, 1), the square block (W, 2), the square block (W, 3), the square block (W, 4), and the square block (W, 5), and 96 bits in total in ith (0 ≤ i < 16) columns in the square block (W-Δ-16, 0), the square block (W-Δ-13, 1), the square block (W-Δ-10, 2), the square block (W- Δ- 7, 3), the square block (W-Δ-4, 4), and the square block (W-Δ-1, 5).

As shown in FIG. 8, when W%3=1 or 2, 16 component code codewords are formed by a total of 12 square blocks: six square blocks in square blocks in the Wth row, namely, a square block (W, 0), a square block (W, 1), a square block (W, 2), a square block (W, 3), a square block (W, 4), and a square block (W, 5), a square block (W- Δ- 19, 0), a square block (W-Δ-16, 1), a square block (W- Δ- 13, 2), a square block (W-Δ-10, 3), a square block (W- Δ- 7, 4), and a square block (W-Δ-4, 5). A codeword length of each component code is 2n = 2 × 96 = 192 bits, and an information length of each component code is n + k = 175 bits. It should be noted that, one component code codeword is formed by a total of 192 bits: 96 bits in total in ith (0 ≤ i < 16) rows in the square block (W, 0), the square block (W, 1), the square block (W, 2), the square block (W, 3), the square block (W, 4), and the square block (W, 5), and 96 bits in total in ith (0 ≤ i < 16) columns in the square block (W- Δ- 19, 0), the square block (W-Δ-16, 1), the square block (W- Δ- 13, 2), the square block (W-Δ-10, 3), the square block (W- Δ- 7, 4), and the square block (W-Δ-4, 5). It should be noted that, in FIG. 8, an example in which Δ= 6 is used. Δ herein may be another positive integer, for example, 1, 2, 3, 4, 5, 7, 8, 9, or 10. This is not specifically limited in this application.

Similarly, because convolutional algebraic code encoding is used, a bit sequence in an ith row of a square block in the Wth row includes a first parity bit, and when W%3 is 0, the first parity bit is formed by using at least bits in an ith column of a 0th square block in a (W-Δ-16)th row, bits in an ith column of a 1st square block in a (W-Δ-13)th row, bits in an ith column of a 2nd square block in a (W-Δ-10)th row, bits in an ith column of a 3rd square block in a (W-Δ-7)th row, bits in an ith column of a 4th square block in a (W-Δ-4)th row, and bits in an ith column of a 5th square block in a (W-Δ-1)th row, where i is a positive integer that is not less than 0 and that is less than 16, and Δ is a positive integer.

When W%3 is 1 or 2, the first parity bit is formed by using at least bits in an ith column of a 0th square block in a (W-Δ-19)th row, bits in an ith column of a 1st square block in a (W-Δ-16)th row, bits in an ith column of a 2nd square block in a (W-Δ-13)th row, bits in an ith column of a 3rd square block in a (W-Δ-10)th row, bits in an ith column of a 4th square block in a (W-Δ-7)th row, and bits in an ith column of a 5th square block in a (W-Δ-4)th row, where i is a positive integer that is not less than 0 and that is less than 16, and Δ is a positive integer.

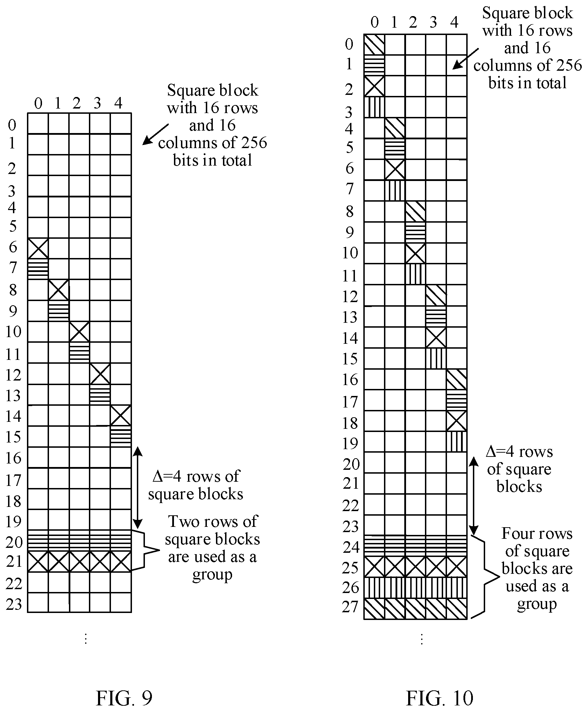

Similarly, an example in which n=80, and k = 63 is used. An FEC encoding overhead is about 27%. As shown in FIG. 9 and FIG. 10, bits in the encoded bit set are represented by a matrix including a plurality of square blocks. In this application, an example in which each square block includes 16 rows and 16 columns of bits, that is, 256 bits in total, is used. As shown in FIG. 9 and FIG. 10, the matrix includes five columns of square blocks, that is, 80 columns of bits in total. The matrix includes a plurality of rows of square blocks, where each row of square blocks includes 16 rows of bits, that is, each row of square blocks includes 16 × 80 = 1280 bits. In an infinite length matrix, a square block in a Wth row and a jth (0 ≤ j ≤ 4) column may be denoted as a square block (W, j), where W is an integer.

FIG. 9 shows a case in which in the matrix, every two rows of square blocks are used as a group. This is similar to the case in FIG. 6. When W is an even number, 16 component code (component code) codewords are formed by a total of 10 square blocks: five square blocks in square blocks in the Wth row, namely, a square block (W, 0), a square block (W, 1), a square block (W, 2), a square block (W, 3), and a square block (W, 4), a square block (W-Δ-9, 0) in a 0th column and a (W-Δ-9)th row, a square block (W-Δ-7, 1) in a 1st column and a (W-Δ-7)th row, a square block (W-Δ-5, 2) in a 2nd column and a (W-Δ-5)th row, a square block (W-Δ-3, 3) in a 3rd column and a (W-Δ-3)th row, and a square block (W-Δ-1, 4) in a 4th column and a (W-Δ-1)th row. A codeword length of each component code is 2n = 2 × 80 = 160 bits, and an information length of each component code is n + k = 143 bits. The component code may be BCH (160, 143), which is obtained by shortening 96 bits based on an extended BCH (256, 239) code, and is also referred to as eBCH (160, 143). It should be noted that, one component code codeword is formed by a total of 160 bits: 80 bits in total in $i^{th}$ ($0 \le i < 16$) rows in the square block (W, 0), the square block (W, 1), the square block (W, 2), the square block (W, 3), and the square block (W, 4), and 80 bits in total in $i^{th}$ ($0 \le i < 16$) columns in the square block (W-$\Delta$-9, 0), the square block (W-$\Delta$- 7, 1), the square block (W-$\Delta$-5, 2), the square block (W-$\Delta$-3, 3), and the square block (W-$\Delta$-1, 4).

As shown in FIG. 9, every two rows of square blocks are used as a group, which may be understood as that encoding is performed on every 32x63=2016 bits to obtain 32x80=2560 encoded bits. It should be noted that the 2016 bits may be referred to as information bits, or may be referred to as to-be-encoded bits.

Convolutional algebraic code encoding is also used herein. Specifically, it may be understood as that a bit sequence in an $i^{th}$ row of a square block in the $W^{th}$ row includes a first parity bit. When W is an even number, the first parity bit is formed by using at least bits in an $i^{th}$ column of a $0^{th}$ square block in a (W-$\Delta$-9)$^{th}$ row, bits in an $i^{th}$ column of a $1^{st}$ square block in a (W-$\Delta$-7)$^{th}$ row, bits in an $i^{th}$ column of a $2^{nd}$ square block in a (W-$\Delta$-5)$^{th}$ row, bits in an $i^{th}$ column of a $3^{rd}$ square block in a (W-$\Delta$-3)$^{th}$ row, and bits in an $i^{th}$ column of a $4^{th}$ square block in a (W-$\Delta$-1)$^{th}$ row, where i is a positive integer that is not less than 0 and that is less than 16, and $\Delta$ is a positive integer.

When W is an odd number, 16 component code codewords are formed by a total of 10 square blocks: five square blocks in square blocks in the $W^{th}$ row, namely, a square block (W, 0), a square block (W, 1), a square block (W, 2), a square block (W, 3), and a square block (W, 4), a square block (W- $\Delta$- 11, 0) in a $0^{th}$ column and a (W-$\Delta$-11)$^{th}$ row, a square block (W-$\Delta$-9, 1) in a $1^{st}$ column and a (W-$\Delta$-9)$^{th}$ row, a square block (W-$\Delta$-7, 2) in a $2^{nd}$ column and a (W-$\Delta$-7)$^{th}$ row, a square block (W-$\Delta$- 5, 3) in a $3^{rd}$ column and a (W-$\Delta$-5)$^{th}$ row, and a square block (W-$\Delta$-3, 4) in a $4^{th}$ column and a (W-$\Delta$-3)$^{th}$ row. It should be noted that, one component code codeword is formed by a total of 180 bits: 96 bits in total in $i^{th}$ ($0 \le i < 16$) rows in the square block (W, 0), the square block (W, 1), the square block (W, 2), the square block (W, 3), and the square block (W, 4), and 96 bits in total in $i^{th}$ ($0 \le i < 16$) columns in the square block (W- $\Delta$- 11, 0), the square block (W-$\Delta$-9, 1), the square block (W- $\Delta$- 7, 2), the square block (W-$\Delta$-5, 3), and the square block (W-$\Delta$-3, 4).

That is, when W is an odd number, the first parity bit is formed by using at least bits in an $i^{th}$ column of a $0^{th}$ square block in a (W-$\Delta$-11)$^{th}$ row, bits in an $i^{th}$ column of a $1^{st}$ square block in a (W-$\Delta$-9)$^{th}$ row, bits in an $i^{th}$ column of a $2^{nd}$ square block in a (W-$\Delta$-7)$^{th}$ row, bits in an $i^{th}$ column of a $3^{rd}$ square block in a (W-$\Delta$-5)$^{th}$ row, and bits in an $i^{th}$ column of a $4^{th}$ square block in a (W-$\Delta$-3)$^{th}$ row, where i is a positive integer that is not less than 0 and that is less than 16, and $\Delta$ is a positive integer.

FIG. 10 shows a case in which in the matrix, every four rows of square blocks are used as a group. Similarly, when W%4 is 0 or 1 or 2, 16 component code (component code) codewords are formed by a total of 10 square blocks: five square blocks in square blocks in the $W^{th}$ row, namely, a square block (W, 0), a square block (W, 1), a square block (W, 2), a square block (W, 3), and a square block (W, 4), a square block (W-$\Delta$-19, 0) in a $0^{th}$ column and a (W-$\Delta$-19)$^{th}$ row, a square block (W-$\Delta$-15, 1) in a $1^{st}$ column and a (W-$\Delta$-15)$^{th}$ row, a square block (W-$\Delta$-11, 2) in a $2^{nd}$ column and a (W-$\Delta$-11)$^{th}$ row, a square block (W- $\Delta$- 7, 3) in a $3^{rd}$ column and a (W-$\Delta$-7)$^{th}$ row, and a square block (W-$\Delta$-3, 4) in a $4^{th}$ column and a (W-$\Delta$-3)$^{th}$ row. A codeword length of each component code is 2n = $2 \times 80$ = 160 bits, and an information length of each component code is n + k = 143 bits. It should be noted that, one component code codeword is formed by a total of 160 bits: 80 bits in total in $i^{th}$ ($0 \le i < 16$) rows in the square block (W, 0), the square block (W, 1), the square block (W, 2), the square block (W, 3), and the square block (W, 4), and 80 bits in total in $i^{th}$ ($0 \le i < 16$) columns in the square block (W-$\Delta$-19, 0), the square block (W-$\Delta$-15, 1), the square block (W-$\Delta$-11, 2), the square block (W- $\Delta$- 7, 3), and the square block (W-$\Delta$-3, 4).

As shown in FIG. 10, every four rows of square blocks are used as a group, which may be understood as that every $64 \times 63$=4032 bits are encoded to obtain $64 \times 80$=5120 encoded bits. It should be noted that the 4032 bits may be referred to as information bits, or may be referred to as to-be-encoded bits.

Convolutional algebraic code encoding is also used herein. Specifically, it may be understood as that a bit sequence in an $i^{th}$ row of a square block in the $W^{th}$ row includes a first parity bit. When W%4 is 0 or 1 or 2, the first parity bit is formed by using at least bits in an $i^{th}$ column of a $0^{th}$ square block in a (W-$\Delta$-19)$^{th}$ row, bits in an $i^{th}$ column of a $1^{st}$ square block in a (W-$\Delta$-15)$^{th}$ row, bits in an $i^{th}$ column of a $2^{nd}$ square block in a (W-$\Delta$-11)$^{th}$ row, bits in an $i^{th}$ column of a $3^{rd}$ square block in a (W-A-7)$^{th}$ row, and bits in an $i^{th}$ column of a $4^{th}$ square block in a (W-$\Delta$-3)$^{th}$ row, where i is a positive integer that is not less than 0 and that is less than 16, and $\Delta$ is a positive integer.

When W%4 is 3, 16 component code codewords are formed by a total of 10 square blocks: five square blocks in square blocks in the $W^{th}$ row, namely, a square block (W, 0), a square block (W, 1), a square block (W, 2), a square block (W, 3), and a square block (W, 4), a square block (W-$\Delta$-23, 0) in a $0^{th}$ column and a (W-$\Delta$-23)$^{th}$ row, a square block (W- $\Delta$- 19, 1) in a $1^{st}$ column and a (W-$\Delta$-19)$^{th}$ row, a square block (W-$\Delta$-15, 2) in a $2^{nd}$ column and a (W-$\Delta$-15)$^{th}$ row, a square block (W- $\Delta$- 11, 3) in a $3^{rd}$ column and a (W-$\Delta$-11)$^{th}$ row, and a square block (W- $\Delta$- 7, 4) in a $4^{th}$ column and a (W-$\Delta$-7)$^{th}$ row. It should be noted that, one component code codeword is formed by a total of 160 bits: 80 bits in total in $i^{th}$ ($0 \le i < 16$) rows in the square block (W, 0), the square block (W, 1), the square block (W, 2), the square block (W, 3), and the square block (W, 4), and 80 bits in total in $i^{th}$ ($0 \le i < 16$) columns in the square block (W-$\Delta$-23, 0), the square block (W- $\Delta$- 19, 1), the square block (W-$\Delta$-15, 2), the square block (W-$\Delta$-11, 3), and the square block (W-$\Delta$-7, 4).

That is, a bit sequence in an $i^{th}$ row of a square block in the $W^{th}$ row includes a first parity bit. When W%4 is 3, the first parity bit is formed by using at least bits in an $i^{th}$ column of a $0^{th}$ square block in a (W-$\Delta$-23)$^{th}$ row, bits in an $i^{th}$ column of a $1^{st}$ square block in a (W-$\Delta$-19)$^{th}$ row, bits in an $i^{th}$ column of a $2^{nd}$ square block in a (W-$\Delta$-15)$^{th}$ row, bits in an $i^{th}$ column of a

$3^{rd}$ square block in a $(W-\Delta-11)^{th}$ row, and bits in an $i^{th}$ column of a $4^{th}$ square block in a $(W-\Delta-7)^{th}$ row, where i is a positive integer that is not less than 0 and that is less than 16, and $\Delta$ is a positive integer.

It should be understood that, in FIG. 9 and FIG. 10, an example in $\Delta= 4$ is used. $\Delta$ herein may be another positive integer, for example, 1, 2, 3, 5, 6, 7, 8, 9, or 10. This is not specifically limited in this application.

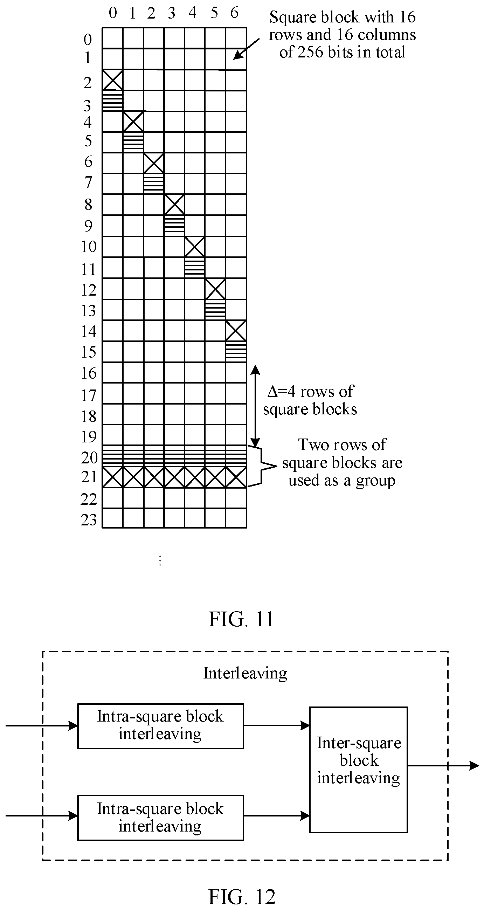

Similarly, an example in which n=112, and k = 95 is used. An FEC encoding overhead is about 17.9%. As shown in FIG. 11, bits in the encoded bit set are represented by a matrix including a plurality of square blocks. In this application, an example in which each square block includes 16 rows and 16 columns of bits, that is, 256 bits in total, is used. As shown in FIG. 11, the matrix includes seven columns of square blocks, that is, 112 columns of bits in total. The matrix includes a plurality of rows of square blocks, where each row of square blocks includes 16 rows of bits, that is, each row of square blocks includes $16 \times 112 = 1792$ bits. In an infinite length matrix, a square block in a $W^{th}$ row and a $j^{th}$ ($0 \leq j \leq 6$) column may be denoted as a square block $(W, j)$, where W is an integer.

FIG. 11 shows a case in which in the matrix, every two rows of square blocks are used as a group. This is similar to the cases in FIG. 6 and FIG. 9. When W is an even number, 16 component code (component code) codewords are formed by a total of 14 square blocks: seven square blocks in square blocks in the $W^{th}$ row, namely, a square block $(W, 0)$, a square block $(W, 1)$, a square block $(W, 2)$, a square block $(W, 3)$, a square block $(W, 4)$, a square block $(W, 5)$, and a square block $(W, 6)$, a square block $(W- \Delta- 13, 0)$ in a $0^{th}$ column and a $(W-\Delta-13)^{th}$ row, a square block $(W- \Delta- 11, 1)$ in a $1^{st}$ column and a $(W-\Delta-11)^{th}$ row, a square block $(W-\Delta-9, 2)$ in a $2^{nd}$ column and a $(W-\Delta-9)^{th}$ row, a square block $(W- \Delta- 7, 3)$ in a $3^{rd}$ column and a $(W-\Delta-7)^{th}$ row, a square block $(W-\Delta-5, 4)$ in a $4^{th}$ column and a $(W-\Delta-5)^{th}$ row, a square block $(W-\Delta-3, 5)$ in a $5^{th}$ column and a $(W-\Delta-3)^{th}$ row, and a square block $(W-\Delta-1, 6)$ in a $6^{th}$ column and a $(W-\Delta-1)^{th}$ row. A codeword length of each component code is $2n = 2 \times 112 = 224$ bits, and an information length of each component code is $n + k = 207$ bits. The component code may be BCH (224, 207), which is obtained by shortening 32 bits based on an extended BCH (256, 239) code, and is also referred to as eBCH (224, 207). It should be noted that, one component code codeword is formed by a total of 224 bits: 112 bits in total in $i^{th}$ ($0 \leq i < 16$) rows in the square block $(W, 0)$, the square block $(W, 1)$, the square block $(W, 2)$, the square block $(W, 3)$, the square block $(W, 4)$, the square block $(W, 5)$, and the square block $(W, 6)$, and 112 bits in total in $i^{th}$ ($0 \leq i < 16$) columns in the square block $(W- \Delta- 13, 0)$, the square block $(W- \Delta- 11, 1)$, the square block $(W-\Delta-9, 2)$, the square block $(W- \Delta- 7, 3)$, the square block $(W-\Delta-5, 4)$, the square block $(W-\Delta-3, 5)$, and the square block $(W-\Delta-1, 6)$.

That is, a bit sequence in an $i^{th}$ row of a square block in the $W^{th}$ row includes a first parity bit. When W is an even number, the first parity bit is formed by using at least bits in an $i^{th}$ column of a $0^{th}$ square block in a $(W-\Delta-13)^{th}$ row, bits in an $i^{th}$ column of a $1^{st}$ square block in a $(W-\Delta-11)^{th}$ row, bits in an $i^{th}$ column of a $2^{nd}$ square block in a $(W-\Delta-9)^{th}$ row, bits in an $i^{th}$ column of a $3^{rd}$ square block in a $(W-\Delta-7)^{th}$ row, bits in an $i^{th}$ column of a $4^{th}$ square block in a $(W-\Delta-5)^{th}$ row, bits in an $i^{th}$ column of a $5^{th}$ square block in a $(W-\Delta-3)^{th}$ row, and bits in an $i^{th}$ column of a $6^{th}$ square block in a $(W-\Delta-1)^{th}$ row, where i is a positive integer that is not less than 0 and that is less than 16, and $\Delta$ is a positive integer.

When W is an odd number, 16 component code (component code) codewords are formed by a total of 14 square blocks: seven square blocks in square blocks in the $W^{th}$ row, namely, a square block $(W, 0)$, a square block $(W, 1)$, a square block $(W, 2)$, a square block $(W, 3)$, a square block $(W, 4)$, a square block $(W, 5)$, and a square block $(W, 6)$, a square block $(W-\Delta-15, 0)$ in a $0^{th}$ column and a $(W-\Delta-15)^{th}$ row, a square block $(W- \Delta- 13, 1)$ in a $1^{st}$ column and a $(W-\Delta-13)^{th}$ row, a square block $(W- \Delta- 11, 2)$ in a $2^{nd}$ column and a $(W-\Delta-11)^{th}$ row, a square block $(W-\Delta-9, 3)$ in a $3^{rd}$ column and a $(W-\Delta-9)^{th}$ row, a square block $(W- \Delta- 7, 4)$ in a $4^{th}$ column and a $(W- \Delta- 7)^{th}$ row, a square block $(W-\Delta-5, 5)$ in a $5^{th}$ column and a $(W-\Delta-5)^{th}$ row, and a square block $(W-\Delta-3, 6)$ in a $6^{th}$ column and a $(W- \Delta- 3)^{th}$ row. A codeword length of each component code is $2n = 2 \times 112 = 224$ bits, and an information length of each component code is $n + k = 207$ bits. It should be noted that, one component code codeword is formed by a total of 224 bits: 112 bits in total in $i^{th}$ ($0 \leq i < 16$) rows in the square block $(W, 0)$, the square block $(W, 1)$, the square block $(W, 2)$, the square block $(W, 3)$, the square block $(W, 4)$, the square block $(W, 5)$, and the square block $(W, 6)$, and 112 bits in total in $i^{th}$ ($0 \leq i < 16$) columns in the square block $(W-\Delta-15, 0)$, the square block $(W-\Delta- 13, 1)$, the square block $(W- \Delta- 11, 2)$, the square block $(W-\Delta-9, 3)$, the square block $(W- \Delta- 7, 4)$, the square block $(W-\Delta-5, 5)$, and the square block $(W-\Delta-3, 6)$.

That is, a bit sequence in an $i^{th}$ row of a square block in the $W^{th}$ row includes a first parity bit. When W is an odd number, the first parity bit is formed by using at least bits in an $i^{th}$ column of a $0^{th}$ square block in a $(W-\Delta-15)^{th}$ row, bits in an $i^{th}$ column of a $1^{st}$ square block in a $(W-\Delta-13)^{th}$ row, bits in an $i^{th}$ column of a $2^{nd}$ square block in a $(W-\Delta-11)^{th}$ row, bits in an $i^{th}$ column of a $3^{rd}$ square block in a $(W-\Delta-9)^{th}$ row, bits in an $i^{th}$ column of a $4^{th}$ square block in a $(W-\Delta-7)^{th}$ row, bits in an $i^{th}$ column of a $5^{th}$ square block in a $(W-\Delta-5)^{th}$ row, and bits in an $i^{th}$ column of a $6^{th}$ square block in a $(W-\Delta-3)^{th}$ row, where i is a positive integer that is not less than 0 and that is less than 16, and $\Delta$ is a positive integer.

It should be understood that, in FIG. 11, an example in which $\Delta= 4$ is used. $\Delta$ herein may be another positive integer, for example, 1, 2, 3, 5, 6, 7, 8, 9, or 10. This is not specifically limited in this application.

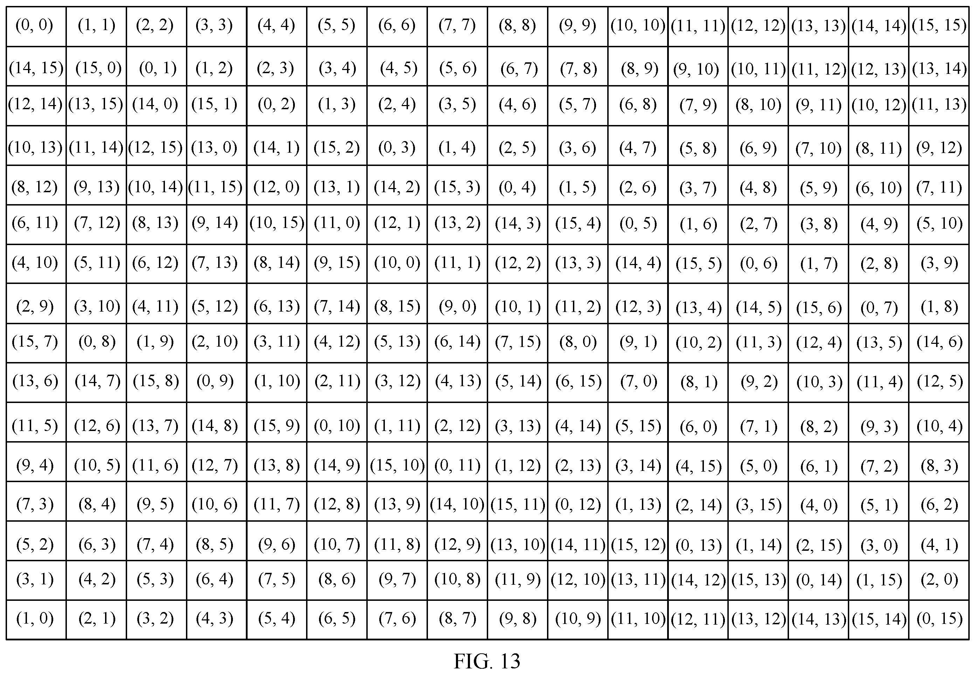

The following describes each interleaving operation in the Q interleavings in FIG. 5. A basic procedure of the interleaving is shown in FIG. 12. Each interleaving includes two operations: intra-square block interleaving (intra-block interleaving) and inter-square block interleaving (inter-block interleaving). In the 2Q encoded bit sets, intra-square block interleaving is first performed on each encoded bit set. A specific manner may be shown in FIG. 13. An input square block with 16 rows and 16 columns is separately interleaved according to an interleaving rule shown in FIG. 13, and an output square block with 16 rows and 16 columns is obtained through disordering. In FIG. 13, when an element in an $(i_1)^{th}$ row and a $(j_1)^{th}$ column ($0 \leq i_1 < 16$ and $0 \leq j_1 < 16$) is (a, b), it indicates that bits in an $(i_1)^{th}$ row and a $(j_1)^{th}$ column in an output square block that undergoes "intra-square block interleaving" are from bits in an $a^{th}$ row and a $b^{th}$ column in an input square block. For example, when an element in a $1^{st}$ row and a $0^{th}$ column in FIG. 13 is (14, 15), bits in a $1^{st}$ row and a $0^{th}$ column in an output square block that undergoes "intra-square block interleaving" are from bits in a $14^{th}$ row and a $15^{th}$ column in an input square block.

Inter-square block interleaving is performed on bits that undergo intra-square block interleaving, to improve overall anti-burst performance. The following describes an inter-square block interleaving operation.

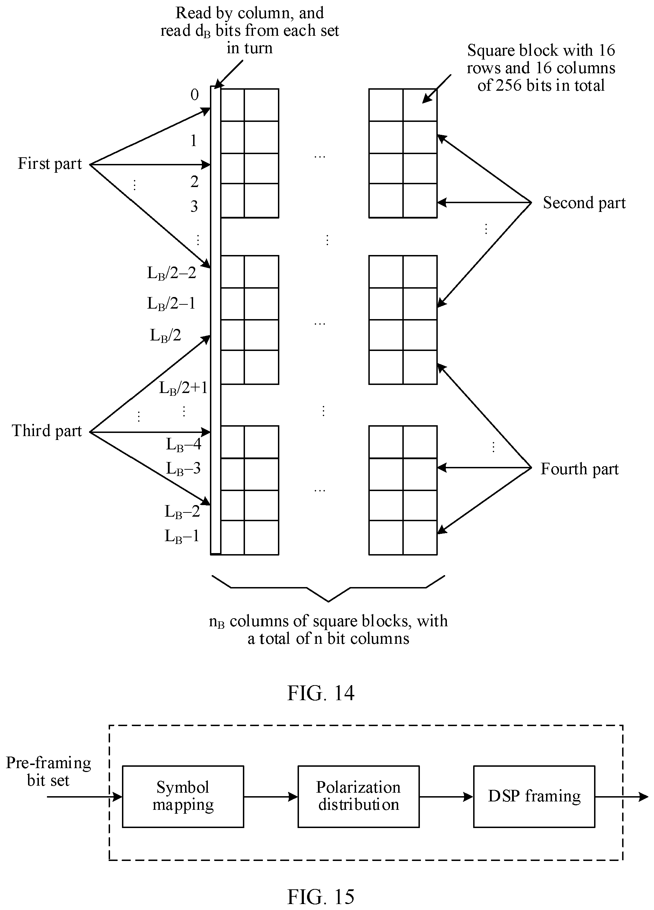

FIG. 14 is a diagram of inter-square block interleaving according to an embodiment of this application. Every two bit sets that undergo intra-square block interleaving are stored in an interleaving buffer in a form of a matrix with L rows and n columns. In this application, an example in which each square block includes 16 rows and 16 columns, that is, 256 bits in total is used. The matrix includes a square block with $L_B=L/16$ rows and $n_B=n/16$ columns, an even-numbered row of square block is from one of the two bit sets that undergo intra-square block interleaving, and an odd-numbered row of square block is from the other of the two bit sets that undergo intra-square block interleaving. It should be noted that the interleaving buffer includes n bit columns, to match a length n of the FEC encoded bits, which facilitates hardware implementation, reduces data format conversion during specific implementation, and can reduce complexity.

The matrix is divided into four parts. A first part includes square blocks in a $0^{th}$ row, a $2^{nd}$ row, a $4^{th}$ row, ..., and a $(L_B/2-2)^{th}$ row of the matrix. A second part includes square blocks in a $1^{st}$ row, a $3^{rd}$ row, a $5^{th}$ row, ..., and a $(L_B/2-1)^{th}$ row of the matrix. A third part includes square blocks in a $(L_B/2)^{th}$ row, a $(L_B/2+2)^{th}$ row, a $(L_B/2+4)^{th}$ row, ..., and a $(L_B-2)^{th}$ row of the matrix. A fourth part includes square blocks in a $(L_B/2+1)^{th}$ row, a $(L_B/2+3)^{th}$ row, a $(L_B/2+5)^{th}$ row, ..., and a $(L_B-1)^{th}$ row of the matrix. Inter-square block interleaving is performed on the four parts to obtain an interleaved bit set.

A specific interleaving manner is as follows. Bits in each column are read from each set in turn by using $d_B$ bits as a granularity in the interleaving buffer, and after all bits in each column are read, bits in a next column are read. First, a first group of $d_B$ bits are read from top to bottom in the first part, and then the first $d_B$ bits are read from top to bottom in the second part, the third part, and the fourth part respectively. A total of $4 \times d_B$ bits are read in a cycle (cycle). Then, in a next cycle, a next group of $d_B$ bits are read from the first part, the second part, the third part, and the fourth part from top to bottom respectively, and a total of $4 \times d_B$ bits are read. After a total of $L/(4 \times d_B)$ cycles, a current one column of L bits are read. Then, bits in a next column are read based on the foregoing operations, a total of n columns are read, and $L \times n$ bits in the interleaving buffer are all read. $d_B$ may be four, eight, or another numerical value. This is not limited in this application.

Further, inter-square block interleaving is performed on the 2Q bit sets that undergo intra-square block interleaving, to obtain a total of Q interleaved bit sets. Then, the bit sets are combined into one lane to obtain the pre-framing bit set. A combination manner may be reading bits in turn from 0 to Q-1 interleaved bit sets, t bits are read each time, and t is a quantity of bits needed for mapping to one dual-polarization symbol. It should be understood that there may be another combination solution. This is not limited in this application.

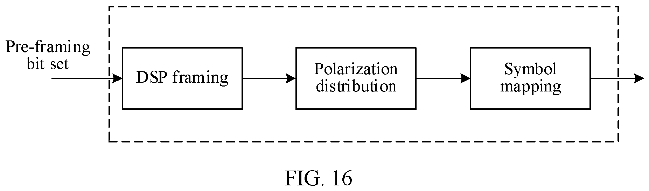

The pre-framing bit set obtained through the foregoing operations is used for generating the super-frame. FIG. 15 and FIG. 16 are respectively two flowcharts of generating a super-frame by using a pre-framing bit set according to an embodiment of this application. First, as shown in FIG. 15, symbol mapping (symbol mapping) and polarization distribution (Polarization distribution) are performed on the pre-framing bit set to obtain a dual-polarization symbol. The symbol mapping is also referred to as modulation. t bits are mapped to one dual-polarization symbol through the symbol mapping and the polarization distribution, where t is an integer greater than 0. The symbol mapping includes but is not limited to quadrature phase shift keying (Quadrature Phase Shift Keying, QPSK) and quadrature amplitude modulation (Quadrature Amplitude Modulation, QAM), and then polarization symbol distribution is performed to obtain a dual-polarization (Dual-polarization, DP) symbol, for example, a DP-QPSK, DP-8QAM, DP-16QAM, DP-32QAM, or DP-64QAM symbol. For example, when t=4, the dual-polarization symbol is the dual-polarization quadrature phase shift keying (Dual-Polarization Quadrature Phase Shift Keying, DP-QPSK) symbol. When t=6, the dual-polarization symbol is the dual-polarization 8-quadrature amplitude modulation (Dual-Polarization 8-Quadrature Amplitude Modulation, DP-8QAM) symbol. When t=8, the dual-polarization symbol is the dual-polarization 16-quadrature amplitude modulation (Dual-Polarization 16-Quadrature Amplitude Modulation, DP-16QAM) symbol. When t=12, the dual-polarization symbol is the dual-polarization 64-quadrature amplitude modulation (Dual-Polarization 64-Quadrature Amplitude Modulation, DP-64QAM) symbol. Further, digital signal processing (Digital Signal Processing, DSP) framing (including but not limited to insertion of a pilot symbol, a training symbol, a frame alignment word symbol, a reserved symbol, and the like) is performed on the dual-polarization symbol, and DSP framing is performed on every M dual-polarization symbols to obtain a super-frame. The M dual-polarization symbols are also referred to as pre-framing symbols, or referred to as payload symbols.

The framing operation shown in FIG. 15 is an operation performed on a symbol. As shown in FIG. 16, for a pre-framing bit set, DSP framing processing may alternatively be performed before symbol mapping is performed according to an adopted symbol mapping rule. For example, bits corresponding to a pilot symbol, a training symbol, a frame alignment word symbol, a reserved symbol, and the like are inserted. Then, polarization distribution and symbol mapping are performed to obtain a super-frame that is the same as that processed in FIG. 15. It should be understood that another framing manner is not excluded. Details are not described in this application.

Refer to FIG. 14. It can be learned that a quantity L of bit rows in the interleaving buffer needs to be an integer multiple of 16, and a quantity $L_B = L/16$ of square block rows in the interleaving buffer needs to be an integer multiple of 4. Considering that the solution is compatible with DP-QPSK, dual-polarization 8-quadrature amplitude modulation (Dual-Polarization 8-Quadrature Amplitude Modulation, DP-8QAM), DP-16QAM, and even possible DP-64QAM in the future, L needs to be an integer multiple of 3. Therefore, for ease of hardware implementation, n is selected as an integer multiple of 16, and L is selected as an integer multiple of $16 \times 4 \times 3 = 192$. In this case, a quantity $L \times n$ of bits of an interleaving granularity in the FEC encoding and interleaving is divisible by 4, 8, and 12. In other words, $L \times n/t$ complete modulation symbols may be obtained through symbol mapping on $L \times n$ bits obtained through interleaving.

It should be noted that, for ease of hardware implementation, the quantity $M = L \times n$ of pre-framing symbols is selected. In addition, after CRC insertion and/or pad insertion are/is performed on the first data with the $d_{in} = q \times r$ bits, and then FEC encoding and interleaving are performed, the pre-framing bit set whose total bit length is $d_{scr}/k \times n$ is obtained. Symbol mapping and polarization distribution are performed on the pre-framing bit set with $d_{scr}/k \times n$ bits to obtain $d_{scr}/k \times n/t$ pre-framing symbols. $d_{scr}/k \times n/t = M$ is selected, so that a super-frame can be obtained through encoding and interleaving and a data processing procedure including symbol mapping, polarization distribution, and framing processing on the first data including the r rows, facilitating hardware implementation. In this case, $d_{scr} = L \times k \times t$.

The following provides a plurality of {L, M, r} parameter combinations respectively under {q = 10280, n = 96, k = 79, t = 4}, {q = 10280, n = 96, k = 79, t = 8}, {q = 10280, n = 80, k = 63, t = 4}, {q = 10280, n = 80, k = 63, t = 8}, {q = 2056, n = 96, k = 79, t = 4}, {q = 2056, n = 96, k = 79, t = 8}, {q = 2056, n = 80, k = 63, t = 4}, and {q = 2056, n = 80, k = 63, t = 8}, and provides corresponding $d_{in}$, $d_{scr}$, $d_{CP}$, and $OH_{CP}$ under the parameter combinations.

(1) It is considered that q = 10280, n = 96, k = 79, and t = 4.

In this case, an FEC encoding overhead is about 21.5%, and DP-QPSK modulation is used. Table 1(a) below provides a plurality of {L, M, r} parameter combinations, and provides corresponding $d_{in}$, $d_{scr}$, $d_{CP}$, and $OH_{CP}$ under the parameter combinations.

Table 1(a)

| Sequence number | L | M | r | $d_{in}$ | $d_{scr}$ | $d_{CP}$ | $OH_{CP}$ |
|---|---|---|---|---|---|---|---|
| 1 | 1536 | 147456 | 47 | 483160 | 485376 | 2216 | 0.459% |
| 2 | 1728 | 165888 | 53 | 544840 | 546048 | 1208 | 0.222% |
| 3 | 1920 | 184320 | 59 | 606520 | 606720 | 200 | 0.033% |
| 4 | 3072 | 294912 | 94 | 966320 | 970752 | 4432 | 0.459% |
| 5 | 3264 | 313344 | 100 | 1028000 | 1031424 | 3424 | 0.333% |
| 6 | 3456 | 331776 | 106 | 1089680 | 1092096 | 2416 | 0.222% |
| 7 | 3648 | 350208 | 112 | 1151360 | 1152768 | 1408 | 0.122% |
| 8 | 3840 | 368640 | 118 | 1213040 | 1213440 | 400 | 0.033% |
| 9 | 4992 | 479232 | 153 | 1572840 | 1577472 | 4632 | 0.294% |
| 10 | 5184 | 497664 | 159 | 1634520 | 1638144 | 3624 | 0.222% |
| 11 | 5376 | 516096 | 165 | 1696200 | 1698816 | 2616 | 0.154% |
| 12 | 5568 | 534528 | 171 | 1757880 | 1759488 | 1608 | 0.091% |
| 13 | 5760 | 552960 | 177 | 1819560 | 1820160 | 600 | 0.033% |
| 14 | 6912 | 663552 | 212 | 2179360 | 2184192 | 4832 | 0.222% |
| 15 | 7104 | 681984 | 218 | 2241040 | 2244864 | 3824 | 0.171% |
| 16 | 7296 | 700416 | 224 | 2302720 | 2305536 | 2816 | 0.122% |
| 17 | 7488 | 718848 | 230 | 2364400 | 2366208 | 1808 | 0.076% |
| 18 | 7680 | 737280 | 236 | 2426080 | 2426880 | 800 | 0.033% |
| 19 | 8832 | 847872 | 271 | 2785880 | 2790912 | 5032 | 0.181% |
| 20 | 9024 | 866304 | 277 | 2847560 | 2851584 | 4024 | 0.141% |

(continued)

| Sequence number | L | M | r | $d_{in}$ | $d_{scr}$ | $d_{CP}$ | $OH_{CP}$ |
|---|---|---|---|---|---|---|---|
| 21 | 9216 | 884736 | 283 | 2909240 | 2912256 | 3016 | 0.104% |
| 22 | 9408 | 903168 | 289 | 2970920 | 2972928 | 2008 | 0.068% |
| 23 | 9600 | 921600 | 295 | 3032600 | 3033600 | 1000 | 0.033% |
| 24 | 10944 | 1050624 | 336 | 3454080 | 3458304 | 4224 | 0.122% |
| 25 | 11136 | 1069056 | 342 | 3515760 | 3518976 | 3216 | 0.091% |
| 26 | 11328 | 1087488 | 348 | 3577440 | 3579648 | 2208 | 0.062% |
| 27 | 11520 | 1105920 | 354 | 3639120 | 3640320 | 1200 | 0.033% |
| 28 | 11712 | 1124352 | 360 | 3700800 | 3700992 | 192 | 0.005% |
| 29 | 12864 | 1234944 | 395 | 4060600 | 4065024 | 4424 | 0.109% |
| 30 | 13056 | 1253376 | 401 | 4122280 | 4125696 | 3416 | 0.083% |
| 31 | 13248 | 1271808 | 407 | 4183960 | 4186368 | 2408 | 0.058% |
| 32 | 13440 | 1290240 | 413 | 4245640 | 4247040 | 1400 | 0.033% |
| 33 | 13632 | 1308672 | 419 | 4307320 | 4307712 | 392 | 0.009% |
| 34 | 14784 | 1419264 | 454 | 4667120 | 4671744 | 4624 | 0.099% |
| 35 | 14976 | 1437696 | 460 | 4728800 | 4732416 | 3616 | 0.076% |
| 36 | 15168 | 1456128 | 466 | 4790480 | 4793088 | 2608 | 0.054% |
| 37 | 15360 | 1474560 | 472 | 4852160 | 4853760 | 1600 | 0.033% |
| 38 | 15552 | 1492992 | 478 | 4913840 | 4914432 | 592 | 0.012% |
| 39 | 16704 | 1603584 | 513 | 5273640 | 5278464 | 4824 | 0.091% |
| 40 | 16896 | 1622016 | 519 | 5335320 | 5339136 | 3816 | 0.072% |
| 41 | 17088 | 1640448 | 525 | 5397000 | 5399808 | 2808 | 0.052% |
| 42 | 17280 | 1658880 | 531 | 5458680 | 5460480 | 1800 | 0.033% |
| 43 | 17472 | 1677312 | 537 | 5520360 | 5521152 | 792 | 0.014% |
| 44 | 18624 | 1787904 | 572 | 5880160 | 5885184 | 5024 | 0.085% |

It should be noted that, in some specific applications, after the first data with r rows and q=10280 columns of bits is obtained from the received data sequence, CRC check is first performed, and then pad bit insertion is performed. To facilitate reuse of a CRC operation used in an existing 800ZR standard, CRC check may be CRC-32, and a length of a corresponding information bit for performing CRC check is not greater than 41120 bits. More specifically, when r is divisible by 4, an integer p=r/4, CRC-32 check is performed on a total of 41120 bits in every four rows of the first data, a parity bit whose length is 32 bits is added, CRC-32 check is repeatedly performed for p times, and $d_{CRC} = 32 \times p$ CRC parity bits are added in total. When r is indivisible by 4, $r_{F0} = 4$, $p = \lfloor r/4 \rfloor + 1$, and $r_{F1} = r - 4 \times \lfloor r/4 \rfloor$. Considering $0 < d_{CRC} = 32 \times p \le d_{CP}$, Table 1(b) below provides a plurality of {L, M, r} parameter combinations, and provides corresponding $d_{in}$, $d_{scr}$, $OH_{CP}$, p, $d_{CRC}$, and $d_{PAD}$ under the parameter combinations.

Table 1(b)

| Sequence number | L | M | r | $d_{in}$ | $d_{scr}$ | $OH_{CP}$ | p | $d_{CRC}$ | $d_{PAD}$ |
|---|---|---|---|---|---|---|---|---|---|
| 1 | 1536 | 147456 | 47 | 483160 | 485376 | 0.459% | 12 | 384 | 1832 |
| 2 | 1728 | 165888 | 53 | 544840 | 546048 | 0.222% | 14 | 448 | 760 |
| 3 | 3072 | 294912 | 94 | 966320 | 970752 | 0.459% | 24 | 768 | 3664 |
| 4 | 3264 | 313344 | 100 | 1028000 | 1031424 | 0.333% | 25 | 800 | 2624 |
| 5 | 3456 | 331776 | 106 | 1089680 | 1092096 | 0.222% | 27 | 864 | 1552 |

(continued)

| Sequence number | L | M | r | $d_{in}$ | $d_{scr}$ | $OH_{CP}$ | p | $d_{CRC}$ | $d_{PAD}$ |
|---|---|---|---|---|---|---|---|---|---|
| 6 | 3648 | 350208 | 112 | 1151360 | 1152768 | 0.122% | 28 | 896 | 512 |
| 7 | 4992 | 479232 | 153 | 1572840 | 1577472 | 0.294% | 39 | 1248 | 3384 |
| 8 | 5184 | 497664 | 159 | 1634520 | 1638144 | 0.222% | 40 | 1280 | 2344 |
| 9 | 5376 | 516096 | 165 | 1696200 | 1698816 | 0.154% | 42 | 1344 | 1272 |
| 10 | 5568 | 534528 | 171 | 1757880 | 1759488 | 0.091% | 43 | 1376 | 232 |
| 11 | 6912 | 663552 | 212 | 2179360 | 2184192 | 0.222% | 53 | 1696 | 3136 |
| 12 | 7104 | 681984 | 218 | 2241040 | 2244864 | 0.171% | 55 | 1760 | 2064 |
| 13 | 7296 | 700416 | 224 | 2302720 | 2305536 | 0.122% | 56 | 1792 | 1024 |
| 14 | 8832 | 847872 | 271 | 2785880 | 2790912 | 0.181% | 68 | 2176 | 2856 |
| 15 | 9024 | 866304 | 277 | 2847560 | 2851584 | 0.141% | 70 | 2240 | 1784 |
| 16 | 9216 | 884736 | 283 | 2909240 | 2912256 | 0.104% | 71 | 2272 | 744 |
| 17 | 10944 | 1050624 | 336 | 3454080 | 3458304 | 0.122% | 84 | 2688 | 1536 |
| 18 | 11136 | 1069056 | 342 | 3515760 | 3518976 | 0.091% | 86 | 2752 | 464 |
| 19 | 12864 | 1234944 | 395 | 4060600 | 4065024 | 0.109% | 99 | 3168 | 1256 |
| 20 | 13056 | 1253376 | 401 | 4122280 | 4125696 | 0.083% | 101 | 3232 | 184 |
| 21 | 14784 | 1419264 | 454 | 4667120 | 4671744 | 0.099% | 114 | 3648 | 976 |
| 22 | 16704 | 1603584 | 513 | 5273640 | 5278464 | 0.091% | 129 | 4128 | 696 |
| 23 | 18624 | 1787904 | 572 | 5880160 | 5885184 | 0.085% | 143 | 4576 | 448 |

In some scenarios, a case in which L=1344 may be considered. In this case, M=129024, r=41, $d_{in}$=421480, $d_{scr}$=424704, $d_{CRC}$=352, $d_{PAD}$=2872, $d_{CP}$=3224, p=11, and $OH_{CP}$=0.76%.
(2) It is considered that q = 10280, n = 96, k = 79, and t = 8.
In this case, an FEC encoding overhead is about 21.5%, and DP-16QAM modulation is used. Table 2(a) below provides a plurality of {L, M, r} parameter combinations, and provides corresponding $d_{in}$, $d_{scr}$, $d_{CP}$, and $OH_{CP}$ under the parameter combinations.

Table 2(a)

| Sequence number | L | M | r | $d_{in}$ | $d_{scr}$ | $d_{CP}$ | $OH_{CP}$ |
|---|---|---|---|---|---|---|---|
| 1 | 1536 | 147456 | 94 | 966320 | 970752 | 4432 | 0.459% |
| 2 | 1728 | 165888 | 106 | 1089680 | 1092096 | 2416 | 0.222% |
| 3 | 1920 | 184320 | 118 | 1213040 | 1213440 | 400 | 0.033% |
| 4 | 3072 | 294912 | 188 | 1932640 | 1941504 | 8864 | 0.459% |
| 5 | 3264 | 313344 | 200 | 2056000 | 2062848 | 6848 | 0.333% |
| 6 | 3456 | 331776 | 212 | 2179360 | 2184192 | 4832 | 0.222% |
| 7 | 3648 | 350208 | 224 | 2302720 | 2305536 | 2816 | 0.122% |
| 8 | 3840 | 368640 | 236 | 2426080 | 2426880 | 800 | 0.033% |
| 9 | 4992 | 479232 | 306 | 3145680 | 3154944 | 9264 | 0.294% |
| 10 | 5184 | 497664 | 318 | 3269040 | 3276288 | 7248 | 0.222% |
| 11 | 5376 | 516096 | 330 | 3392400 | 3397632 | 5232 | 0.154% |
| 12 | 5568 | 534528 | 342 | 3515760 | 3518976 | 3216 | 0.091% |
| 13 | 5760 | 552960 | 354 | 3639120 | 3640320 | 1200 | 0.033% |

(continued)

| Sequence number | L | M | r | d_in | d_scr | d_CP | OH_CP |
|---|---|---|---|---|---|---|---|
| 14 | 6912 | 663552 | 424 | 4358720 | 4368384 | 9664 | 0.222% |
| 15 | 7104 | 681984 | 436 | 4482080 | 4489728 | 7648 | 0.171% |
| 16 | 7296 | 700416 | 448 | 4605440 | 4611072 | 5632 | 0.122% |
| 17 | 7488 | 718848 | 460 | 4728800 | 4732416 | 3616 | 0.076% |
| 18 | 7680 | 737280 | 472 | 4852160 | 4853760 | 1600 | 0.033% |
| 19 | 8832 | 847872 | 542 | 5571760 | 5581824 | 10064 | 0.181% |
| 20 | 9024 | 866304 | 554 | 5695120 | 5703168 | 8048 | 0.141% |
| 21 | 9216 | 884736 | 566 | 5818480 | 5824512 | 6032 | 0.104% |
| 22 | 9408 | 903168 | 578 | 5941840 | 5945856 | 4016 | 0.068% |
| 23 | 9600 | 921600 | 590 | 6065200 | 6067200 | 2000 | 0.033% |
| 24 | 10944 | 1050624 | 672 | 6908160 | 6916608 | 8448 | 0.122% |
| 25 | 11136 | 1069056 | 684 | 7031520 | 7037952 | 6432 | 0.091% |
| 26 | 11328 | 1087488 | 696 | 7154880 | 7159296 | 4416 | 0.062% |
| 27 | 11520 | 1105920 | 708 | 7278240 | 7280640 | 2400 | 0.033% |
| 28 | 11712 | 1124352 | 720 | 7401600 | 7401984 | 384 | 0.005% |
| 29 | 12864 | 1234944 | 790 | 8121200 | 8130048 | 8848 | 0.109% |
| 30 | 13056 | 1253376 | 802 | 8244560 | 8251392 | 6832 | 0.083% |
| 31 | 13248 | 1271808 | 814 | 8367920 | 8372736 | 4816 | 0.058% |
| 32 | 13440 | 1290240 | 826 | 8491280 | 8494080 | 2800 | 0.033% |
| 33 | 13632 | 1308672 | 838 | 8614640 | 8615424 | 784 | 0.009% |
| 34 | 14784 | 1419264 | 908 | 9334240 | 9343488 | 9248 | 0.099% |
| 35 | 14976 | 1437696 | 920 | 9457600 | 9464832 | 7232 | 0.076% |
| 36 | 15168 | 1456128 | 932 | 9580960 | 9586176 | 5216 | 0.054% |
| 37 | 15360 | 1474560 | 944 | 9704320 | 9707520 | 3200 | 0.033% |
| 38 | 15552 | 1492992 | 956 | 9827680 | 9828864 | 1184 | 0.012% |
| 39 | 16704 | 1603584 | 1026 | 10547280 | 10556928 | 9648 | 0.091% |
| 40 | 16896 | 1622016 | 1038 | 10670640 | 10678272 | 7632 | 0.072% |
| 41 | 17088 | 1640448 | 1050 | 10794000 | 10799616 | 5616 | 0.052% |
| 42 | 17280 | 1658880 | 1062 | 10917360 | 10920960 | 3600 | 0.033% |
| 43 | 17472 | 1677312 | 1074 | 11040720 | 11042304 | 1584 | 0.014% |
| 44 | 18624 | 1787904 | 1144 | 11760320 | 11770368 | 10048 | 0.085% |

It should be noted that, in some specific applications, CRC check may be first performed on the first data, and then pad insertion is performed. To facilitate reuse of a CRC operation used in an existing 800ZR standard, CRC check may be CRC-32. Other aspects are similar to those in the case (1). Table 2(b) below provides a plurality of {L, M, r} parameter combinations in this embodiment, and provides corresponding $d_{in}$, $d_{scr}$, $OH_{CP}$, p, $d_{CRC}$, and $d_{PAD}$ under the parameter combinations.

Table 2(b)

| Sequence number | L | M | r | d_in | d_scr | OH_CP | p | d_CRC | d_PAD |
|---|---|---|---|---|---|---|---|---|---|
| 1 | 1536 | 147456 | 94 | 966320 | 970752 | 0.459% | 24 | 768 | 3664 |

(continued)

| Sequence number | L | M | r | $d_{in}$ | $d_{scr}$ | $OH_{CP}$ | p | $d_{CRC}$ | $d_{PAD}$ |
|---|---|---|---|---|---|---|---|---|---|
| 2 | 1728 | 165888 | 106 | 1089680 | 1092096 | 0.222% | 27 | 864 | 1552 |
| 3 | 3072 | 294912 | 188 | 1932640 | 1941504 | 0.459% | 47 | 1504 | 7360 |
| 4 | 3264 | 313344 | 200 | 2056000 | 2062848 | 0.333% | 50 | 1600 | 5248 |
| 5 | 3456 | 331776 | 212 | 2179360 | 2184192 | 0.222% | 53 | 1696 | 3136 |
| 6 | 3648 | 350208 | 224 | 2302720 | 2305536 | 0.122% | 56 | 1792 | 1024 |
| 7 | 4992 | 479232 | 306 | 3145680 | 3154944 | 0.294% | 77 | 2464 | 6800 |
| 8 | 5184 | 497664 | 318 | 3269040 | 3276288 | 0.222% | 80 | 2560 | 4688 |
| 9 | 5376 | 516096 | 330 | 3392400 | 3397632 | 0.154% | 83 | 2656 | 2576 |
| 10 | 5568 | 534528 | 342 | 3515760 | 3518976 | 0.091% | 86 | 2752 | 464 |
| 11 | 6912 | 663552 | 424 | 4358720 | 4368384 | 0.222% | 106 | 3392 | 6272 |
| 12 | 7104 | 681984 | 436 | 4482080 | 4489728 | 0.171% | 109 | 3488 | 4160 |
| 13 | 7296 | 700416 | 448 | 4605440 | 4611072 | 0.122% | 112 | 3584 | 2048 |
| 14 | 8832 | 847872 | 542 | 5571760 | 5581824 | 0.181% | 136 | 4352 | 5712 |
| 15 | 9024 | 866304 | 554 | 5695120 | 5703168 | 0.141% | 139 | 4448 | 3600 |
| 16 | 9216 | 884736 | 566 | 5818480 | 5824512 | 0.104% | 142 | 4544 | 1488 |
| 17 | 10944 | 1050624 | 672 | 6908160 | 6916608 | 0.122% | 168 | 5376 | 3072 |
| 18 | 11136 | 1069056 | 684 | 7031520 | 7037952 | 0.091% | 171 | 5472 | 960 |
| 19 | 12864 | 1234944 | 790 | 8121200 | 8130048 | 0.109% | 198 | 6336 | 2512 |
| 20 | 13056 | 1253376 | 802 | 8244560 | 8251392 | 0.083% | 201 | 6432 | 400 |
| 21 | 14784 | 1419264 | 908 | 9334240 | 9343488 | 0.099% | 227 | 7264 | 1984 |
| 22 | 16704 | 1603584 | 1026 | 10547280 | 10556928 | 0.091% | 257 | 8224 | 1424 |
| 23 | 18624 | 1787904 | 1144 | 11760320 | 11770368 | 0.085% | 286 | 9152 | 896 |

In some scenarios, a case in which L=1344 may be considered. In this case, M=129024, r=82, $d_{in}$=842960, $d_{scr}$=849408, $d_{CRC}$=672, $d_{PAD}$=5776, $d_{CP}$=6448, p=21, and OHcp=0.76%.

(3) It is considered that q = 10280, n = 80, k = 63, and t = 4.

In this case, an FEC encoding overhead is about 27%, and DP-QPSK modulation is used. Table 3(a) below provides a plurality of {L, M, r} parameter combinations, and provides corresponding $d_{in}$, $d_{scr}$, $d_{CP}$, and $OH_{CP}$ under the parameter combinations.

Table 3(a)

| Sequence number | L | M | r | $d_{in}$ | $d_{scr}$ | $d_{CP}$ | $OH_{CP}$ |
|---|---|---|---|---|---|---|---|
| 1 | 1920 | 153600 | 47 | 483160 | 483840 | 680 | 0.141% |
| 2 | 2496 | 199680 | 61 | 627080 | 628992 | 1912 | 0.305% |
| 3 | 3072 | 245760 | 75 | 771000 | 774144 | 3144 | 0.408% |
| 4 | 3264 | 261120 | 80 | 822400 | 822528 | 128 | 0.016% |
| 5 | 3648 | 291840 | 89 | 914920 | 919296 | 4376 | 0.478% |
| 6 | 3840 | 307200 | 94 | 966320 | 967680 | 1360 | 0.141% |
| 7 | 4416 | 353280 | 108 | 1110240 | 1112832 | 2592 | 0.233% |
| 8 | 4992 | 399360 | 122 | 1254160 | 1257984 | 3824 | 0.305% |
| 9 | 5184 | 414720 | 127 | 1305560 | 1306368 | 808 | 0.062% |

(continued)

| Sequence number | L | M | r | $d_{in}$ | $d_{scr}$ | $d_{CP}$ | $OH_{CP}$ |
|---|---|---|---|---|---|---|---|
| 10 | 5568 | 445440 | 136 | 1398080 | 1403136 | 5056 | 0.362% |
| 11 | 5760 | 460800 | 141 | 1449480 | 1451520 | 2040 | 0.141% |
| 12 | 6336 | 506880 | 155 | 1593400 | 1596672 | 3272 | 0.205% |
| 13 | 6528 | 522240 | 160 | 1644800 | 1645056 | 256 | 0.016% |
| 14 | 6912 | 552960 | 169 | 1737320 | 1741824 | 4504 | 0.259% |
| 15 | 7104 | 568320 | 174 | 1788720 | 1790208 | 1488 | 0.083% |
| 16 | 7680 | 614400 | 188 | 1932640 | 1935360 | 2720 | 0.141% |
| 17 | 8256 | 660480 | 202 | 2076560 | 2080512 | 3952 | 0.190% |
| 18 | 8448 | 675840 | 207 | 2127960 | 2128896 | 936 | 0.044% |
| 19 | 9024 | 721920 | 221 | 2271880 | 2274048 | 2168 | 0.095% |
| 20 | 9600 | 768000 | 235 | 2415800 | 2419200 | 3400 | 0.141% |
| 21 | 9792 | 783360 | 240 | 2467200 | 2467584 | 384 | 0.016% |
| 22 | 10176 | 814080 | 249 | 2559720 | 2564352 | 4632 | 0.181% |
| 23 | 10368 | 829440 | 254 | 2611120 | 2612736 | 1616 | 0.062% |
| 24 | 10944 | 875520 | 268 | 2755040 | 2757888 | 2848 | 0.103% |
| 25 | 11520 | 921600 | 282 | 2898960 | 2903040 | 4080 | 0.141% |
| 26 | 11712 | 936960 | 287 | 2950360 | 2951424 | 1064 | 0.036% |
| 27 | 12288 | 983040 | 301 | 3094280 | 3096576 | 2296 | 0.074% |
| 28 | 12864 | 1029120 | 315 | 3238200 | 3241728 | 3528 | 0.109% |
| 29 | 13056 | 1044480 | 320 | 3289600 | 3290112 | 512 | 0.016% |
| 30 | 13440 | 1075200 | 329 | 3382120 | 3386880 | 4760 | 0.141% |
| 31 | 13632 | 1090560 | 334 | 3433520 | 3435264 | 1744 | 0.051% |
| 32 | 14208 | 1136640 | 348 | 3577440 | 3580416 | 2976 | 0.083% |
| 33 | 14784 | 1182720 | 362 | 3721360 | 3725568 | 4208 | 0.113% |
| 34 | 14976 | 1198080 | 367 | 3772760 | 3773952 | 1192 | 0.032% |
| 35 | 15552 | 1244160 | 381 | 3916680 | 3919104 | 2424 | 0.062% |
| 36 | 16128 | 1290240 | 395 | 4060600 | 4064256 | 3656 | 0.090% |
| 37 | 16320 | 1305600 | 400 | 4112000 | 4112640 | 640 | 0.016% |
| 38 | 16704 | 1336320 | 409 | 4204520 | 4209408 | 4888 | 0.116% |
| 39 | 16896 | 1351680 | 414 | 4255920 | 4257792 | 1872 | 0.044% |
| 40 | 17472 | 1397760 | 428 | 4399840 | 4402944 | 3104 | 0.071% |
| 41 | 17664 | 1413120 | 433 | 4451240 | 4451328 | 88 | 0.002% |
| 42 | 18048 | 1443840 | 442 | 4543760 | 4548096 | 4336 | 0.095% |
| 43 | 18240 | 1459200 | 447 | 4595160 | 4596480 | 1320 | 0.029% |
| 44 | 18816 | 1505280 | 461 | 4739080 | 4741632 | 2552 | 0.054% |
| 45 | 19392 | 1551360 | 475 | 4883000 | 4886784 | 3784 | 0.077% |
| 46 | 19584 | 1566720 | 480 | 4934400 | 4935168 | 768 | 0.016% |
| 47 | 19968 | 1597440 | 489 | 5026920 | 5031936 | 5016 | 0.100% |
| 48 | 20160 | 1612800 | 494 | 5078320 | 5080320 | 2000 | 0.039% |

(continued)

| Sequence number | L | M | r | $d_{in}$ | $d_{scr}$ | $d_{CP}$ | $OH_{CP}$ |
|---|---|---|---|---|---|---|---|
| 49 | 20736 | 1658880 | 508 | 5222240 | 5225472 | 3232 | 0.062% |
| 50 | 20928 | 1674240 | 513 | 5273640 | 5273856 | 216 | 0.004% |
| 51 | 21312 | 1704960 | 522 | 5366160 | 5370624 | 4464 | 0.083% |

It should be noted that, in some specific applications, CRC check may be first performed on the first data, and then pad insertion is performed. To facilitate reuse of a CRC operation used in an existing 800ZR standard, CRC check may be CRC-32. Other aspects are similar to those in the case (1). Table 3(b) below provides a plurality of {L, M, r} parameter combinations in this embodiment, and provides corresponding $d_{in}$, $d_{scr}$, $OH_{CP}$, p, $d_{CRC}$, and $d_{PAD}$ under the parameter combinations.

Table 3(b)

| Sequence number | L | M | r | $d_{in}$ | $d_{scr}$ | $OH_{CP}$ | p | $d_{CRC}$ | $d_{PAD}$ |
|---|---|---|---|---|---|---|---|---|---|
| 1 | 1920 | 153600 | 47 | 483160 | 483840 | 0.141% | 12 | 384 | 296 |
| 2 | 2496 | 199680 | 61 | 627080 | 628992 | 0.305% | 16 | 512 | 1400 |
| 3 | 3072 | 245760 | 75 | 771000 | 774144 | 0.408% | 19 | 608 | 2536 |
| 4 | 3648 | 291840 | 89 | 914920 | 919296 | 0.478% | 23 | 736 | 3640 |
| 5 | 3840 | 307200 | 94 | 966320 | 967680 | 0.141% | 24 | 768 | 592 |
| 6 | 4416 | 353280 | 108 | 1110240 | 1112832 | 0.233% | 27 | 864 | 1728 |
| 7 | 4992 | 399360 | 122 | 1254160 | 1257984 | 0.305% | 31 | 992 | 2832 |
| 8 | 5568 | 445440 | 136 | 1398080 | 1403136 | 0.362% | 34 | 1088 | 3968 |
| 9 | 5760 | 460800 | 141 | 1449480 | 1451520 | 0.141% | 36 | 1152 | 888 |
| 10 | 6336 | 506880 | 155 | 1593400 | 1596672 | 0.205% | 39 | 1248 | 2024 |
| 11 | 6912 | 552960 | 169 | 1737320 | 1741824 | 0.259% | 43 | 1376 | 3128 |
| 12 | 7104 | 568320 | 174 | 1788720 | 1790208 | 0.083% | 44 | 1408 | 80 |
| 13 | 7680 | 614400 | 188 | 1932640 | 1935360 | 0.141% | 47 | 1504 | 1216 |
| 14 | 8256 | 660480 | 202 | 2076560 | 2080512 | 0.190% | 51 | 1632 | 2320 |
| 15 | 9024 | 721920 | 221 | 2271880 | 2274048 | 0.095% | 56 | 1792 | 376 |
| 16 | 9600 | 768000 | 235 | 2415800 | 2419200 | 0.141% | 59 | 1888 | 1512 |
| 17 | 10176 | 814080 | 249 | 2559720 | 2564352 | 0.181% | 63 | 2016 | 2616 |
| 18 | 10944 | 875520 | 268 | 2755040 | 2757888 | 0.103% | 67 | 2144 | 704 |
| 19 | 11520 | 921600 | 282 | 2898960 | 2903040 | 0.141% | 71 | 2272 | 1808 |
| 20 | 12864 | 1029120 | 315 | 3238200 | 3241728 | 0.109% | 79 | 2528 | 1000 |
| 21 | 13440 | 1075200 | 329 | 3382120 | 3386880 | 0.141% | 83 | 2656 | 2104 |
| 22 | 14208 | 1136640 | 348 | 3577440 | 3580416 | 0.083% | 87 | 2784 | 192 |
| 23 | 14784 | 1182720 | 362 | 3721360 | 3725568 | 0.113% | 91 | 2912 | 1296 |
| 24 | 16128 | 1290240 | 395 | 4060600 | 4064256 | 0.090% | 99 | 3168 | 488 |
| 25 | 16704 | 1336320 | 409 | 4204520 | 4209408 | 0.116% | 103 | 3296 | 1592 |
| 26 | 18048 | 1443840 | 442 | 4543760 | 4548096 | 0.095% | 111 | 3552 | 784 |
| 27 | 19968 | 1597440 | 489 | 5026920 | 5031936 | 0.100% | 123 | 3936 | 1080 |
| 28 | 21312 | 1704960 | 522 | 5366160 | 5370624 | 0.083% | 131 | 4192 | 272 |

(4) It is considered that q = 10280, n = 80, k = 63, and t = 8.

In this case, an FEC encoding overhead is about 27%, and DP-16QAM modulation is used. Table 4(a) below provides a plurality of {L, M, r} parameter combinations, and provides corresponding $d_{in}$, $d_{scr}$, $d_{CP}$, and $OH_{CP}$ under the parameter combinations.

Table 4(a)

| Sequence number | L | M | r | $d_{in}$ | $d_{scr}$ | $d_{CP}$ | $OH_{CP}$ |
|---|---|---|---|---|---|---|---|
| 1 | 1920 | 153600 | 94 | 966320 | 967680 | 1360 | 0.141% |
| 2 | 2496 | 199680 | 122 | 1254160 | 1257984 | 3824 | 0.305% |
| 3 | 3072 | 245760 | 150 | 1542000 | 1548288 | 6288 | 0.408% |
| 4 | 3264 | 261120 | 160 | 1644800 | 1645056 | 256 | 0.016% |
| 5 | 3648 | 291840 | 178 | 1829840 | 1838592 | 8752 | 0.478% |
| 6 | 3840 | 307200 | 188 | 1932640 | 1935360 | 2720 | 0.141% |
| 7 | 4416 | 353280 | 216 | 2220480 | 2225664 | 5184 | 0.233% |
| 8 | 4992 | 399360 | 244 | 2508320 | 2515968 | 7648 | 0.305% |
| 9 | 5184 | 414720 | 254 | 2611120 | 2612736 | 1616 | 0.062% |
| 10 | 5568 | 445440 | 272 | 2796160 | 2806272 | 10112 | 0.362% |
| 11 | 5760 | 460800 | 282 | 2898960 | 2903040 | 4080 | 0.141% |
| 12 | 6336 | 506880 | 310 | 3186800 | 3193344 | 6544 | 0.205% |
| 13 | 6528 | 522240 | 320 | 3289600 | 3290112 | 512 | 0.016% |
| 14 | 6912 | 552960 | 338 | 3474640 | 3483648 | 9008 | 0.259% |
| 15 | 7104 | 568320 | 348 | 3577440 | 3580416 | 2976 | 0.083% |
| 16 | 7680 | 614400 | 376 | 3865280 | 3870720 | 5440 | 0.141% |
| 17 | 8256 | 660480 | 404 | 4153120 | 4161024 | 7904 | 0.190% |
| 18 | 8448 | 675840 | 414 | 4255920 | 4257792 | 1872 | 0.044% |
| 19 | 9024 | 721920 | 442 | 4543760 | 4548096 | 4336 | 0.095% |
| 20 | 9600 | 768000 | 470 | 4831600 | 4838400 | 6800 | 0.141% |
| 21 | 9792 | 783360 | 480 | 4934400 | 4935168 | 768 | 0.016% |
| 22 | 10176 | 814080 | 498 | 5119440 | 5128704 | 9264 | 0.181% |
| 23 | 10368 | 829440 | 508 | 5222240 | 5225472 | 3232 | 0.062% |
| 24 | 10944 | 875520 | 536 | 5510080 | 5515776 | 5696 | 0.103% |
| 25 | 11520 | 921600 | 564 | 5797920 | 5806080 | 8160 | 0.141% |
| 26 | 11712 | 936960 | 574 | 5900720 | 5902848 | 2128 | 0.036% |
| 27 | 12288 | 983040 | 602 | 6188560 | 6193152 | 4592 | 0.074% |
| 28 | 12864 | 1029120 | 630 | 6476400 | 6483456 | 7056 | 0.109% |
| 29 | 13056 | 1044480 | 640 | 6579200 | 6580224 | 1024 | 0.016% |
| 30 | 13440 | 1075200 | 658 | 6764240 | 6773760 | 9520 | 0.141% |
| 31 | 13632 | 1090560 | 668 | 6867040 | 6870528 | 3488 | 0.051% |
| 32 | 14208 | 1136640 | 696 | 7154880 | 7160832 | 5952 | 0.083% |
| 33 | 14784 | 1182720 | 724 | 7442720 | 7451136 | 8416 | 0.113% |
| 34 | 14976 | 1198080 | 734 | 7545520 | 7547904 | 2384 | 0.032% |
| 35 | 15552 | 1244160 | 762 | 7833360 | 7838208 | 4848 | 0.062% |
| 36 | 16128 | 1290240 | 790 | 8121200 | 8128512 | 7312 | 0.090% |

(continued)

| Sequence number | L | M | r | d<sub>in</sub> | d<sub>scr</sub> | d<sub>CP</sub> | OH<sub>CP</sub> |
|---|---|---|---|---|---|---|---|
| 37 | 16320 | 1305600 | 800 | 8224000 | 8225280 | 1280 | 0.016% |
| 38 | 16704 | 1336320 | 818 | 8409040 | 8418816 | 9776 | 0.116% |
| 39 | 16896 | 1351680 | 828 | 8511840 | 8515584 | 3744 | 0.044% |
| 40 | 17472 | 1397760 | 856 | 8799680 | 8805888 | 6208 | 0.071% |
| 41 | 17664 | 1413120 | 866 | 8902480 | 8902656 | 176 | 0.002% |
| 42 | 18048 | 1443840 | 884 | 9087520 | 9096192 | 8672 | 0.095% |
| 43 | 18240 | 1459200 | 894 | 9190320 | 9192960 | 2640 | 0.029% |
| 44 | 18816 | 1505280 | 922 | 9478160 | 9483264 | 5104 | 0.054% |
| 45 | 19392 | 1551360 | 950 | 9766000 | 9773568 | 7568 | 0.077% |
| 46 | 19584 | 1566720 | 960 | 9868800 | 9870336 | 1536 | 0.016% |
| 47 | 19968 | 1597440 | 978 | 10053840 | 10063872 | 10032 | 0.100% |
| 48 | 20160 | 1612800 | 988 | 10156640 | 10160640 | 4000 | 0.039% |
| 49 | 20736 | 1658880 | 1016 | 10444480 | 10450944 | 6464 | 0.062% |
| 50 | 20928 | 1674240 | 1026 | 10547280 | 10547712 | 432 | 0.004% |
| 51 | 21312 | 1704960 | 1044 | 10732320 | 10741248 | 8928 | 0.083% |

It should be noted that, in some specific applications, CRC check may be first performed on the first data, and then pad insertion is performed. To facilitate reuse of a CRC operation used in an existing 800ZR standard, CRC check may be CRC-32. Other aspects are similar to those in the case (1). Table 4(b) below provides a plurality of {L, M, r} parameter combinations in this embodiment, and provides corresponding $d_{in}$, $d_{scr}$, $OH_{CP}$, p, $d_{CRC}$, and $d_{PAD}$ under the parameter combinations.

Table 4(b)

| Sequence number | L | M | r | d<sub>in</sub> | d<sub>scr</sub> | OH<sub>CP</sub> | p | d<sub>CRC</sub> | d<sub>PAD</sub> |
|---|---|---|---|---|---|---|---|---|---|
| 1 | 1920 | 153600 | 94 | 966320 | 967680 | 0.141% | 24 | 768 | 592 |
| 2 | 2496 | 199680 | 122 | 1254160 | 1257984 | 0.305% | 31 | 992 | 2832 |
| 3 | 3072 | 245760 | 150 | 1542000 | 1548288 | 0.408% | 38 | 1216 | 5072 |
| 4 | 3648 | 291840 | 178 | 1829840 | 1838592 | 0.478% | 45 | 1440 | 7312 |
| 5 | 3840 | 307200 | 188 | 1932640 | 1935360 | 0.141% | 47 | 1504 | 1216 |
| 6 | 4416 | 353280 | 216 | 2220480 | 2225664 | 0.233% | 54 | 1728 | 3456 |
| 7 | 4992 | 399360 | 244 | 2508320 | 2515968 | 0.305% | 61 | 1952 | 5696 |
| 8 | 5568 | 445440 | 272 | 2796160 | 2806272 | 0.362% | 68 | 2176 | 7936 |
| 9 | 5760 | 460800 | 282 | 2898960 | 2903040 | 0.141% | 71 | 2272 | 1808 |
| 10 | 6336 | 506880 | 310 | 3186800 | 3193344 | 0.205% | 78 | 2496 | 4048 |
| 11 | 6912 | 552960 | 338 | 3474640 | 3483648 | 0.259% | 85 | 2720 | 6288 |
| 12 | 7104 | 568320 | 348 | 3577440 | 3580416 | 0.083% | 87 | 2784 | 192 |
| 13 | 7680 | 614400 | 376 | 3865280 | 3870720 | 0.141% | 94 | 3008 | 2432 |
| 14 | 8256 | 660480 | 404 | 4153120 | 4161024 | 0.190% | 101 | 3232 | 4672 |
| 15 | 9024 | 721920 | 442 | 4543760 | 4548096 | 0.095% | 111 | 3552 | 784 |
| 16 | 9600 | 768000 | 470 | 4831600 | 4838400 | 0.141% | 118 | 3776 | 3024 |
| 17 | 10176 | 814080 | 498 | 5119440 | 5128704 | 0.181% | 125 | 4000 | 5264 |

(continued)

| Sequence number | L | M | r | $d_{in}$ | $d_{scr}$ | $OH_{CP}$ | p | $d_{CRC}$ | $d_{PAD}$ |
|---|---|---|---|---|---|---|---|---|---|
| 18 | 10944 | 875520 | 536 | 5510080 | 5515776 | 0.103% | 134 | 4288 | 1408 |
| 19 | 11520 | 921600 | 564 | 5797920 | 5806080 | 0.141% | 141 | 4512 | 3648 |
| 20 | 12864 | 1029120 | 630 | 6476400 | 6483456 | 0.109% | 158 | 5056 | 2000 |
| 21 | 13440 | 1075200 | 658 | 6764240 | 6773760 | 0.141% | 165 | 5280 | 4240 |
| 22 | 14208 | 1136640 | 696 | 7154880 | 7160832 | 0.083% | 174 | 5568 | 384 |
| 23 | 14784 | 1182720 | 724 | 7442720 | 7451136 | 0.113% | 181 | 5792 | 2624 |
| 24 | 16128 | 1290240 | 790 | 8121200 | 8128512 | 0.090% | 198 | 6336 | 976 |
| 25 | 16704 | 1336320 | 818 | 8409040 | 8418816 | 0.116% | 205 | 6560 | 3216 |
| 26 | 18048 | 1443840 | 884 | 9087520 | 9096192 | 0.095% | 221 | 7072 | 1600 |
| 27 | 19968 | 1597440 | 978 | 10053840 | 10063872 | 0.100% | 245 | 7840 | 2192 |
| 28 | 21312 | 1704960 | 1044 | 10732320 | 10741248 | 0.083% | 261 | 8352 | 576 |

(5) It is considered that q = 2056, n = 96, k = 79, and t = 4.

In this case, an FEC encoding overhead is about 21.5%, and DP-QPSK modulation is used. Table 5(a) below provides a plurality of {L, M, r} parameter combinations, and provides corresponding $d_{in}$, $d_{scr}$, $d_{CP}$, and $OH_{CP}$ under the parameter combinations.

Table 5(a)

| Sequence number | L | M | r | $d_{in}$ | $d_{scr}$ | $d_{CP}$ | $OH_{CP}$ |
|---|---|---|---|---|---|---|---|
| 1 | 384 | 36864 | 59 | 121304 | 121344 | 40 | 0.033% |
| 2 | 768 | 73728 | 118 | 242608 | 242688 | 80 | 0.033% |
| 3 | 960 | 92160 | 147 | 302232 | 303360 | 1128 | 0.373% |
| 4 | 1152 | 110592 | 177 | 363912 | 364032 | 120 | 0.033% |
| 5 | 1344 | 129024 | 206 | 423536 | 424704 | 1168 | 0.276% |
| 6 | 1536 | 147456 | 236 | 485216 | 485376 | 160 | 0.033% |
| 7 | 1728 | 165888 | 265 | 544840 | 546048 | 1208 | 0.222% |
| 8 | 1920 | 184320 | 295 | 606520 | 606720 | 200 | 0.033% |
| 9 | 2112 | 202752 | 324 | 666144 | 667392 | 1248 | 0.187% |
| 10 | 2304 | 221184 | 354 | 727824 | 728064 | 240 | 0.033% |
| 11 | 2496 | 239616 | 383 | 787448 | 788736 | 1288 | 0.164% |
| 12 | 2688 | 258048 | 413 | 849128 | 849408 | 280 | 0.033% |
| 13 | 2880 | 276480 | 442 | 908752 | 910080 | 1328 | 0.146% |
| 14 | 3072 | 294912 | 472 | 970432 | 970752 | 320 | 0.033% |
| 15 | 3264 | 313344 | 501 | 1030056 | 1031424 | 1368 | 0.133% |
| 16 | 3456 | 331776 | 531 | 1091736 | 1092096 | 360 | 0.033% |
| 17 | 3648 | 350208 | 560 | 1151360 | 1152768 | 1408 | 0.122% |
| 18 | 3840 | 368640 | 590 | 1213040 | 1213440 | 400 | 0.033% |
| 19 | 4032 | 387072 | 619 | 1272664 | 1274112 | 1448 | 0.114% |
| 20 | 4224 | 405504 | 649 | 1334344 | 1334784 | 440 | 0.033% |
| 21 | 4416 | 423936 | 678 | 1393968 | 1395456 | 1488 | 0.107% |
| 22 | 4608 | 442368 | 708 | 1455648 | 1456128 | 480 | 0.033% |

(continued)

| Sequence number | L | M | r | $d_{in}$ | $d_{scr}$ | $d_{CP}$ | $OH_{CP}$ |
|---|---|---|---|---|---|---|---|
| 23 | 4800 | 460800 | 737 | 1515272 | 1516800 | 1528 | 0.101% |
| 24 | 4992 | 479232 | 767 | 1576952 | 1577472 | 520 | 0.033% |
| 25 | 5184 | 497664 | 796 | 1636576 | 1638144 | 1568 | 0.096% |
| 26 | 5376 | 516096 | 826 | 1698256 | 1698816 | 560 | 0.033% |
| 27 | 5568 | 534528 | 855 | 1757880 | 1759488 | 1608 | 0.091% |
| 28 | 5760 | 552960 | 885 | 1819560 | 1820160 | 600 | 0.033% |
| 29 | 5952 | 571392 | 914 | 1879184 | 1880832 | 1648 | 0.088% |
| 30 | 6144 | 589824 | 944 | 1940864 | 1941504 | 640 | 0.033% |
| 31 | 6336 | 608256 | 973 | 2000488 | 2002176 | 1688 | 0.084% |
| 32 | 6528 | 626688 | 1003 | 2062168 | 2062848 | 680 | 0.033% |
| 33 | 6720 | 645120 | 1032 | 2121792 | 2123520 | 1728 | 0.081% |
| 34 | 6912 | 663552 | 1062 | 2183472 | 2184192 | 720 | 0.033% |
| 35 | 7104 | 681984 | 1091 | 2243096 | 2244864 | 1768 | 0.079% |
| 36 | 1536 | 147456 | 235 | 483160 | 485376 | 2216 | 0.459% |
| 37 | 1920 | 184320 | 294 | 604464 | 606720 | 2256 | 0.373% |
| 38 | 2304 | 221184 | 353 | 725768 | 728064 | 2296 | 0.316% |
| 39 | 2688 | 258048 | 412 | 847072 | 849408 | 2336 | 0.276% |
| 40 | 3072 | 294912 | 471 | 968376 | 970752 | 2376 | 0.245% |
| 41 | 3456 | 331776 | 530 | 1089680 | 1092096 | 2416 | 0.222% |
| 42 | 3840 | 368640 | 589 | 1210984 | 1213440 | 2456 | 0.203% |
| 43 | 4224 | 405504 | 648 | 1332288 | 1334784 | 2496 | 0.187% |
| 44 | 4608 | 442368 | 707 | 1453592 | 1456128 | 2536 | 0.174% |
| 45 | 4992 | 479232 | 766 | 1574896 | 1577472 | 2576 | 0.164% |
| 46 | 5376 | 516096 | 825 | 1696200 | 1698816 | 2616 | 0.154% |
| 47 | 5760 | 552960 | 884 | 1817504 | 1820160 | 2656 | 0.146% |
| 48 | 6144 | 589824 | 943 | 1938808 | 1941504 | 2696 | 0.139% |
| 49 | 6528 | 626688 | 1002 | 2060112 | 2062848 | 2736 | 0.133% |
| 50 | 6912 | 663552 | 1061 | 2181416 | 2184192 | 2776 | 0.127% |

It should be noted that, in some specific applications, after the first data with r rows and q=2056 columns of bits is obtained from the received data sequence, CRC check is first performed, and then pad insertion is performed. To facilitate reuse of a CRC operation used in an existing 800ZR standard, CRC check may be CRC-32, and a length of a corresponding information bit for performing CRC check is not greater than 41120 bits. More specifically, when r is divisible by 20, an integer p=r/20, CRC-32 check is performed on a total of 41120 bits in every 20 rows of the first data, a parity bit whose length is 32 bits is added, CRC-32 check is repeatedly performed for p times, and $d_{CRC} = 32 \times p$ CRC parity bits are added in total. When r is indivisible by 20, $r_{F0} = 20$, $p = \lfloor r/20 \rfloor + 1$, and $r_{F1} = r - 20 \times \lfloor r/20 \rfloor$. Considering $0 < d_{CRC} = 32 \times p \le d_{CP}$, Table 5(b) below provides a plurality of {L, M, r} parameter combinations, and provides corresponding $d_{in}$, $d_{scr}$, $OH_{CP}$, p, $d_{CRC}$, and $d_{PAD}$ under the parameter combinations.

Table 5(b)

| Sequence number | L | M | r | $d_{in}$ | $d_{scr}$ | $OH_{CP}$ | p | $d_{CRC}$ | $d_{PAD}$ |
|---|---|---|---|---|---|---|---|---|---|
| 1 | 960 | 92160 | 147 | 302232 | 303360 | 0.373% | 8 | 256 | 872 |

(continued)

| Sequence number | L | M | r | $d_{in}$ | $d_{scr}$ | $OH_{CP}$ | p | $d_{CRC}$ | $d_{PAD}$ |
|---|---|---|---|---|---|---|---|---|---|
| 2 | 1344 | 129024 | 206 | 423536 | 424704 | 0.276% | 11 | 352 | 816 |
| 3 | 1728 | 165888 | 265 | 544840 | 546048 | 0.222% | 14 | 448 | 760 |
| 4 | 2112 | 202752 | 324 | 666144 | 667392 | 0.187% | 17 | 544 | 704 |
| 5 | 2496 | 239616 | 383 | 787448 | 788736 | 0.164% | 20 | 640 | 648 |
| 6 | 2880 | 276480 | 442 | 908752 | 910080 | 0.146% | 23 | 736 | 592 |
| 7 | 3264 | 313344 | 501 | 1030056 | 1031424 | 0.133% | 26 | 832 | 536 |
| 8 | 3648 | 350208 | 560 | 1151360 | 1152768 | 0.122% | 28 | 896 | 512 |
| 9 | 4032 | 387072 | 619 | 1272664 | 1274112 | 0.114% | 31 | 992 | 456 |
| 10 | 4416 | 423936 | 678 | 1393968 | 1395456 | 0.107% | 34 | 1088 | 400 |
| 11 | 4800 | 460800 | 737 | 1515272 | 1516800 | 0.101% | 37 | 1184 | 344 |
| 12 | 5184 | 497664 | 796 | 1636576 | 1638144 | 0.096% | 40 | 1280 | 288 |
| 13 | 5568 | 534528 | 855 | 1757880 | 1759488 | 0.091% | 43 | 1376 | 232 |
| 14 | 5952 | 571392 | 914 | 1879184 | 1880832 | 0.088% | 46 | 1472 | 176 |
| 15 | 6336 | 608256 | 973 | 2000488 | 2002176 | 0.084% | 49 | 1568 | 120 |
| 16 | 6720 | 645120 | 1032 | 2121792 | 2123520 | 0.081% | 52 | 1664 | 64 |
| 17 | 7104 | 681984 | 1091 | 2243096 | 2244864 | 0.079% | 55 | 1760 | 8 |
| 18 | 1536 | 147456 | 235 | 483160 | 485376 | 0.459% | 12 | 384 | 1832 |
| 19 | 1920 | 184320 | 294 | 604464 | 606720 | 0.373% | 15 | 480 | 1776 |
| 20 | 2304 | 221184 | 353 | 725768 | 728064 | 0.316% | 18 | 576 | 1720 |
| 21 | 2688 | 258048 | 412 | 847072 | 849408 | 0.276% | 21 | 672 | 1664 |
| 22 | 3072 | 294912 | 471 | 968376 | 970752 | 0.245% | 24 | 768 | 1608 |
| 23 | 3456 | 331776 | 530 | 1089680 | 1092096 | 0.222% | 27 | 864 | 1552 |
| 24 | 3840 | 368640 | 589 | 1210984 | 1213440 | 0.203% | 30 | 960 | 1496 |
| 25 | 4224 | 405504 | 648 | 1332288 | 1334784 | 0.187% | 33 | 1056 | 1440 |
| 26 | 4608 | 442368 | 707 | 1453592 | 1456128 | 0.174% | 36 | 1152 | 1384 |
| 27 | 4992 | 479232 | 766 | 1574896 | 1577472 | 0.164% | 39 | 1248 | 1328 |
| 28 | 5376 | 516096 | 825 | 1696200 | 1698816 | 0.154% | 42 | 1344 | 1272 |
| 29 | 5760 | 552960 | 884 | 1817504 | 1820160 | 0.146% | 45 | 1440 | 1216 |
| 30 | 6144 | 589824 | 943 | 1938808 | 1941504 | 0.139% | 48 | 1536 | 1160 |
| 31 | 6528 | 626688 | 1002 | 2060112 | 2062848 | 0.133% | 51 | 1632 | 1104 |
| 32 | 6912 | 663552 | 1061 | 2181416 | 2184192 | 0.127% | 54 | 1728 | 1048 |

(6) It is considered that q = 2056, n = 96, k = 79, and t = 8.

In this case, an FEC encoding overhead is about 21.5%, and DP-16QAM modulation is used. Table 6(a) below provides a plurality of {L, M, r} parameter combinations, and provides corresponding $d_{in}$, $d_{scr}$, $d_{CP}$, and $OH_{CP}$ under the parameter combinations.

Table 6(a)

| Sequence number | L | M | r | $d_{in}$ | $d_{scr}$ | $d_{CP}$ | $OH_{CP}$ |
|---|---|---|---|---|---|---|---|
| 1 | 384 | 36864 | 118 | 242608 | 242688 | 80 | 0.033% |
| 2 | 768 | 73728 | 236 | 485216 | 485376 | 160 | 0.033% |

(continued)

| Sequence number | L | M | r | $d_{in}$ | $d_{scr}$ | $d_{CP}$ | $OH_{CP}$ |
|---|---|---|---|---|---|---|---|
| 3 | 960 | 92160 | 294 | 604464 | 606720 | 2256 | 0.373% |
| 4 | 1152 | 110592 | 354 | 727824 | 728064 | 240 | 0.033% |
| 5 | 1344 | 129024 | 412 | 847072 | 849408 | 2336 | 0.276% |
| 6 | 1536 | 147456 | 472 | 970432 | 970752 | 320 | 0.033% |
| 7 | 1728 | 165888 | 530 | 1089680 | 1092096 | 2416 | 0.222% |
| 8 | 1920 | 184320 | 590 | 1213040 | 1213440 | 400 | 0.033% |
| 9 | 2112 | 202752 | 648 | 1332288 | 1334784 | 2496 | 0.187% |
| 10 | 2304 | 221184 | 708 | 1455648 | 1456128 | 480 | 0.033% |
| 11 | 2496 | 239616 | 766 | 1574896 | 1577472 | 2576 | 0.164% |
| 12 | 2688 | 258048 | 826 | 1698256 | 1698816 | 560 | 0.033% |
| 13 | 2880 | 276480 | 884 | 1817504 | 1820160 | 2656 | 0.146% |
| 14 | 3072 | 294912 | 944 | 1940864 | 1941504 | 640 | 0.033% |
| 15 | 3264 | 313344 | 1002 | 2060112 | 2062848 | 2736 | 0.133% |
| 16 | 3456 | 331776 | 1062 | 2183472 | 2184192 | 720 | 0.033% |
| 17 | 3648 | 350208 | 1120 | 2302720 | 2305536 | 2816 | 0.122% |
| 18 | 3840 | 368640 | 1180 | 2426080 | 2426880 | 800 | 0.033% |
| 19 | 4032 | 387072 | 1238 | 2545328 | 2548224 | 2896 | 0.114% |
| 20 | 4224 | 405504 | 1298 | 2668688 | 2669568 | 880 | 0.033% |
| 21 | 4416 | 423936 | 1356 | 2787936 | 2790912 | 2976 | 0.107% |
| 22 | 4608 | 442368 | 1416 | 2911296 | 2912256 | 960 | 0.033% |
| 23 | 4800 | 460800 | 1474 | 3030544 | 3033600 | 3056 | 0.101% |
| 24 | 4992 | 479232 | 1534 | 3153904 | 3154944 | 1040 | 0.033% |
| 25 | 5184 | 497664 | 1592 | 3273152 | 3276288 | 3136 | 0.096% |
| 26 | 5376 | 516096 | 1652 | 3396512 | 3397632 | 1120 | 0.033% |
| 27 | 5568 | 534528 | 1710 | 3515760 | 3518976 | 3216 | 0.091% |
| 28 | 5760 | 552960 | 1770 | 3639120 | 3640320 | 1200 | 0.033% |
| 29 | 5952 | 571392 | 1828 | 3758368 | 3761664 | 3296 | 0.088% |
| 30 | 6144 | 589824 | 1888 | 3881728 | 3883008 | 1280 | 0.033% |
| 31 | 6336 | 608256 | 1946 | 4000976 | 4004352 | 3376 | 0.084% |
| 32 | 6528 | 626688 | 2006 | 4124336 | 4125696 | 1360 | 0.033% |
| 33 | 6720 | 645120 | 2064 | 4243584 | 4247040 | 3456 | 0.081% |
| 34 | 6912 | 663552 | 2124 | 4366944 | 4368384 | 1440 | 0.033% |
| 35 | 7104 | 681984 | 2182 | 4486192 | 4489728 | 3536 | 0.079% |
| 36 | 1536 | 147456 | 470 | 966320 | 970752 | 4432 | 0.459% |
| 37 | 1920 | 184320 | 588 | 1208928 | 1213440 | 4512 | 0.373% |
| 38 | 2304 | 221184 | 706 | 1451536 | 1456128 | 4592 | 0.316% |
| 39 | 2688 | 258048 | 824 | 1694144 | 1698816 | 4672 | 0.276% |
| 40 | 3072 | 294912 | 942 | 1936752 | 1941504 | 4752 | 0.245% |
| 41 | 3456 | 331776 | 1060 | 2179360 | 2184192 | 4832 | 0.222% |

(continued)

| Sequence number | L | M | r | $d_{in}$ | $d_{scr}$ | $d_{CP}$ | $OH_{CP}$ |
|---|---|---|---|---|---|---|---|
| 42 | 3840 | 368640 | 1178 | 2421968 | 2426880 | 4912 | 0.203% |
| 43 | 4224 | 405504 | 1296 | 2664576 | 2669568 | 4992 | 0.187% |
| 44 | 4608 | 442368 | 1414 | 2907184 | 2912256 | 5072 | 0.174% |
| 45 | 4992 | 479232 | 1532 | 3149792 | 3154944 | 5152 | 0.164% |
| 46 | 5376 | 516096 | 1650 | 3392400 | 3397632 | 5232 | 0.154% |
| 47 | 5760 | 552960 | 1768 | 3635008 | 3640320 | 5312 | 0.146% |
| 48 | 6144 | 589824 | 1886 | 3877616 | 3883008 | 5392 | 0.139% |
| 49 | 6528 | 626688 | 2004 | 4120224 | 4125696 | 5472 | 0.133% |
| 50 | 6912 | 663552 | 2122 | 4362832 | 4368384 | 5552 | 0.127% |

It should be noted that, in some specific applications, CRC check may be first performed on the first data, and then pad insertion is performed. To facilitate reuse of a CRC operation used in an existing 800ZR standard, CRC check may be CRC-32. Other aspects are similar to those in the case (1). Table 6(b) below provides a plurality of {L, M, r} parameter combinations in this embodiment, and provides corresponding $d_{in}$, $d_{scr}$, $OH_{CP}$, p, $d_{CRC}$, and $d_{PAD}$ under the parameter combinations.

Table 6(b)

| Sequence number | L | M | r | $d_{in}$ | $d_{scr}$ | $OH_{CP}$ | p | $d_{CRC}$ | $d_{PAD}$ |
|---|---|---|---|---|---|---|---|---|---|
| 1 | 960 | 92160 | 294 | 604464 | 606720 | 0.373% | 15 | 480 | 1776 |
| 2 | 1344 | 129024 | 412 | 847072 | 849408 | 0.276% | 21 | 672 | 1664 |
| 3 | 1728 | 165888 | 530 | 1089680 | 1092096 | 0.222% | 27 | 864 | 1552 |
| 4 | 2112 | 202752 | 648 | 1332288 | 1334784 | 0.187% | 33 | 1056 | 1440 |
| 5 | 2496 | 239616 | 766 | 1574896 | 1577472 | 0.164% | 39 | 1248 | 1328 |
| 6 | 2880 | 276480 | 884 | 1817504 | 1820160 | 0.146% | 45 | 1440 | 1216 |
| 7 | 3264 | 313344 | 1002 | 2060112 | 2062848 | 0.133% | 51 | 1632 | 1104 |
| 8 | 3648 | 350208 | 1120 | 2302720 | 2305536 | 0.122% | 56 | 1792 | 1024 |
| 9 | 4032 | 387072 | 1238 | 2545328 | 2548224 | 0.114% | 62 | 1984 | 912 |
| 10 | 4416 | 423936 | 1356 | 2787936 | 2790912 | 0.107% | 68 | 2176 | 800 |
| 11 | 4800 | 460800 | 1474 | 3030544 | 3033600 | 0.101% | 74 | 2368 | 688 |
| 12 | 5184 | 497664 | 1592 | 3273152 | 3276288 | 0.096% | 80 | 2560 | 576 |
| 13 | 5568 | 534528 | 1710 | 3515760 | 3518976 | 0.091% | 86 | 2752 | 464 |
| 14 | 5952 | 571392 | 1828 | 3758368 | 3761664 | 0.088% | 92 | 2944 | 352 |
| 15 | 6336 | 608256 | 1946 | 4000976 | 4004352 | 0.084% | 98 | 3136 | 240 |
| 16 | 6720 | 645120 | 2064 | 4243584 | 4247040 | 0.081% | 104 | 3328 | 128 |
| 17 | 7104 | 681984 | 2182 | 4486192 | 4489728 | 0.079% | 110 | 3520 | 16 |
| 18 | 1536 | 147456 | 470 | 966320 | 970752 | 0.459% | 24 | 768 | 3664 |
| 19 | 1920 | 184320 | 588 | 1208928 | 1213440 | 0.373% | 30 | 960 | 3552 |
| 20 | 2304 | 221184 | 706 | 1451536 | 1456128 | 0.316% | 36 | 1152 | 3440 |
| 21 | 2688 | 258048 | 824 | 1694144 | 1698816 | 0.276% | 42 | 1344 | 3328 |
| 22 | 3072 | 294912 | 942 | 1936752 | 1941504 | 0.245% | 48 | 1536 | 3216 |
| 23 | 3456 | 331776 | 1060 | 2179360 | 2184192 | 0.222% | 53 | 1696 | 3136 |

(continued)

| Sequence number | L | M | r | $d_{in}$ | $d_{scr}$ | $OH_{CP}$ | p | $d_{CRC}$ | $d_{PAD}$ |
|---|---|---|---|---|---|---|---|---|---|
| 24 | 3840 | 368640 | 1178 | 2421968 | 2426880 | 0.203% | 59 | 1888 | 3024 |
| 25 | 4224 | 405504 | 1296 | 2664576 | 2669568 | 0.187% | 65 | 2080 | 2912 |
| 26 | 4608 | 442368 | 1414 | 2907184 | 2912256 | 0.174% | 71 | 2272 | 2800 |
| 27 | 4992 | 479232 | 1532 | 3149792 | 3154944 | 0.164% | 77 | 2464 | 2688 |
| 28 | 5376 | 516096 | 1650 | 3392400 | 3397632 | 0.154% | 83 | 2656 | 2576 |
| 29 | 5760 | 552960 | 1768 | 3635008 | 3640320 | 0.146% | 89 | 2848 | 2464 |
| 30 | 6144 | 589824 | 1886 | 3877616 | 3883008 | 0.139% | 95 | 3040 | 2352 |
| 31 | 6528 | 626688 | 2004 | 4120224 | 4125696 | 0.133% | 101 | 3232 | 2240 |
| 32 | 6912 | 663552 | 2122 | 4362832 | 4368384 | 0.127% | 107 | 3424 | 2128 |

(7) It is considered that q = 2056, n = 80, k = 63, and t = 4.

In this case, an FEC encoding overhead is about 27%, and DP-QPSK modulation is used. Table 7(a) below provides a plurality of {L, M, r} parameter combinations, and provides corresponding $d_{in}$, $d_{scr}$, $d_{CP}$, and $OH_{CP}$ under the parameter combinations.

Table 7(a)

| Sequence number | L | M | r | $d_{in}$ | $d_{scr}$ | $d_{CP}$ | $OH_{CP}$ |
|---|---|---|---|---|---|---|---|
| 1 | 384 | 30720 | 47 | 96632 | 96768 | 136 | 0.141% |
| 2 | 768 | 61440 | 94 | 193264 | 193536 | 272 | 0.141% |
| 3 | 1152 | 92160 | 141 | 289896 | 290304 | 408 | 0.141% |
| 4 | 1344 | 107520 | 164 | 337184 | 338688 | 1504 | 0.446% |
| 5 | 1536 | 122880 | 188 | 386528 | 387072 | 544 | 0.141% |
| 6 | 1728 | 138240 | 211 | 433816 | 435456 | 1640 | 0.378% |
| 7 | 1920 | 153600 | 235 | 483160 | 483840 | 680 | 0.141% |
| 8 | 2112 | 168960 | 258 | 530448 | 532224 | 1776 | 0.335% |
| 9 | 2304 | 184320 | 282 | 579792 | 580608 | 816 | 0.141% |
| 10 | 2496 | 199680 | 305 | 627080 | 628992 | 1912 | 0.305% |
| 11 | 2688 | 215040 | 329 | 676424 | 677376 | 952 | 0.141% |
| 12 | 2880 | 230400 | 352 | 723712 | 725760 | 2048 | 0.283% |
| 13 | 3072 | 245760 | 376 | 773056 | 774144 | 1088 | 0.141% |
| 14 | 3264 | 261120 | 400 | 822400 | 822528 | 128 | 0.016% |
| 15 | 3456 | 276480 | 423 | 869688 | 870912 | 1224 | 0.141% |
| 16 | 3648 | 291840 | 447 | 919032 | 919296 | 264 | 0.029% |
| 17 | 3840 | 307200 | 470 | 966320 | 967680 | 1360 | 0.141% |
| 18 | 4032 | 322560 | 494 | 1015664 | 1016064 | 400 | 0.039% |
| 19 | 4224 | 337920 | 517 | 1062952 | 1064448 | 1496 | 0.141% |
| 20 | 4416 | 353280 | 541 | 1112296 | 1112832 | 536 | 0.048% |
| 21 | 4608 | 368640 | 564 | 1159584 | 1161216 | 1632 | 0.141% |
| 22 | 4800 | 384000 | 588 | 1208928 | 1209600 | 672 | 0.056% |
| 23 | 4992 | 399360 | 611 | 1256216 | 1257984 | 1768 | 0.141% |
| 24 | 5184 | 414720 | 635 | 1305560 | 1306368 | 808 | 0.062% |

(continued)

| Sequence number | L | M | r | $d_{in}$ | $d_{scr}$ | $d_{CP}$ | $OH_{CP}$ |
|---|---|---|---|---|---|---|---|
| 25 | 5376 | 430080 | 658 | 1352848 | 1354752 | 1904 | 0.141% |
| 26 | 5568 | 445440 | 682 | 1402192 | 1403136 | 944 | 0.067% |
| 27 | 5760 | 460800 | 705 | 1449480 | 1451520 | 2040 | 0.141% |
| 28 | 5952 | 476160 | 729 | 1498824 | 1499904 | 1080 | 0.072% |
| 29 | 6144 | 491520 | 753 | 1548168 | 1548288 | 120 | 0.008% |
| 30 | 6336 | 506880 | 776 | 1595456 | 1596672 | 1216 | 0.076% |
| 31 | 6528 | 522240 | 800 | 1644800 | 1645056 | 256 | 0.016% |
| 32 | 6720 | 537600 | 823 | 1692088 | 1693440 | 1352 | 0.080% |
| 33 | 6912 | 552960 | 847 | 1741432 | 1741824 | 392 | 0.023% |
| 34 | 7104 | 568320 | 870 | 1788720 | 1790208 | 1488 | 0.083% |
| 35 | 7296 | 583680 | 894 | 1838064 | 1838592 | 528 | 0.029% |
| 36 | 7488 | 599040 | 917 | 1885352 | 1886976 | 1624 | 0.086% |
| 37 | 7680 | 614400 | 941 | 1934696 | 1935360 | 664 | 0.034% |
| 38 | 7872 | 629760 | 964 | 1981984 | 1983744 | 1760 | 0.089% |
| 39 | 8064 | 645120 | 988 | 2031328 | 2032128 | 800 | 0.039% |
| 40 | 8256 | 660480 | 1011 | 2078616 | 2080512 | 1896 | 0.091% |
| 41 | 8448 | 675840 | 1035 | 2127960 | 2128896 | 936 | 0.044% |
| 42 | 8640 | 691200 | 1058 | 2175248 | 2177280 | 2032 | 0.093% |
| 43 | 3264 | 261120 | 399 | 820344 | 822528 | 2184 | 0.266% |
| 44 | 3648 | 291840 | 446 | 916976 | 919296 | 2320 | 0.253% |
| 45 | 4032 | 322560 | 493 | 1013608 | 1016064 | 2456 | 0.242% |
| 46 | 4416 | 353280 | 540 | 1110240 | 1112832 | 2592 | 0.233% |
| 47 | 4800 | 384000 | 587 | 1206872 | 1209600 | 2728 | 0.226% |
| 48 | 5184 | 414720 | 634 | 1303504 | 1306368 | 2864 | 0.220% |
| 49 | 5568 | 445440 | 681 | 1400136 | 1403136 | 3000 | 0.214% |
| 50 | 5952 | 476160 | 728 | 1496768 | 1499904 | 3136 | 0.210% |
| 51 | 6144 | 491520 | 752 | 1546112 | 1548288 | 2176 | 0.141% |
| 52 | 6336 | 506880 | 775 | 1593400 | 1596672 | 3272 | 0.205% |
| 53 | 6528 | 522240 | 799 | 1642744 | 1645056 | 2312 | 0.141% |
| 54 | 6912 | 552960 | 846 | 1739376 | 1741824 | 2448 | 0.141% |
| 55 | 7296 | 583680 | 893 | 1836008 | 1838592 | 2584 | 0.141% |
| 56 | 7680 | 614400 | 940 | 1932640 | 1935360 | 2720 | 0.141% |
| 57 | 8064 | 645120 | 987 | 2029272 | 2032128 | 2856 | 0.141% |
| 58 | 8448 | 675840 | 1034 | 2125904 | 2128896 | 2992 | 0.141% |
| 59 | 8832 | 706560 | 1081 | 2222536 | 2225664 | 3128 | 0.141% |
| 60 | 9024 | 721920 | 1105 | 2271880 | 2274048 | 2168 | 0.095% |

It should be noted that, in some specific applications, CRC check may be first performed on the first data, and then pad insertion is performed. To facilitate reuse of a CRC operation used in an existing 800ZR standard, CRC check may be CRC-32. Other aspects are similar to those in the case (1). Table 7(b) below provides a plurality of {L, M, r} parameter combinations in this embodiment, and provides corresponding $d_{in}$, $d_{scr}$, $OH_{CP}$, p, $d_{CRC}$, and $d_{PAD}$ under the parameter combinations.

Table 7(b)

| Sequence number | L | M | r | $d_{in}$ | $d_{scr}$ | $OH_{CP}$ | p | $d_{CRC}$ | $d_{PAD}$ |
|---|---|---|---|---|---|---|---|---|---|
| 1 | 384 | 30720 | 47 | 96632 | 96768 | 0.141% | 3 | 96 | 40 |
| 2 | 768 | 61440 | 94 | 193264 | 193536 | 0.141% | 5 | 160 | 112 |
| 3 | 1152 | 92160 | 141 | 289896 | 290304 | 0.141% | 8 | 256 | 152 |
| 4 | 1344 | 107520 | 164 | 337184 | 338688 | 0.446% | 9 | 288 | 1216 |
| 5 | 1536 | 122880 | 188 | 386528 | 387072 | 0.141% | 10 | 320 | 224 |
| 6 | 1728 | 138240 | 211 | 433816 | 435456 | 0.378% | 11 | 352 | 1288 |
| 7 | 1920 | 153600 | 235 | 483160 | 483840 | 0.141% | 12 | 384 | 296 |
| 8 | 2112 | 168960 | 258 | 530448 | 532224 | 0.335% | 13 | 416 | 1360 |
| 9 | 2304 | 184320 | 282 | 579792 | 580608 | 0.141% | 15 | 480 | 336 |
| 10 | 2496 | 199680 | 305 | 627080 | 628992 | 0.305% | 16 | 512 | 1400 |
| 11 | 2688 | 215040 | 329 | 676424 | 677376 | 0.141% | 17 | 544 | 408 |
| 12 | 2880 | 230400 | 352 | 723712 | 725760 | 0.283% | 18 | 576 | 1472 |
| 13 | 3072 | 245760 | 376 | 773056 | 774144 | 0.141% | 19 | 608 | 480 |
| 14 | 3456 | 276480 | 423 | 869688 | 870912 | 0.141% | 22 | 704 | 520 |
| 15 | 3840 | 307200 | 470 | 966320 | 967680 | 0.141% | 24 | 768 | 592 |
| 16 | 4224 | 337920 | 517 | 1062952 | 1064448 | 0.141% | 26 | 832 | 664 |
| 17 | 4608 | 368640 | 564 | 1159584 | 1161216 | 0.141% | 29 | 928 | 704 |
| 18 | 4992 | 399360 | 611 | 1256216 | 1257984 | 0.141% | 31 | 992 | 776 |
| 19 | 5376 | 430080 | 658 | 1352848 | 1354752 | 0.141% | 33 | 1056 | 848 |
| 20 | 5760 | 460800 | 705 | 1449480 | 1451520 | 0.141% | 36 | 1152 | 888 |
| 21 | 6720 | 537600 | 823 | 1692088 | 1693440 | 0.080% | 42 | 1344 | 8 |
| 22 | 7104 | 568320 | 870 | 1788720 | 1790208 | 0.083% | 44 | 1408 | 80 |
| 23 | 7488 | 599040 | 917 | 1885352 | 1886976 | 0.086% | 46 | 1472 | 152 |
| 24 | 7872 | 629760 | 964 | 1981984 | 1983744 | 0.089% | 49 | 1568 | 192 |
| 25 | 8256 | 660480 | 1011 | 2078616 | 2080512 | 0.091% | 51 | 1632 | 264 |
| 26 | 8640 | 691200 | 1058 | 2175248 | 2177280 | 0.093% | 53 | 1696 | 336 |
| 27 | 3264 | 261120 | 399 | 820344 | 822528 | 0.266% | 20 | 640 | 1544 |
| 28 | 3648 | 291840 | 446 | 916976 | 919296 | 0.253% | 23 | 736 | 1584 |
| 29 | 4032 | 322560 | 493 | 1013608 | 1016064 | 0.242% | 25 | 800 | 1656 |
| 30 | 4416 | 353280 | 540 | 1110240 | 1112832 | 0.233% | 27 | 864 | 1728 |
| 31 | 4800 | 384000 | 587 | 1206872 | 1209600 | 0.226% | 30 | 960 | 1768 |
| 32 | 5184 | 414720 | 634 | 1303504 | 1306368 | 0.220% | 32 | 1024 | 1840 |
| 33 | 5568 | 445440 | 681 | 1400136 | 1403136 | 0.214% | 35 | 1120 | 1880 |
| 34 | 5952 | 476160 | 728 | 1496768 | 1499904 | 0.210% | 37 | 1184 | 1952 |
| 35 | 6144 | 491520 | 752 | 1546112 | 1548288 | 0.141% | 38 | 1216 | 960 |
| 36 | 6336 | 506880 | 775 | 1593400 | 1596672 | 0.205% | 39 | 1248 | 2024 |
| 37 | 6528 | 522240 | 799 | 1642744 | 1645056 | 0.141% | 40 | 1280 | 1032 |

(continued)

| Sequence number | L | M | r | $d_{in}$ | $d_{scr}$ | $OH_{CP}$ | p | $d_{CRC}$ | $d_{PAD}$ |
|---|---|---|---|---|---|---|---|---|---|
| 38 | 6912 | 552960 | 846 | 1739376 | 1741824 | 0.141% | 43 | 1376 | 1072 |
| 39 | 7296 | 583680 | 893 | 1836008 | 1838592 | 0.141% | 45 | 1440 | 1144 |
| 40 | 7680 | 614400 | 940 | 1932640 | 1935360 | 0.141% | 47 | 1504 | 1216 |
| 41 | 8064 | 645120 | 987 | 2029272 | 2032128 | 0.141% | 50 | 1600 | 1256 |
| 42 | 8448 | 675840 | 1034 | 2125904 | 2128896 | 0.141% | 52 | 1664 | 1328 |
| 43 | 8832 | 706560 | 1081 | 2222536 | 2225664 | 0.141% | 55 | 1760 | 1368 |
| 44 | 9024 | 721920 | 1105 | 2271880 | 2274048 | 0.095% | 56 | 1792 | 376 |

(8) It is considered that q = 2056, n = 80, k = 63, and t = 8.

In this case, an FEC encoding overhead is about 27%, and DP-16QAM modulation is used. Table 8(a) below provides a plurality of {L, M, r} parameter combinations, and provides corresponding $d_{in}$, $d_{scr}$, $d_{CP}$, and $OH_{CP}$ under the parameter combinations.

Table 8(a)

| Sequence number | L | M | r | $d_{in}$ | $d_{scr}$ | $d_{CP}$ | $OH_{CP}$ |
|---|---|---|---|---|---|---|---|
| 1 | 384 | 30720 | 94 | 193264 | 193536 | 272 | 0.141% |
| 2 | 768 | 61440 | 188 | 386528 | 387072 | 544 | 0.141% |
| 3 | 1152 | 92160 | 282 | 579792 | 580608 | 816 | 0.141% |
| 4 | 1344 | 107520 | 328 | 674368 | 677376 | 3008 | 0.446% |
| 5 | 1536 | 122880 | 376 | 773056 | 774144 | 1088 | 0.141% |
| 6 | 1728 | 138240 | 422 | 867632 | 870912 | 3280 | 0.378% |
| 7 | 1920 | 153600 | 470 | 966320 | 967680 | 1360 | 0.141% |
| 8 | 2112 | 168960 | 516 | 1060896 | 1064448 | 3552 | 0.335% |
| 9 | 2304 | 184320 | 564 | 1159584 | 1161216 | 1632 | 0.141% |
| 10 | 2496 | 199680 | 610 | 1254160 | 1257984 | 3824 | 0.305% |
| 11 | 2688 | 215040 | 658 | 1352848 | 1354752 | 1904 | 0.141% |
| 12 | 2880 | 230400 | 704 | 1447424 | 1451520 | 4096 | 0.283% |
| 13 | 3072 | 245760 | 752 | 1546112 | 1548288 | 2176 | 0.141% |
| 14 | 3264 | 261120 | 800 | 1644800 | 1645056 | 256 | 0.016% |
| 15 | 3456 | 276480 | 846 | 1739376 | 1741824 | 2448 | 0.141% |
| 16 | 3648 | 291840 | 894 | 1838064 | 1838592 | 528 | 0.029% |
| 17 | 3840 | 307200 | 940 | 1932640 | 1935360 | 2720 | 0.141% |
| 18 | 4032 | 322560 | 988 | 2031328 | 2032128 | 800 | 0.039% |
| 19 | 4224 | 337920 | 1034 | 2125904 | 2128896 | 2992 | 0.141% |
| 20 | 4416 | 353280 | 1082 | 2224592 | 2225664 | 1072 | 0.048% |
| 21 | 4608 | 368640 | 1128 | 2319168 | 2322432 | 3264 | 0.141% |
| 22 | 4800 | 384000 | 1176 | 2417856 | 2419200 | 1344 | 0.056% |
| 23 | 4992 | 399360 | 1222 | 2512432 | 2515968 | 3536 | 0.141% |
| 24 | 5184 | 414720 | 1270 | 2611120 | 2612736 | 1616 | 0.062% |
| 25 | 5376 | 430080 | 1316 | 2705696 | 2709504 | 3808 | 0.141% |
| 26 | 5568 | 445440 | 1364 | 2804384 | 2806272 | 1888 | 0.067% |

(continued)

| Sequence number | L | M | r | d_in | d_scr | d_CP | OH_CP |
|---|---|---|---|---|---|---|---|
| 27 | 5760 | 460800 | 1410 | 2898960 | 2903040 | 4080 | 0.141% |
| 28 | 5952 | 476160 | 1458 | 2997648 | 2999808 | 2160 | 0.072% |
| 29 | 6144 | 491520 | 1506 | 3096336 | 3096576 | 240 | 0.008% |
| 30 | 6336 | 506880 | 1552 | 3190912 | 3193344 | 2432 | 0.076% |
| 31 | 6528 | 522240 | 1600 | 3289600 | 3290112 | 512 | 0.016% |
| 32 | 6720 | 537600 | 1646 | 3384176 | 3386880 | 2704 | 0.080% |
| 33 | 6912 | 552960 | 1694 | 3482864 | 3483648 | 784 | 0.023% |
| 34 | 7104 | 568320 | 1740 | 3577440 | 3580416 | 2976 | 0.083% |
| 35 | 7296 | 583680 | 1788 | 3676128 | 3677184 | 1056 | 0.029% |
| 36 | 7488 | 599040 | 1834 | 3770704 | 3773952 | 3248 | 0.086% |
| 37 | 7680 | 614400 | 1882 | 3869392 | 3870720 | 1328 | 0.034% |
| 38 | 7872 | 629760 | 1928 | 3963968 | 3967488 | 3520 | 0.089% |
| 39 | 8064 | 645120 | 1976 | 4062656 | 4064256 | 1600 | 0.039% |
| 40 | 8256 | 660480 | 2022 | 4157232 | 4161024 | 3792 | 0.091% |
| 41 | 8448 | 675840 | 2070 | 4255920 | 4257792 | 1872 | 0.044% |
| 42 | 8640 | 691200 | 2116 | 4350496 | 4354560 | 4064 | 0.093% |
| 43 | 3264 | 261120 | 798 | 1640688 | 1645056 | 4368 | 0.266% |
| 44 | 3648 | 291840 | 892 | 1833952 | 1838592 | 4640 | 0.253% |
| 45 | 4032 | 322560 | 986 | 2027216 | 2032128 | 4912 | 0.242% |
| 46 | 4416 | 353280 | 1080 | 2220480 | 2225664 | 5184 | 0.233% |
| 47 | 4800 | 384000 | 1174 | 2413744 | 2419200 | 5456 | 0.226% |
| 48 | 5184 | 414720 | 1268 | 2607008 | 2612736 | 5728 | 0.220% |
| 49 | 5568 | 445440 | 1362 | 2800272 | 2806272 | 6000 | 0.214% |
| 50 | 5952 | 476160 | 1456 | 2993536 | 2999808 | 6272 | 0.210% |
| 51 | 6144 | 491520 | 1504 | 3092224 | 3096576 | 4352 | 0.141% |
| 52 | 6336 | 506880 | 1550 | 3186800 | 3193344 | 6544 | 0.205% |
| 53 | 6528 | 522240 | 1598 | 3285488 | 3290112 | 4624 | 0.141% |
| 54 | 6912 | 552960 | 1692 | 3478752 | 3483648 | 4896 | 0.141% |
| 55 | 7296 | 583680 | 1786 | 3672016 | 3677184 | 5168 | 0.141% |
| 56 | 7680 | 614400 | 1880 | 3865280 | 3870720 | 5440 | 0.141% |
| 57 | 8064 | 645120 | 1974 | 4058544 | 4064256 | 5712 | 0.141% |
| 58 | 8448 | 675840 | 2068 | 4251808 | 4257792 | 5984 | 0.141% |
| 59 | 8832 | 706560 | 2162 | 4445072 | 4451328 | 6256 | 0.141% |
| 60 | 9024 | 721920 | 2210 | 4543760 | 4548096 | 4336 | 0.095% |

It should be noted that, in some specific applications, CRC check may be first performed on the first data, and then pad insertion is performed. To facilitate reuse of a CRC operation used in an existing 800ZR standard, CRC check may be CRC-32. Other aspects are similar to those in the case (1). Table 8(b) below provides a plurality of {L, M, r} parameter combinations in this embodiment, and provides corresponding $d_{in}$, $d_{scr}$, $OH_{CP}$, p, $d_{CRC}$, and $d_{PAD}$ under the parameter combinations.

EP 4 776 542 A1

Table 8(b)

| Sequence number | L | M | r | $d_{in}$ | $d_{scr}$ | $OH_{CP}$ | p | $d_{CRC}$ | $d_{PAD}$ |
|---|---|---|---|---|---|---|---|---|---|
| 1 | 384 | 30720 | 94 | 193264 | 193536 | 0.141% | 5 | 160 | 112 |
| 2 | 768 | 61440 | 188 | 386528 | 387072 | 0.141% | 10 | 320 | 224 |
| 3 | 1152 | 92160 | 282 | 579792 | 580608 | 0.141% | 15 | 480 | 336 |
| 4 | 1344 | 107520 | 328 | 674368 | 677376 | 0.446% | 17 | 544 | 2464 |
| 5 | 1536 | 122880 | 376 | 773056 | 774144 | 0.141% | 19 | 608 | 480 |
| 6 | 1728 | 138240 | 422 | 867632 | 870912 | 0.378% | 22 | 704 | 2576 |
| 7 | 1920 | 153600 | 470 | 966320 | 967680 | 0.141% | 24 | 768 | 592 |
| 8 | 2112 | 168960 | 516 | 1060896 | 1064448 | 0.335% | 26 | 832 | 2720 |
| 9 | 2304 | 184320 | 564 | 1159584 | 1161216 | 0.141% | 29 | 928 | 704 |
| 10 | 2496 | 199680 | 610 | 1254160 | 1257984 | 0.305% | 31 | 992 | 2832 |
| 11 | 2688 | 215040 | 658 | 1352848 | 1354752 | 0.141% | 33 | 1056 | 848 |
| 12 | 2880 | 230400 | 704 | 1447424 | 1451520 | 0.283% | 36 | 1152 | 2944 |
| 13 | 3072 | 245760 | 752 | 1546112 | 1548288 | 0.141% | 38 | 1216 | 960 |
| 14 | 3456 | 276480 | 846 | 1739376 | 1741824 | 0.141% | 43 | 1376 | 1072 |
| 15 | 3840 | 307200 | 940 | 1932640 | 1935360 | 0.141% | 47 | 1504 | 1216 |
| 16 | 4224 | 337920 | 1034 | 2125904 | 2128896 | 0.141% | 52 | 1664 | 1328 |
| 17 | 4608 | 368640 | 1128 | 2319168 | 2322432 | 0.141% | 57 | 1824 | 1440 |
| 18 | 4992 | 399360 | 1222 | 2512432 | 2515968 | 0.141% | 62 | 1984 | 1552 |
| 19 | 5376 | 430080 | 1316 | 2705696 | 2709504 | 0.141% | 66 | 2112 | 1696 |
| 20 | 5760 | 460800 | 1410 | 2898960 | 2903040 | 0.141% | 71 | 2272 | 1808 |
| 21 | 6720 | 537600 | 1646 | 3384176 | 3386880 | 0.080% | 83 | 2656 | 48 |
| 22 | 7104 | 568320 | 1740 | 3577440 | 3580416 | 0.083% | 87 | 2784 | 192 |
| 23 | 7488 | 599040 | 1834 | 3770704 | 3773952 | 0.086% | 92 | 2944 | 304 |
| 24 | 7872 | 629760 | 1928 | 3963968 | 3967488 | 0.089% | 97 | 3104 | 416 |
| 25 | 8256 | 660480 | 2022 | 4157232 | 4161024 | 0.091% | 102 | 3264 | 528 |
| 26 | 8640 | 691200 | 2116 | 4350496 | 4354560 | 0.093% | 106 | 3392 | 672 |
| 27 | 3264 | 261120 | 798 | 1640688 | 1645056 | 0.266% | 40 | 1280 | 3088 |
| 28 | 3648 | 291840 | 892 | 1833952 | 1838592 | 0.253% | 45 | 1440 | 3200 |
| 29 | 4032 | 322560 | 986 | 2027216 | 2032128 | 0.242% | 50 | 1600 | 3312 |
| 30 | 4416 | 353280 | 1080 | 2220480 | 2225664 | 0.233% | 54 | 1728 | 3456 |
| 31 | 4800 | 384000 | 1174 | 2413744 | 2419200 | 0.226% | 59 | 1888 | 3568 |
| 32 | 5184 | 414720 | 1268 | 2607008 | 2612736 | 0.220% | 64 | 2048 | 3680 |
| 33 | 5568 | 445440 | 1362 | 2800272 | 2806272 | 0.214% | 69 | 2208 | 3792 |
| 34 | 5952 | 476160 | 1456 | 2993536 | 2999808 | 0.210% | 73 | 2336 | 3936 |
| 35 | 6144 | 491520 | 1504 | 3092224 | 3096576 | 0.141% | 76 | 2432 | 1920 |
| 36 | 6336 | 506880 | 1550 | 3186800 | 3193344 | 0.205% | 78 | 2496 | 4048 |
| 37 | 6528 | 522240 | 1598 | 3285488 | 3290112 | 0.141% | 80 | 2560 | 2064 |
| 38 | 6912 | 552960 | 1692 | 3478752 | 3483648 | 0.141% | 85 | 2720 | 2176 |
| 39 | 7296 | 583680 | 1786 | 3672016 | 3677184 | 0.141% | 90 | 2880 | 2288 |

33

(continued)

| Sequence number | L | M | r | $d_{in}$ | $d_{scr}$ | $OH_{CP}$ | p | $d_{CRC}$ | $d_{PAD}$ |
|---|---|---|---|---|---|---|---|---|---|
| 40 | 7680 | 614400 | 1880 | 3865280 | 3870720 | 0.141% | 94 | 3008 | 2432 |
| 41 | 8064 | 645120 | 1974 | 4058544 | 4064256 | 0.141% | 99 | 3168 | 2544 |
| 42 | 8448 | 675840 | 2068 | 4251808 | 4257792 | 0.141% | 104 | 3328 | 2656 |
| 43 | 8832 | 706560 | 2162 | 4445072 | 4451328 | 0.141% | 109 | 3488 | 2768 |
| 44 | 9024 | 721920 | 2210 | 4543760 | 4548096 | 0.095% | 111 | 3552 | 784 |

The following describes the solutions of this application by using two specific embodiments.

Embodiment 1:

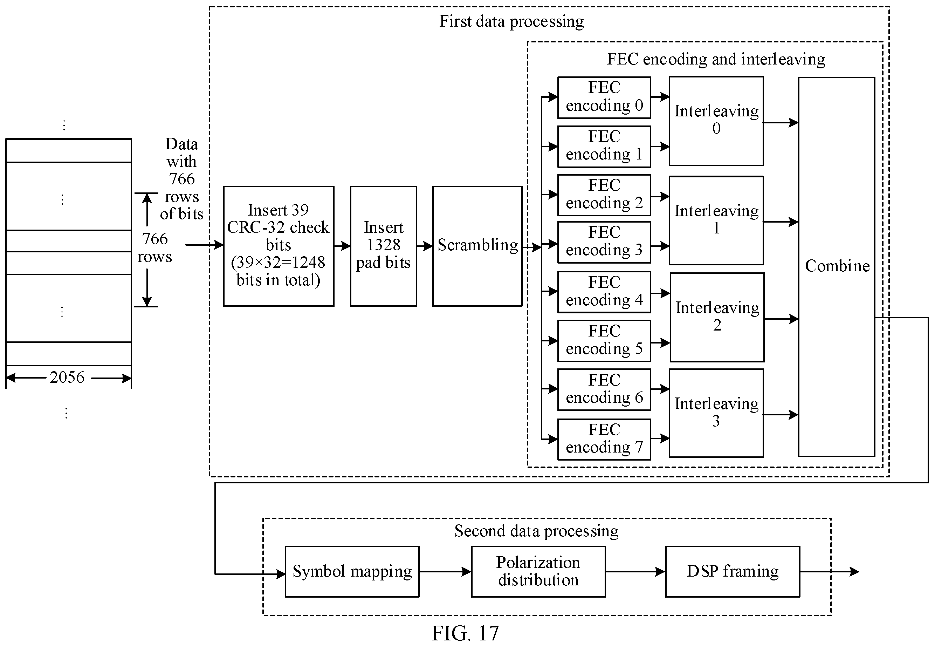

This embodiment provides a data processing method for optical communication. In this case, an FEC encoding overhead is about 21.5%, and DP-16QAM modulation is used. A procedure is shown in FIG. 17, first data processing is performed on first data with r=766 rows and q=2056 columns of bits (that is, $d_{in}$ = r × q = 766 × 2056 = 1574896 bits in total) in a received data sequence to obtain a pre-framing bit set, and then second data processing is performed on the pre-framing bit set to obtain a super-frame including a plurality of dual-polarization symbols. FIG. 17 shows processing steps separately included in the first data processing and the second data processing.

In the first data processing, CRC-32 check is first performed on the first data, CRC-32 check is repeatedly performed for p=39 times, and $d_{CRC}$ = 39 × 32 = 1248 CRC parity bits are added in total. Then, $d_{PAD}$ = 1328 pad bits are inserted, that is, $d_{CP}$ = $d_{CRC}$ + $d_{PAD}$ = 2576 bits are inserted in total. In this case, after CRC and pad bit insertion are performed, there are a total of $d_{in}$ + $d_{CP}$ = 1577472 bits in a first bit set. Further, the first bit set is scrambled, which facilitates receiving at a receiver. After scrambling, FEC encoding and interleaving are performed on the first bit set to obtain the pre-framing bit set. Distribution is first performed on the first bit set to obtain eight bit subsets, FEC encoding (k=79, and n=96) is performed on each of the bit subsets to obtain eight encoded bit sets, and then interleaving is performed on every two bit subsets in the eight bit subsets. An interleaving granularity of each of four interleavings is L × n = 2496 × 96 = 239616 bits, and the granularity indicates a total quantity of bits in an interleaving buffer in group interleaving used in each interleaving, that is, a product of a quantity of rows and a quantity of columns. As shown in FIG. 12, each interleaving includes intra-square block interleaving and inter-square block interleaving. A specific interleaving manner is described in the foregoing embodiments. Details are not described in this application again. Then, four lanes of interleaved data output through the four interleavings are combined to obtain one lane of data, that is, the pre-framing bit set, and a size of the pre-framing bit set is 1577472×96/79=1916928 bits. In other words, after first data processing is performed on the obtained first data with r=766 rows and q=2056 columns, the first data becomes the pre-framing bit set whose size is 1916928 bits, and then second data processing is performed on the pre-framing bit set.

In the second data processing, the manner shown in FIG. 17 is used as an example for processing, and symbol mapping and polarization distribution are performed on the pre-framing bit set to obtain the dual-polarization symbols. In this embodiment, in symbol mapping and polarization distribution, eight bits are mapped to one dual-polarization DP-16QAM symbol. Further, digital signal processing framing is performed on the dual-polarization symbols, and DSP framing processing is performed on every M=239616 dual-polarization symbols (pre-framing symbols), to obtain one super-frame.

The foregoing data processing method has an advantage of simple hardware implementation. n is equal to 96, and is an integer multiple of 16; and L is equal to 2496, and is an integer multiple of 192, which facilitates hardware implementation. An interleaving buffer for inter-square block interleaving in this embodiment may also include 96 bit columns, to match a length (n=96 bits) of encoded bits in FEC encoding, which also facilitates hardware implementation, reduces data format conversion during specific implementation, and can reduce complexity. In addition, the quantity L=2496 of bit rows in the interleaving buffer is an integer multiple of 16, a quantity $L_B$ = 156 of square block rows in the interleaving buffer is an integer multiple of 4, and L is further an integer multiple of 3. This facilitates compatibility with DP-QPSK, DP-8QAM, DP-16QAM, and even possible DP-64QAM in the future. A solution with a high FEC encoding overhead OH that may be proposed in this embodiment can have stronger FEC decoding performance, to support future applications using high-baud transmission. In addition, $OH_{CP}$ in this embodiment may be as low as 0.164%.

Embodiment 2:

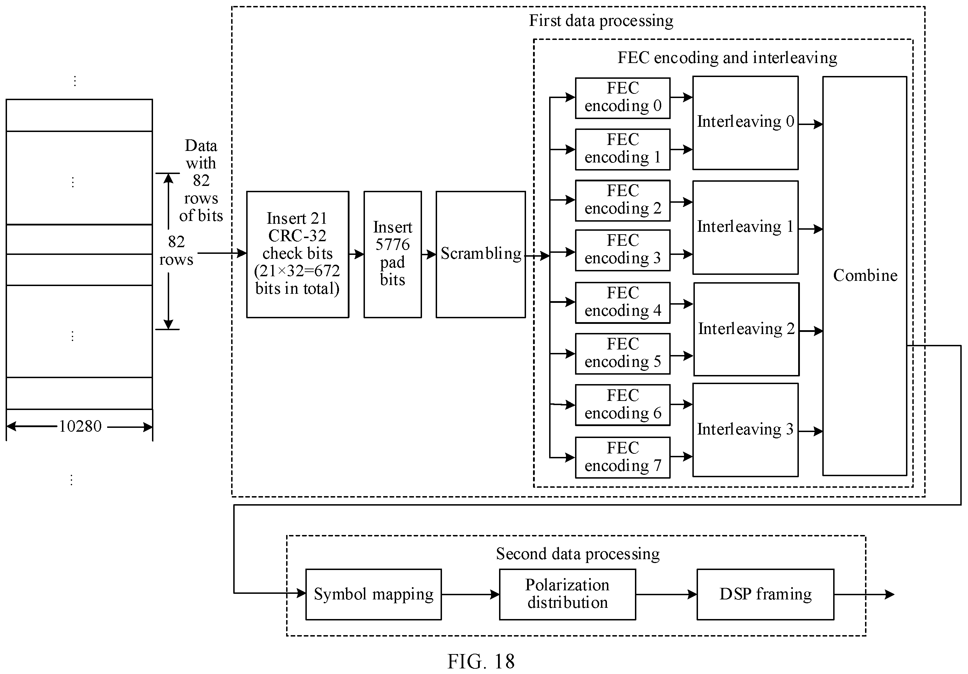

This embodiment provides a data processing method for optical communication. In this case, an FEC encoding overhead is about 21.5%, and DP-16QAM modulation is used. As shown in FIG. 18, first data processing is performed on first data with r=82 rows and q=10280 columns of bits (that is, $d_{in}$ = r × q = 82 × 10280 = 842960 bits in total) in a received data sequence to obtain a pre-framing bit set, and then second data processing is performed on the pre-framing bit set to obtain a super-frame including a plurality of dual-polarization symbols. FIG. 18 shows processing steps separately included in the first data processing and the second data processing.

In the first data processing, CRC-32 is first performed on the first data, CRC-32 check is repeatedly performed for p=21 times, and $d_{CRC}$ = 21 × 32 = 672 CRC parity bits are added in total. Then $d_{PAD}$ = 5776 pad bits are inserted, that is, $d_{CP}$ = $d_{CRC}$ + $d_{PAD}$ = 6448 bits are inserted in total. In this case, after CRC and pad bit insertion are performed, there are a total of $d_{in}$ + $d_{CP}$ = 849408 bits in a first bit set. Further, the first bit set is scrambled, which facilitates receiving at a receiver. After scrambling, FEC encoding and interleaving are performed on the first bit set to obtain the pre-framing bit set. Distribution is first performed on the first bit set to obtain eight bit subsets, FEC encoding (k=79, and n=96) is performed on each of the bit subsets to obtain eight encoded bit sets, and then interleaving is performed on every two bit subsets in the eight bit subsets. An interleaving granularity of each of four interleavings is L × n = 1344 × 96 = 129024 bits. As shown in FIG. 12, each interleaving includes intra-square block interleaving and inter-square block interleaving. A specific interleaving manner is described in the foregoing embodiment. Details are not described in this application again. Then, four lanes of interleaved data output through the four interleavings are combined to obtain one lane of data, that is, the pre-framing bit set, and a size of the pre-framing bit set is 849408×96/79=1032192 bits. In other words, after first data processing is performed on the obtained first data with r=82 rows and q=10280 columns of bits, the first data becomes the pre-framing bit set whose size is 1032192 bits, and then second data processing is performed on the pre-framing bit set.

In the second data processing, the manner shown in FIG. 18 is used as an example for processing, and symbol mapping and polarization distribution are performed on the pre-framing bit set to obtain the dual-polarization symbols. In this embodiment, in symbol mapping and polarization distribution, eight bits are mapped to one dual-polarization DP-16QAM symbol. Further, digital signal processing framing is performed on the dual-polarization symbols, and DSP framing processing is performed on every M=129024 dual-polarization symbols (pre-framing symbols), to obtain one super-frame.

The foregoing data processing method also has an advantage of simple hardware implementation, where n is equal to 96, and is an integer multiple of 16; and L is equal to 1344, and is also an integer multiple of 192, which facilitates hardware implementation. In this embodiment, an interleaving buffer for inter-square block interleaving may also include 96 bit columns, to match a length (n=96 bits) of encoded bits output through FEC encoding, which facilitates hardware implementation, reduces data format conversion during specific implementation, and can reduce complexity. In addition, the quantity L=1344 of bit rows in the interleaving buffer is an integer multiple of 16, a quantity $L_B$ = interleaving buffer is an integer multiple of 4, and L is further an integer multiple of 3. This facilitates compatibility with DP-QPSK, DP-8QAM, DP-16QAM, and even possible future DP-64QAM. A high-OH solution that may be proposed in this embodiment can have stronger FEC decoding performance, to support future applications using high-baud transmission. In addition, $OH_{CP}$ in this embodiment may be as low as 0.765%.

This application provides a receiving method, to decode the super-frame provided in the foregoing embodiments of this application to recover original data. A decoding process includes but is not limited to performing dispersion compensation, synchronization, phase recovery, demodulation, de-interleaving, decoding, and other processing on super-frame data.

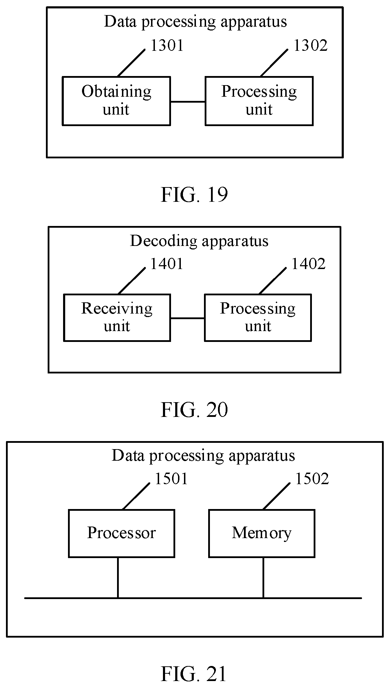

FIG. 19 is a diagram of a structure of a data processing apparatus used in a transmitter according to an embodiment of this application. As shown in FIG. 19, the data processing apparatus includes an obtaining unit 1301 and a processing unit 1302. The obtaining unit 1301 is configured to perform an operation of the foregoing step 201, and the processing unit 1302 is configured to perform the foregoing steps 202 and 203 and related specific operations such as encoding and interleaving. It should be understood that the data processing apparatus provided in this embodiment of this application may alternatively be implemented in another manner. For example, division into the units in the foregoing apparatus is merely logical function division and may be other division in actual implementation. For example, a plurality of units or components may be combined or integrated into another system. In addition, functional units in embodiments of this application may be integrated into one processing unit, may be independent physical units, or two or more functional units may be integrated into one processing unit. The foregoing integrated unit may be implemented in a form of hardware, or may be implemented in a form of a software functional unit.

FIG. 20 is a diagram of a structure of a decoding apparatus used in a receiver according to an embodiment of this application. As shown in FIG. 20, the decoding apparatus includes a receiving unit 1401 and a processing unit 1402. The receiving unit 1401 is configured to receive a super-frame transmitted through a channel. The processing unit 1402 is configured to decode the super-frame. A decoding step includes but is not limited to performing dispersion compensation, synchronization, phase recovery, demodulation, de-interleaving, decoding, and other processing on super-frame data. It should be understood that the decoding apparatus provided in this embodiment of this application may alternatively be implemented in another manner. For example, division into the units in the foregoing apparatus is merely logical function division and may be other division in actual implementation. For example, a plurality of units or components may be combined or integrated into another system. In addition, functional units in embodiments of this application may be integrated into one processing unit, may be independent physical units, or two or more functional units may be integrated into one processing unit. The foregoing integrated unit may be implemented in a form of hardware, or may be implemented in a form of a software functional unit.

FIG. 21 is a diagram of another structure of a data processing apparatus according to an embodiment of this application. A data processing apparatus may be used in a transmitter or a receiver. As shown in FIG. 21, the data processing apparatus includes a processor 1501 and a memory 1502. The processor 1501 and the memory 1502 are connected to each other through a line. Specifically, the processor 1501 is configured to perform a data processing operation, for example, the data processing operation provided in the foregoing embodiments of this application. In a possible implementation, the processor 1501 may include the foregoing obtaining unit 1301 and processing unit 1302 shown in FIG. 19. A memory 1503 is configured to store program instructions and data, and the processor 1501 performs the data processing operation according to the instructions and the data. This is also similar at the receiver, and details are not described again in this application.

An embodiment of this application further provides a chip. The chip integrates one or more interfaces that are configured to implement a function of the foregoing processor 401. When a memory is integrated into the chip, the chip may complete the method steps in any one or more of the foregoing embodiments. When no memory is integrated into the chip, the chip may be connected to an external memory through an interface. The chip implements, based on program code stored in the external memory, actions performed by the transmitter device or the receiver device in the foregoing embodiments.

Finally, it should be noted that the foregoing descriptions are merely example implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. A data processing method, comprising:

   obtaining first data;
   obtaining a first bit set based on the first data and an added bit; and
   performing forward error correction FEC encoding and interleaving on the first bit set to obtain a pre-framing bit set, wherein FEC encoding is performed on every a bits in the first bit set to obtain b encoded bits; both a and b are positive integers; b/a is any one of 96/79, 80/63, and 112/95; and the pre-framing bit set is used for generating a super-frame.

2. The method according to claim 1, wherein that FEC encoding is performed on every a bits to obtain the b encoded bits comprises:
   performing FEC encoding on every k bits in the a bits to obtain n FEC bits, wherein k is a positive integer, n is a positive integer greater than k, $a=c\times k$, $b=c\times n$, and c is a positive integer.

3. The method according to claim 2, wherein c is an integer multiple of 16.

4. The method according to claim 2 or 3, wherein the first data comprises r rows and q columns of bits, r is a positive integer, and q is an integer multiple of 257.

5. The method according to claim 4, wherein q is any one of numerical values: 2056, 4112, 8224, 10280, or the like.

6. The method according to any one of claims 2 to 5, wherein the performing forward error correction FEC encoding and interleaving on the first bit set to obtain the pre-framing bit set comprises:

   performing distribution on the first bit set to obtain 2Q bit subsets, and performing FEC encoding on each of the bit subsets to obtain 2Q encoded bit sets, wherein Q is a positive integer greater than 0; and
   performing interleaving on the 2Q encoded bit sets to obtain the pre-framing bit set.

7. The method according to claim 6, wherein the encoded bit set is represented as a matrix in which each row comprises six square blocks, each square block comprises 16 rows $\times$ 16 columns of bits, a bit sequence in an $i^{th}$ row of a square block in a $W^{th}$ row comprises a first parity bit, and W is a positive integer; and

when W is an even number, the first parity bit is formed by using at least bits in an $i^{th}$ column of a $0^{th}$ square block in a $(W-\Delta-11)^{th}$ row, bits in an $i^{th}$ column of a $1^{st}$ square block in a $(W-\Delta-9)^{th}$ row, bits in an $i^{th}$ column of a $2^{nd}$ square block in a $(W-\Delta-7)^{th}$ row, bits in an $i^{th}$ column of a $3^{rd}$ square block in a $(W-\Delta-5)^{th}$ row, bits in an $i^{th}$ column of a $4^{th}$ square block in a $(W-\Delta-3)^{th}$ row, and bits in an $i^{th}$ column of a $5^{th}$ square block in a $(W-\Delta-1)^{th}$ row, wherein i is a positive integer that is not less than 0 and that is less than 16, and $\Delta$ is a positive integer; or

when W is an odd number, the first parity bit is formed by using at least bits in an $i^{th}$ column of a $0^{th}$ square block in a $(W-\Delta-13)^{th}$ row, bits in an $i^{th}$ column of a $1^{st}$ square block in a $(W-\Delta-11)^{th}$ row, bits in an $i^{th}$ column of a $2^{nd}$ square block in a $(W-\Delta-9)^{th}$ row, bits in an $i^{th}$ column of a $3^{rd}$ square block in a $(W-\Delta-7)^{th}$ row, bits in an $i^{th}$ column of a $4^{th}$ square block in a $(W-\Delta-5)^{th}$ row, and bits in an $i^{th}$ column of a $5^{th}$ square block in a $(W-\Delta-3)^{th}$ row, wherein i is a positive integer that is not less than 0 and that is less than 16, and $\Delta$ is a positive integer.

8. The method according to claim 6, wherein the encoded bit set is represented as a matrix in which each row comprises six square blocks, each square block comprises 16 rows × 16 columns of bits, a bit sequence in an $i^{th}$ row of a square block in a $W^{th}$ row comprises a first parity bit, and W is a positive integer; and

when W%3 is 0 or 1, the first parity bit is formed by using at least bits in an $i^{th}$ column of a $0^{th}$ square block in a $(W-\Delta-17)^{th}$ rows, bits in an $i^{th}$ column of a $1^{st}$ square block in a $(W-\Delta-14)^{th}$ rows, bits in an $i^{th}$ column of a $2^{nd}$ square block in a $(W-\Delta-11)^{th}$ row, bits in an $i^{th}$ column of a $3^{rd}$ square block in a $(W-\Delta-8)^{th}$ row, bits in an $i^{th}$ column of a $4^{th}$ square block in a $(W-\Delta-5)^{th}$ row, and bits in an $i^{th}$ column of a $5^{th}$ square block in a $(W-\Delta-2)^{th}$ row, wherein i is a positive integer that is not less than 0 and that is less than 16, and $\Delta$ is a positive integer; or

when W%3 is 2, the first parity bit is formed by using at least bits in an $i^{th}$ column of a $0^{th}$ square block in a $(W-\Delta-20)^{th}$ row, bits in an $i^{th}$ column of a $1^{st}$ square block in a $(W-\Delta-17)^{th}$ row, bits in an $i^{th}$ column of a $2^{nd}$ square block in a $(W-\Delta-14)^{th}$ row, bits in an $i^{th}$ column of a $3^{rd}$ square block in a $(W-\Delta-11)^{th}$ row, bits in an $i^{th}$ column of a $4^{th}$ square block in a $(W-\Delta-8)^{th}$ row, and bits in an $i^{th}$ column of a $5^{th}$ square block in a $(W-\Delta-5)^{th}$ row, wherein i is a positive integer that is not less than 0 and that is less than 16, and $\Delta$ is a positive integer.

9. The method according to claim 6, wherein the encoded bit set is represented as a matrix in which each row comprises six square blocks, each square block comprises 16 rows × 16 columns of bits, a bit sequence in an $i^{th}$ row of a square block in a $W^{th}$ row comprises a first parity bit, and W is a positive integer; and

when W%3 is 0, the first parity bit is formed by using at least bits in an $i^{th}$ column of a $0^{th}$ square block in a $(W-\Delta-16)^{th}$ row, bits in an $i^{th}$ column of a $1^{st}$ square block in a $(W-\Delta-13)^{th}$ row, bits in an $i^{th}$ column of a $2^{nd}$ square block in a $(W-\Delta-10)^{th}$ row, bits in an $i^{th}$ column of a $3^{rd}$ square block in a $(W-\Delta-7)^{th}$ row, bits in an $i^{th}$ column of a $4^{th}$ square block in a $(W-\Delta-4)^{th}$ row, and bits in an $i^{th}$ column of a $5^{th}$ square block in a $(W-\Delta-1)^{th}$ row, wherein i is a positive integer that is not less than 0 and that is less than 16, and $\Delta$ is a positive integer; or

when W%3 is 1 or 2, the first parity bit is formed by using at least bits in an $i^{th}$ column of a $0^{th}$ square block in a $(W-\Delta-19)^{th}$ row, bits in an $i^{th}$ column of a $1^{st}$ square block in a $(W-\Delta-16)^{th}$ row, bits in an $i^{th}$ column of a $2^{nd}$ square block in a $(W-\Delta-13)^{th}$ row, bits in an $i^{th}$ column of a $3^{rd}$ square block in a $(W-\Delta-10)^{th}$ row, bits in an $i^{th}$ column of a $4^{th}$ square block in a $(W-\Delta-7)^{th}$ row, and bits in an $i^{th}$ column of a $5^{th}$ square block in a $(W-\Delta-4)^{th}$ row, wherein i is a positive integer that is not less than 0 and that is less than 16, and $\Delta$ is a positive integer.

10. The method according to any one of claims 2 to 9, wherein the added bit comprises a pad bit.

11. The method according to claim 10, wherein the added bit further comprises a cyclic redundancy check CRC bit, and the CRC is any one of CRC-16, CRC-24, CRC-32, and CRC-48.

12. The method according to any one of claims 2 to 11, wherein q=10280, n=96, and k=79, wherein when the pre-framing bit set is used for generating the super-frame through dual-polarization quadrature phase shift keying DP-QPSK modulation, a relationship between L in an interleaving granularity L×n, a quantity M of pre-framing symbols, r, a quantity $d_{in}$ of bits comprised in the first data, a quantity $d_{scr}$ of bits comprised in the first bit set, and a quantity $d_{CP}$ of added bits is shown in any entry of the following table.

| Sequence number | L | M | r | $d_{in}$ | $d_{scr}$ | $d_{CP}$ |
|---|---|---|---|---|---|---|
| 1 | 1536 | 147456 | 47 | 483160 | 485376 | 2216 |
| 2 | 1728 | 165888 | 53 | 544840 | 546048 | 1208 |
| 3 | 1920 | 184320 | 59 | 606520 | 606720 | 200 |

(continued)

| Sequence number | L | M | r | $d_{in}$ | $d_{scr}$ | $d_{CP}$ |
|---|---|---|---|---|---|---|
| 4 | 3072 | 294912 | 94 | 966320 | 970752 | 4432 |
| 5 | 3264 | 313344 | 100 | 1028000 | 1031424 | 3424 |
| 6 | 3456 | 331776 | 106 | 1089680 | 1092096 | 2416 |
| 7 | 3648 | 350208 | 112 | 1151360 | 1152768 | 1408 |
| 8 | 3840 | 368640 | 118 | 1213040 | 1213440 | 400 |
| 9 | 4992 | 479232 | 153 | 1572840 | 1577472 | 4632 |
| 10 | 5184 | 497664 | 159 | 1634520 | 1638144 | 3624 |
| 11 | 5376 | 516096 | 165 | 1696200 | 1698816 | 2616 |
| 12 | 5568 | 534528 | 171 | 1757880 | 1759488 | 1608 |
| 13 | 5760 | 552960 | 177 | 1819560 | 1820160 | 600 |
| 14 | 6912 | 663552 | 212 | 2179360 | 2184192 | 4832 |
| 15 | 7104 | 681984 | 218 | 2241040 | 2244864 | 3824 |
| 16 | 7296 | 700416 | 224 | 2302720 | 2305536 | 2816 |
| 17 | 7488 | 718848 | 230 | 2364400 | 2366208 | 1808 |
| 18 | 7680 | 737280 | 236 | 2426080 | 2426880 | 800 |
| 19 | 8832 | 847872 | 271 | 2785880 | 2790912 | 5032 |
| 20 | 9024 | 866304 | 277 | 2847560 | 2851584 | 4024 |
| 21 | 9216 | 884736 | 283 | 2909240 | 2912256 | 3016 |
| 22 | 9408 | 903168 | 289 | 2970920 | 2972928 | 2008 |
| 23 | 9600 | 921600 | 295 | 3032600 | 3033600 | 1000 |
| 24 | 10944 | 1050624 | 336 | 3454080 | 3458304 | 4224 |
| 25 | 11136 | 1069056 | 342 | 3515760 | 3518976 | 3216 |
| 26 | 11328 | 1087488 | 348 | 3577440 | 3579648 | 2208 |
| 27 | 11520 | 1105920 | 354 | 3639120 | 3640320 | 1200 |
| 28 | 11712 | 1124352 | 360 | 3700800 | 3700992 | 192 |
| 29 | 12864 | 1234944 | 395 | 4060600 | 4065024 | 4424 |
| 30 | 13056 | 1253376 | 401 | 4122280 | 4125696 | 3416 |
| 31 | 13248 | 1271808 | 407 | 4183960 | 4186368 | 2408 |
| 32 | 13440 | 1290240 | 413 | 4245640 | 4247040 | 1400 |
| 33 | 13632 | 1308672 | 419 | 4307320 | 4307712 | 392 |
| 34 | 14784 | 1419264 | 454 | 4667120 | 4671744 | 4624 |
| 35 | 14976 | 1437696 | 460 | 4728800 | 4732416 | 3616 |
| 36 | 15168 | 1456128 | 466 | 4790480 | 4793088 | 2608 |
| 37 | 15360 | 1474560 | 472 | 4852160 | 4853760 | 1600 |
| 38 | 15552 | 1492992 | 478 | 4913840 | 4914432 | 592 |
| 39 | 16704 | 1603584 | 513 | 5273640 | 5278464 | 4824 |
| 40 | 16896 | 1622016 | 519 | 5335320 | 5339136 | 3816 |
| 41 | 17088 | 1640448 | 525 | 5397000 | 5399808 | 2808 |
| 42 | 17280 | 1658880 | 531 | 5458680 | 5460480 | 1800 |

(continued)

| Sequence number | L | M | r | $d_{in}$ | $d_{scr}$ | $d_{CP}$ |
|---|---|---|---|---|---|---|
| 43 | 17472 | 1677312 | 537 | 5520360 | 5521152 | 792 |
| 44 | 18624 | 1787904 | 572 | 5880160 | 5885184 | 5024 |

**13.** The method according to any one of claims 1 to 12, wherein before performing forward error correction FEC encoding and interleaving on the first bit set, the method further comprises:
scrambling the first bit set.

**14.** A chip, comprising a processor and a communication interface, wherein the processor is connected to the communication interface through a line, and is configured to perform the method according to any one of claims 1 to 13.

**15.** A data processing apparatus, wherein the data processing apparatus comprises a processor and a memory, the memory is configured to store instructions, and the processor is configured to execute the instructions, to cause the data processing apparatus to perform the method according to any one of claims 1 to 13.

**16.** A computer storage medium, wherein the storage medium stores a software program; and when the software program is read and executed by one or more processors, the method according to any one of claims 1 to 13 is implemented.

Source → Data processing at a transmitter → Signal processing at the transmitter → Channel

Channel → Signal processing at a receiver → Data processing at the receiver → Sink

FIG. 1

Obtain first data —— 201

Obtain a first bit set based on the first data and an added bit —— 202

Perform forward error correction FEC encoding and interleaving on the first bit set to obtain a pre-framing bit set, where FEC encoding is performed on every a bits in the first bit set to obtain b encoded bits; both a and b are positive integers; b/a is any one of 96/79, 80/63, and 112/95; and the pre-framing bit set is used for generating a super-frame —— 203

FIG. 2

r rows

q

FIG. 3

FIG. 4

FIG. 5

FIG. 6

Square block with 16 rows and 16 columns of 256 bits in total

Δ=4 rows of square blocks

Two rows of square blocks are used as a group

FIG. 7

Square block with 16 rows and 16 columns of 256 bits in total

Δ=6 rows of square blocks

Three rows of square blocks are used as a group

FIG. 8

Square block with 16 rows and 16 columns of 256 bits in total

Δ=6 rows of square blocks

Three rows of square blocks are used as a group

FIG. 9

FIG. 10

Square block with 16 rows and 16 columns of 256 bits in total

Δ=4 rows of square blocks

Two rows of square blocks are used as a group

FIG. 11

Interleaving

Intra-square block interleaving

Intra-square block interleaving

Inter-square block interleaving

FIG. 12

EP 4 776 542 A1

| (0, 0) | (1, 1) | (2, 2) | (3, 3) | (4, 4) | (5, 5) | (6, 6) | (7, 7) | (8, 8) | (9, 9) | (10, 10) | (11, 11) | (12, 12) | (13, 13) | (14, 14) | (15, 15) |
|---|---|---|---|---|---|---|---|---|---|---|---|---|---|---|---|
| (14, 15) | (15, 0) | (0, 1) | (1, 2) | (2, 3) | (3, 4) | (4, 5) | (5, 6) | (6, 7) | (7, 8) | (8, 9) | (9, 10) | (10, 11) | (11, 12) | (12, 13) | (13, 14) |
| (12, 14) | (13, 15) | (14, 0) | (15, 1) | (0, 2) | (1, 3) | (2, 4) | (3, 5) | (4, 6) | (5, 7) | (6, 8) | (7, 9) | (8, 10) | (9, 11) | (10, 12) | (11, 13) |
| (10, 13) | (11, 14) | (12, 15) | (13, 0) | (14, 1) | (15, 2) | (0, 3) | (1, 4) | (2, 5) | (3, 6) | (4, 7) | (5, 8) | (6, 9) | (7, 10) | (8, 11) | (9, 12) |
| (8, 12) | (9, 13) | (10, 14) | (11, 15) | (12, 0) | (13, 1) | (14, 2) | (15, 3) | (0, 4) | (1, 5) | (2, 6) | (3, 7) | (4, 8) | (5, 9) | (6, 10) | (7, 11) |
| (6, 11) | (7, 12) | (8, 13) | (9, 14) | (10, 15) | (11, 0) | (12, 1) | (13, 2) | (14, 3) | (15, 4) | (0, 5) | (1, 6) | (2, 7) | (3, 8) | (4, 9) | (5, 10) |
| (4, 10) | (5, 11) | (6, 12) | (7, 13) | (8, 14) | (9, 15) | (10, 0) | (11, 1) | (12, 2) | (13, 3) | (14, 4) | (15, 5) | (0, 6) | (1, 7) | (2, 8) | (3, 9) |
| (2, 9) | (3, 10) | (4, 11) | (5, 12) | (6, 13) | (7, 14) | (8, 15) | (9, 0) | (10, 1) | (11, 2) | (12, 3) | (13, 4) | (14, 5) | (15, 6) | (0, 7) | (1, 8) |
| (15, 7) | (0, 8) | (1, 9) | (2, 10) | (3, 11) | (4, 12) | (5, 13) | (6, 14) | (7, 15) | (8, 0) | (9, 1) | (10, 2) | (11, 3) | (12, 4) | (13, 5) | (14, 6) |
| (13, 6) | (14, 7) | (15, 8) | (0, 9) | (1, 10) | (2, 11) | (3, 12) | (4, 13) | (5, 14) | (6, 15) | (7, 0) | (8, 1) | (9, 2) | (10, 3) | (11, 4) | (12, 5) |
| (11, 5) | (12, 6) | (13, 7) | (14, 8) | (15, 9) | (0, 10) | (1, 11) | (2, 12) | (3, 13) | (4, 14) | (5, 15) | (6, 0) | (7, 1) | (8, 2) | (9, 3) | (10, 4) |
| (9, 4) | (10, 5) | (11, 6) | (12, 7) | (13, 8) | (14, 9) | (15, 10) | (0, 11) | (1, 12) | (2, 13) | (3, 14) | (4, 15) | (5, 0) | (6, 1) | (7, 2) | (8, 3) |
| (7, 3) | (8, 4) | (9, 5) | (10, 6) | (11, 7) | (12, 8) | (13, 9) | (14, 10) | (15, 11) | (0, 12) | (1, 13) | (2, 14) | (3, 15) | (4, 0) | (5, 1) | (6, 2) |
| (5, 2) | (6, 3) | (7, 4) | (8, 5) | (9, 6) | (10, 7) | (11, 8) | (12, 9) | (13, 10) | (14, 11) | (15, 12) | (0, 13) | (1, 14) | (2, 15) | (3, 0) | (4, 1) |
| (3, 1) | (4, 2) | (5, 3) | (6, 4) | (7, 5) | (8, 6) | (9, 7) | (10, 8) | (11, 9) | (12, 10) | (13, 11) | (14, 12) | (15, 13) | (0, 14) | (1, 15) | (2, 0) |
| (1, 0) | (2, 1) | (3, 2) | (4, 3) | (5, 4) | (6, 5) | (7, 6) | (8, 7) | (9, 8) | (10, 9) | (11, 10) | (12, 11) | (13, 12) | (14, 13) | (15, 14) | (0, 15) |

FIG. 13

Read by column, and
read $d_B$ bits from each set
in turn

Square block with 16
rows and 16 columns
of 256 bits in total

First part

0
1
2
3

$L_B/2-2$
$L_B/2-1$
$L_B/2$

$L_B/2+1$

Third part

$L_B-4$
$L_B-3$

$L_B-2$
$L_B-1$

Second part

Fourth part

$n_B$ columns of square blocks, with
a total of n bit columns

FIG. 14

Pre-framing
bit set

Symbol
mapping

Polarization
distribution

DSP framing

FIG. 15

Pre-framing
bit set

| DSP framing | → | Polarization distribution | → | Symbol mapping | → |

FIG. 16

FIG. 17

EP 4 776 542 A1

FIG. 18

First data processing

FEC encoding and interleaving

Combine

Interleaving 0 — FEC encoding 0, FEC encoding 1
Interleaving 1 — FEC encoding 2, FEC encoding 3
Interleaving 2 — FEC encoding 4, FEC encoding 5
Interleaving 3 — FEC encoding 6, FEC encoding 7

Scrambling

Insert 5776 pad bits

Insert 21 CRC-32 check bits (21×32=672 bits in total)

Data with 82 rows of bits

82 rows

10280

Second data processing

Symbol mapping → Polarization distribution → DSP framing

Data processing apparatus

1301

Obtaining unit

1302

Processing unit

FIG. 19

Decoding apparatus

1401

Receiving unit

1402

Processing unit

FIG. 20

Data processing apparatus

1501

Processor

1502

Memory

FIG. 21

## INTERNATIONAL SEARCH REPORT

| | International application No. |
|---|---|
| | **PCT/CN2024/114623** |

### A. CLASSIFICATION OF SUBJECT MATTER

H04L1/00(2006.01)i

According to International Patent Classification (IPC) or to both national classification and IPC

### B. FIELDS SEARCHED

Minimum documentation searched (classification system followed by classification symbols)

IPC:H04L

Documentation searched other than minimum documentation to the extent that such documents are included in the fields searched

Electronic data base consulted during the international search (name of data base and, where practicable, search terms used)

CNABS, CNTXT, VEN, USTXT, EPTXT, WOTXT, CNKI, IEEE, 3GPP: 前向纠错, 交织, 编码, 超帧, 校验, 矩阵, 方阵, Forward Error Correction, FEC, interleave, encode, superframe, check, matrix

### C. DOCUMENTS CONSIDERED TO BE RELEVANT

| Category* | Citation of document, with indication, where appropriate, of the relevant passages | Relevant to claim No. |
|---|---|---|
| X | US 6829741 B1 (CENTILLIUM COMMUNICATIONS INC.) 07 December 2004 (2004-12-07) description, columns 1-14, figures 1-10, and claims 1-21 | 1-6, 10-16 |
| X | CN 116566498 A (HUAWEI TECHNOLOGIES CO., LTD.) 08 August 2023 (2023-08-08) description, paragraphs [0005]-[0796], and figures 1-9 | 1-6, 10-16 |
| A | WO 2015089741 A1 (HUAWEI TECHNOLOGIES CO., LTD.) 25 June 2015 (2015-06-25) entire document | 1-16 |
| A | US 2014365845 A1 (BROADCOM CORP.) 11 December 2014 (2014-12-11) entire document | 1-16 |
| A | US 2023198670 A1 (INTEL CORP.) 22 June 2023 (2023-06-22) entire document | 1-16 |

☐ Further documents are listed in the continuation of Box C.  ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **12 November 2024** | **13 November 2024** |

| Name and mailing address of the ISA/CN | Authorized officer |
|---|---|
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2024/114623**

| Patent document cited in search report | | | Publication date (day/month/year) | Patent family member(s) | | | Publication date (day/month/year) |
|---|---|---|---|---|---|---|---|
| US | 6829741 | B1 | 07 December 2004 | None | | | |
| CN | 116566498 | A | 08 August 2023 | CN | 114978337 | A | 30 August 2022 |
| | | | | CN | 116388881 | A | 04 July 2023 |
| | | | | CN | 116683996 | A | 01 September 2023 |
| | | | | CN | 117118524 | A | 24 November 2023 |
| WO | 2015089741 | A1 | 25 June 2015 | CN | 110830171 | A | 21 February 2020 |
| US | 2014365845 | A1 | 11 December 2014 | US | 9432143 | B2 | 30 August 2016 |
| US | 2023198670 | A1 | 22 June 2023 | WO | 2021231240 | A1 | 18 November 2021 |

Form PCT/ISA/210 (patent family annex) (July 2022)

**REFERENCES CITED IN THE DESCRIPTION**

**Patent documents cited in the description**

- CN 202311294476